(19) **Europäisches Patentamt / European Patent Office / Office européen des brevets**

(11) **EP 4 692 836 A1**

(12) **EUROPEAN PATENT APPLICATION**
published in accordance with Art. 153(4) EPC

(43) Date of publication:
**11.02.2026 Bulletin 2026/07**

(21) Application number: **24780577.3**

(22) Date of filing: **27.03.2024**

(51) International Patent Classification (IPC):
*G01S 5/14* (2006.01)  *G01C 21/34* (2006.01)
*G04G 5/00* (2013.01)  *G06Q 10/105* (2023.01)
*G06Q 50/12* (2012.01)  *G06Q 50/26* (2024.01)
*G08B 27/00* (2006.01)  *H04M 11/00* (2006.01)
*H04M 11/04* (2006.01)  *H04W 4/02* (2018.01)
*H04W 64/00* (2009.01)

(52) Cooperative Patent Classification (CPC):
**G01C 21/34; G01S 5/14; G04G 5/00; G06Q 10/105;
G06Q 50/12; G06Q 50/26; G08B 27/00;
H04M 11/00; H04M 11/04; H04W 4/02; H04W 64/00**

(86) International application number:
**PCT/JP2024/012521**

(87) International publication number:
**WO 2024/204476 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056303
30.03.2023 JP 2023056305
30.03.2023 JP 2023056321
31.03.2023 JP 2023059042**

(71) Applicant: **The Chugoku Electric Power Co., Inc.
Hiroshima-shi, Hiroshima 730-8701 (JP)**

(72) Inventors:
• FUKUHARA Yoji
  Hiroshima-shi, Hiroshima 730-8701 (JP)
• KAMATA Ryosuke
  Hiroshima-shi, Hiroshima 730-8701 (JP)
• TANABE Ryota
  Hiroshima-shi, Hiroshima 730-8701 (JP)
• TAKANO Tomohiro
  Hiroshima-shi, Hiroshima 730-8701 (JP)
• TOYOTA Mitsuo
  Hiroshima-shi, Hiroshima 730-8701 (JP)
• TAKI Yoshihiko
  Tokyo 102-0094 (JP)

(74) Representative: **Hoffmann Eitle
Patent- und Rechtsanwälte PartmbB
Arabellastraße 30
81925 München (DE)**

(54) **TERMINAL MANAGEMENT SYSTEM**

(57)     An object of the present invention is to provide a novel system that specifies a position of a terminal carried or operated by a user.

A system comprising at least one computer apparatus is provided. The system comprises a position specifier that specifies a position of a terminal carried or operated by a user based on a distance between each of a plurality of wireless devices and the terminal. The terminal may be a mobile terminal carried by a first user. The system may further comprise an evacuation location specifier that specifies an evacuation location satisfying a predetermined condition based on the specified position of the mobile terminal.

*FIG. 1*

**Description**

Technical Field

The present invention relates to a system, a method, a program, and an apparatus.

Background Art

In the related art, techniques for specifying positions of terminals carried or operated by users have been used. The specified positions of the terminals can be used for various purposes.

For example, information regarding the positions of the terminals is important in disasters. In the related art, when disasters or the like occur, information regarding the events is transmitted through televisions, radios, or the like. In recent years, information regarding disasters that have occurred around people is transmitted through SNS or the like. However, it is not easy to present appropriate evacuation locations or evacuation routes for people and guide the people. When disasters occur, it is not easy to notify families of disaster victims or the like of locations where there are the disaster victims.

Patent Literature 1 discloses a system that presents an evacuation location and an evacuation route when a disaster occurs. In Patent Literature 1, an evacuation area manual or the like in which evacuation locations and evacuation routes are written can be obtained from a server apparatus.

For example, it is conceivable that the information regarding the positions of the terminals is used for management of workers. In recent years, various working ways have increased, including a working way called a so-called gig worker who undertakes a single job by utilizing the Internet. In the related art, time cards have been used in companies and stores for the purpose of managing working hours of workers. However, it has been difficult to manage working hours of workers in various working manners with time cards.

For example, as a system managing working hours without using time cards a system capable of checking and recording a working state of each worker such as overtime working hours from start and end times of a business PC at a work destination is disclosed (Patent Literature 2). However, since the system disclosed in Patent Literature 2 is based on the premise that a business PC is provided to a worker, a work state of the worker may not be recorded when the work content that does not use the business PC is included.

Further, for example, it is conceivable that information regarding a position of a terminal is used for preventing theft of a terminal installed in a space such as a restaurant. In a restaurant or the like, an order terminal is installed on a table, and when a customer inputs a desired dish to the order terminal, an order of the dish is accepted in the restaurant. The order terminal is expensive. If the order terminal is stolen, a great financial loss for the store occurs. Accordingly, there is a demand for a system that manages a position of an order terminal and generates a warning or the like when the order terminal is taken out of a store. However, even if the position of the order terminal is managed using the global positioning system (GPS), the accuracy is poor particularly indoors, and an alarm malfunction easily occurs.

Further, for example, it is conceivable that information regarding the position of the terminal is used as additional information when a message is posted. In recent years, various people have posted messages on social networking services (SNS) or the like. On the other hand, there may be a case where information regarding posters of the post message is not sufficient, or a case where reliability or authenticity of the content of the post message is not reliable.

Citation List

Patent Literature

Patent Literature 1: JP 2009-042828 A
Patent Literature 2: JP 2012-104043 A

Summary of Invention

Technical Problem

An object of the present invention is, for example, any of the following. A first object of the present invention is to provide a novel system that specifies a position of a terminal carried or operated by a user. A second object of the present invention is to provide a system that specifies an evacuation location based on a position of a first user. A third object of the present invention is to provide a system that specifies a position of a worker. A fourth object of the present invention is to provide a system capable of specifying a position of an order device used to order a product or a utilization device used to receive provision of a service. A fifth object of the present invention is to provide a system that enables posting of a message about a person of which a position is specified.

Solution to Problem

The present invention solves the above problem by any of the following:

[1] A system comprising at least one computer apparatus, the system comprising a position specifier that specifies a position of a terminal carried or operated by a user based on a distance between each of a plurality of wireless devices and the terminal;

[2] The system according to [1], wherein the terminal is a mobile terminal carried by a first user, and wherein the system comprising an evacuation location specifier that specifies an evacuation location satisfying a predetermined condition based on the specified position of the mobile terminal;

[3] The system according to [2], comprising an outputter that executes control such that the mobile terminal outputs information regarding the specified evacuation location and/or a route to the evacuation location;

[4] The system according to [2] or [3], comprising a second outputter that executes control such that different second users are associated with each first user, and information regarding a position of the mobile terminal carried by the first user is able to be output by a second user terminal operated by the second user;

[5] The system according to any one of [2] to [4], comprising a third outputter that executes control such that different second users are associated with each first user, and a second user terminal operated by the second user can output information regarding the specified evacuation location;

[6] The system according to any one of [2] to [5], wherein the position specifier and/or the evacuation location specifier are executed in response to detection of a predetermined event by a predetermined sensor;

[7] The system according to [1], wherein the terminal is a mobile terminal carried by a worker, wherein the system comprising a distance calculator that calculates a distance between each of the plurality of wireless devices and the mobile terminal based on a propagation time of information or a signal between each of the plurality of wireless devices and the mobile terminal, and wherein the position specifier specifies the position of the mobile terminal based on the calculated distance between the wireless device and the mobile terminal;

[8] The system according to [7], comprising a work start time storage that stores, as a work start time in a predetermined period, a time at which the specified position moves from an outside of the predetermined work area to the inside of the predetermined work area in the predetermined period;

[9] The system according to [7] or [8], comprising a work end time storage that stores, as a work end time in a predetermined period, a time at which the specified position moves from the inside of the predetermined work area to an outside of the predetermined work area in the predetermined period;

[10] The system according to [9], comprising a work hours storage that stores, as work hours of the worker in the predetermined period, a time calculated based on a time passing from the work start time to the work end time in a predetermined period;

[11] The system according to [7], comprising: a task start time storage that stores, as a task start time in the predetermined period, a time at which the specified position moves from outside of the predetermined task area to an inside of the predetermined task area in a predetermined period; and a task end time storage that stores, as a task end time in the predetermined period, a time at which the specified position moves from the inside of the predetermined task area to the outside of the predetermined task area in the predetermined period;

[12] The system according to [11], comprising: a task duration storage that stores a task area where the worker should execute tasks and a time zone in which the worker should execute tasks in the task area; and a time zone determinator that determines whether the stored task start time and task end time, and the task area corresponding to the task start time and the task end time have a predetermined relationship with the time zone and the task area stored in the task duration storage;

[13] The system according to [11] or [12], comprising: a start time storage that stores, as a work start time in a predetermined period, a time at which the specified position moves from the outside of the predetermined first work area to the inside of the predetermined first work area in the predetermined period; an end time storage that stores, as a work end time in a predetermined period, a time at which the specified position moves from the inside of the predetermined second work area to the outside of the predetermined second work area in the predetermined period; and a work hours storage that stores, as work hours of the worker in the predetermined period, a time calculated based on a time passing from the work start time to the work end time in the predetermined period;

[14] The system according to [7] to [13], comprising a position storage that stores the specified position in association with a time specified based on a time in which a propagation time of information or a signal between each of the plurality of wireless devices and the mobile terminal is measured;

[15] The system according to [1], wherein the terminal is an order device used to order a product or a utilization device used to receive provision of a service, wherein the system comprising a distance calculator that calculates a distance between each of the plurality of wireless devices and the order device or the utilization device based on a propagation time of information or a signal between each of the plurality of wireless devices and the order device or the utilization device, and wherein the position specifier specifies the position of the order device or the utilization device based on the calculated distance between the wireless device and the order device or the utilization device;

[16] The system according to [15], comprising a first information transmitter that transmits, to the first computer apparatus, information indicating that the position of the order device or the utilization device is out of a predetermined range when the position of the order device or the utilization device is out of the predetermined range;

[17] The system according to [15] or [16], comprising a second information transmitter that transmits information regarding a product or a service to a second computer apparatus in response to a user's operation on the order device or the utilization device;

[18] The system according to [15] to [17], wherein the order device is installed in a restaurant, and wherein the predetermined range is a range set in relation to the restaurant;

[19] The system according to [1], wherein the terminal is a first user terminal operated by a first user, wherein the position specifier specifies the position of the first user terminal, and wherein the system comprising a controller that executes control such that transmission of a post message by the first user terminal or display of the post message on a second user terminal is enabled when the position of the first user terminal is specified within a predetermined period, and to execute control such that transmission of the post message by the first user terminal or display of the post message on the second user terminal is disabled when the position of the first user terminal is not specified within the predetermined period;

[20] The system according to [19], comprising: a time specifier that specifies a time at which the position is specified by the position specifier; and a time determinator that determines whether the specified time is a time within a predetermined period, wherein the controller executes control such that transmission of the post message by the first user terminal or display of the post message on the second user terminal is enabled when the time determinator determines that the specified time is a time within the predetermined period, and the controller executes control such that transmission of the post message by the first user terminal or display of the post message on the second user terminal is disabled when the time determinator determines that the specified time is not a time within the predetermined period;

[21] The system according to [19] or [20], comprising: a time specifier that specifies a time at which a position is specified by the position specifier; and a display controller that controls the second user terminal such that the post message is displayed together with the specified position and the specified time;

[22] The system according to any one of [19] to [21], comprising: a time specifier that specifies a time at which the position is specified by the position specifier; and a position storage that stores the specified position and the specified time in association with identification information with which the first user can be identified;

[23] The system according to any one of [19] to [22], comprising a reliability specifier that specifies a reliability score of the post message using a machine-trained prediction model in which reference information serving as a reference for specifying the reliability score of the post message is used as input data and the reliability score of the reference information is used as output data;

[24] The system according to any one of [19] to [23], comprising an authenticity specifier that specifies authenticity of the post message using a machine-trained prediction model in which reference information serving as a reference for specifying the authenticity of the post message is used as input data and the authenticity of the reference information is used as output data;

[25] The system according to [23] or [24], wherein the controller executes control such that display of the post message on the second user terminal is enabled when the specified reliability score or the specified authenticity satisfies a predetermined condition, and the controller executes control such that display of the post message on the second user terminal is disabled when the specified reliability score or the specified authenticity does not satisfy the predetermined condition;

[26] The system according to any one of [23] to [25], comprising a display controller that executes control such that the second user terminal displays the post message together with the specified reliability score or the specified authenticity;

[27] The system according to any one of [23] to [26], comprising a display controller that controls the first user terminal displays the specified reliability score or the specified authenticity;

[28] The system according to any one of [1] to [27], comprising a distance calculator that calculates a distance between each of the plurality of wireless devices and the terminal based on a propagation time of information or a signal between each of the plurality of wireless devices and the terminal, wherein the position specifier specifies the position of the terminal based on the calculated distance between each of the plurality of wireless devices and the terminal;

[29] The system according to [28], wherein the distance calculator calculates the distance based on a time deviation between a clock of one of the wireless devices and a clock of the terminal;

[30] The system according to [28] or [29], comprising: a time deviation calculator that calculates a time deviation between one of the wireless devices and the terminal by executing communication between the one wireless device and the terminal; and a time corrector that corrects a time in the terminal based on the calculated time deviation;

[31] The system according to any one of [28] to [30], comprising: a phase deviation calculator that calculates a clock phase deviation between one of the wireless devices and the terminal by executing communication between the one wireless device and the terminal; and a phase corrector that corrects a phase in the terminal based on the calculated phase deviation;

[32] A method executed in a system including at least one computer apparatus, the method comprising a position specification step of specifying a position of a terminal carried or operated by a user based on a distance between each of a plurality of wireless devices and the terminal;

[33] The method according to [32], wherein the terminal is a mobile terminal carried by a first user, and wherein the method comprising an evacuation location specification step of specifying an evacuation location satisfying a predetermined condition based on the specified position of the mobile terminal;

[34] The method according to [32], wherein the terminal is a mobile terminal carried by a worker, wherein the method comprising a distance calculation step of calculating a distance between each of the plurality of wireless devices and the mobile terminal based on a propagation time of information or signal between each of the plurality of wireless devices and the mobile terminal, and wherein the position specification step specifies the position of the mobile terminal based on the calculated distance between the wireless device and the mobile terminal;

[35] The method according to [32], wherein the terminal is an order device used to order a product or a utilization device used to receive provision of a service, wherein the method comprising a distance calculation step of calculating a distance between each of the plurality of wireless devices and the order device or the utilization device based on a propagation time of information or a signal between each of the plurality of wireless devices and the order device or the utilization device, and wherein the position specification step specifies the position of the order device or the utilization device based on the calculated distance between the wireless device and the order device or the utilization device;

[36] The method according to [32], wherein the terminal is a first user terminal operated by a first user, wherein the position specification step specifies the position of the first user terminal, and wherein the method comprising a control step of executing control such that transmission of a post message by the first user terminal or display of the post message on a second user terminal is enabled when the position of the first user terminal is specified within a predetermined period, and executing control such that transmission of the post message by the first user terminal or display of the post message on the second user terminal is disabled when the position of the first user terminal is not specified within the predetermined period;

[37] A program causing a computer apparatus to function as a position specifier that specifies a position of a terminal carried or operated by a user based on a distance between each of a plurality of wireless devices and the terminal;

[38] The program according to [37], wherein the terminal is a mobile terminal carried by a first user, and wherein the program causes the computer apparatus to function as an evacuation location specifier that specifies an evacuation location satisfying a predetermined condition based on the specified position of the mobile terminal;

[39] The program according to [37], wherein the terminal is a mobile terminal carried by a worker, wherein the program causes the computer apparatus to function as a distance calculator that calculates a distance between each of the plurality of wireless devices and the mobile terminal based on a propagation time of information or a signal between each of the plurality of wireless devices and the mobile terminal, and wherein the position specifier specifies the position of the mobile terminal based on the calculated distance between the wireless device and the mobile terminal;

[40] An apparatus comprising a position specifier that specifies a position of a terminal carried or operated by a user based on a distance between each of a plurality of wireless devices and the terminal;

[41] The apparatus according to [40], wherein the apparatus is an order device used to order a product, and wherein the apparatus comprising: a distance calculator that calculates a distance between each of the plurality of wireless devices and the order device based on a propagation time of information or a signal between each of the plurality of wireless devices and the order device; and a position specifier that specifies a position of the order device based on the calculated distance between the wireless device and the order device;

[42] The apparatus according to [40], wherein the apparatus is a utilization device used when a service is provided, and wherein the apparatus comprising: a distance calculator that calculates a distance between each of the plurality of wireless devices and the utilization device based on a propagation time of information or a signal between each of the plurality of wireless devices and the utilization device; and a position specifier that specifies a position of the utilization device based on the calculated distance between the wireless device and the utilization device.

Advantageous Effects of Invention

According to the present invention, it is possible to provide a novel system that specifies a position of a terminal carried or operated by a user. According to the present invention, it is possible to provide a system that specifies an evacuation location based on a position of a first user. According to the present invention, it is possible to provide a system that specifies a position of a worker. According to the present invention, it is possible to provide a system capable of specifying a position of an order device used to order a product or a utilization device used to receive provision of a service. According to the present invention, it is possible to provide a system that enables posting of a message about a person of which a position is specified.

Brief Description of Drawings

Fig. 1 is a block diagram illustrating a configuration of a system according to an embodiment of the present invention.

Fig. 2 is a block diagram illustrating a configuration of the wireless device according to the embodiment of the present invention.

Fig. 3 is a block diagram illustrating a configuration of the mobile terminal according to the embodiment of the present invention.

Fig. 4 is a block diagram illustrating a configuration of the server apparatus according to the embodiment of the present invention.

Fig. 5 is a diagram illustrating an example of a user ID data table according to the embodiment of the present invention.

Fig. 6 is a flowchart illustrating evacuation route output processing according to the embodiment of the present invention.

Fig. 7 is a diagram illustrating an example of an evacuation location master table according to the embodiment of the present invention.

Fig. 8 is a diagram illustrating an example of a display screen of a mobile terminal according to the embodiment of the present invention.

Fig. 9 is a flowchart illustrating distance calculation processing according to the embodiment of the present invention.

Fig. 10 is a flowchart illustrating position specifying processing according to the embodiment of the present invention.

Fig. 11 is a flowchart illustrating an evacuation information sharing processing according to the embodiment of the present invention.

Fig. 12 is a block diagram illustrating a configuration of a system according to an embodiment of the present invention.

Fig. 13 is a diagram illustrating a flowchart of work hours calculation processing according to the embodiment of the present invention.

Fig. 14 is a diagram illustrating an example of a position management table according to the embodiment of the present invention.

Fig. 15 is a diagram illustrating an example of a worker management table according to the embodiment of the present invention.

Fig. 16 is a diagram illustrating a flowchart of task duration calculation processing according to the embodiment of the present invention.

Fig. 17 is a diagram illustrating an example of a task management master table and a task management table according to the embodiment of the present invention.

Fig. 18 is a diagram illustrating a flowchart of task determination processing according to the embodiment of the present invention.

Fig. 19 is a block diagram illustrating a configuration of a system according to the embodiment of the present invention.

Fig. 20 is a diagram illustrating an example of a usage mode of the system according to the embodiment of the present invention.

Fig. 21 is a flowchart illustrating warning display processing according to the embodiment of the present invention.

Fig. 22 is a flowchart illustrating order processing according to the embodiment of the present invention.

Fig. 23 is a block diagram illustrating a configuration of a system according to an embodiment of the present invention.

Fig. 24 is a diagram illustrating a flowchart of post input screen display processing according to the embodiment of the present invention.

Fig. 25 is a flowchart illustrating distance calculation processing according to the embodiment of the present invention.

Fig. 26 is a diagram illustrating a flowchart of post storage processing according to the embodiment of the present invention.

Fig. 27 is a diagram illustrating a flowchart of post display processing according to the embodiment of the present invention.

Description of Embodiments

Hereinafter, embodiments of the invention will be described with reference to the accompanying drawings. It should be noted that the description regarding the effects illustrates one aspect of the effects of the embodiments of the invention and is not limited to those specifically mentioned herein. The order of the respective processes constituting the flowchart described hereinafter may be changed as long as such a change does not cause contradictions or inconsistencies in the processing contents. Furthermore, as long as it does not cause any contradictions or inconsistencies in the processing contents, some of the processes constituting the flowchart may be omitted, or new processes may be added. Furthermore, an apparatus that primarily executes each process of the flowchart may be changed to another apparatus, provided that such a change does not depart from the spirit of the present invention. In that case, it is also possible to modify the processing contents so as to avoid any contradictions or inconsistencies.

The system according to the present invention is a system that includes at least one computer apparatus. A system according to the present invention specifies a position of a terminal carried or operated by a user based on a distance between each of a plurality of wireless devices and the terminal. The system according to the present invention will be described in detail in the following first to fourth embodiments.

[First Embodiment]

In the first embodiment, a case where the terminal is a mobile terminal carried by a first user, and the system specifies an evacuation location based on a position of the mobile terminal in a disaster will be described.

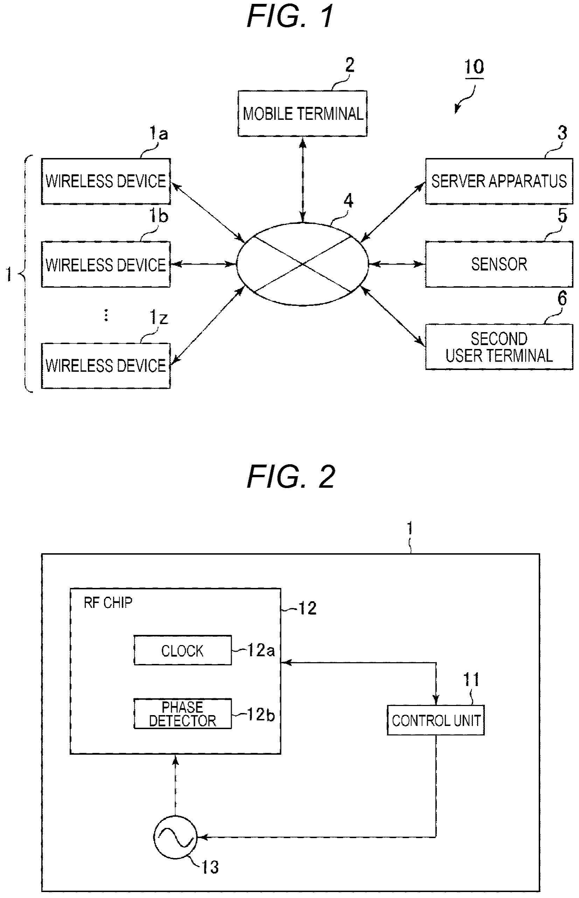

Fig. 1 is a block diagram illustrating a configuration of a system according to an embodiment of the present invention. As illustrated, a system 10 according to the present invention includes at least one computer apparatus. Specifically, a system 10 according to the present invention includes a plurality of wireless devices 1 (1a to 1z), a mobile terminal 2, and a server apparatus 3. As illustrated, the system 10 according to the present invention may include a sensor 5 and a second user terminal 6. The wireless device 1 and the mobile terminal 2 can be directly communicably connected. The wireless device 1, the mobile terminal 2, the sensor 5, and the second user terminal 6 can be communicably connected to the server apparatus 3 via the communication network 4. The mobile terminal 2 can be communicably connected to the server apparatus 3 via the communication network 4.

[Wireless Device]

Wireless device 1 is a reference device that synchronizes clocks of mobile terminals 2, and one wireless device 1 can also function as a device that synchronizes clocks of mobile terminals 2 with respect to a plurality of mobile terminals 2. Since the wireless device 1 is a reference device that synchronizes clocks of the mobile terminals 2, it is preferable that the wireless device 1 has a clock with higher accuracy. The system 10 according to the present invention includes the plurality of wireless devices 1.

A configuration of the wireless device 1 will be described. Fig. 2 is a block diagram illustrating a configuration of the wireless device according to the embodiment of the present invention. The wireless device 1 includes a control unit 11, an RF chip 12, and an oscillator 13. The RF chip 12 includes a clock 12a and a phase detector 12b. The wireless device 1 may include another configuration as necessary in addition to the control unit 11, the RF chip 12, the oscillator 13, the clock 12a, and the phase detector 12b.

The control unit 11 is not particularly limited. For example, a microcomputer (microcontroller) can be used. The control unit 11 executes program execution processing based on a program and data. The RF chip 12 executes processing for receiving and transmitting a radio signal. Data received by the RF chip 12 is an arithmetic processing target by the control unit 11.

The oscillator 13 oscillates at a predetermined frequency and outputs a signal for providing an operational timing of each unit of an apparatus. As the oscillator 13, an atomic oscillator or a crystal oscillator can be used. The clock 12a clocks an output signal of the oscillator 13 as a source vibration and outputs time. The time clocked by the clock 12a is controlled by the control unit 11 such that the time is transmitted to the mobile terminal 2 via the RF chip 12. The phase detector 12b detects a phase of a carrier wave included in information received from the mobile terminal 2, and detects a phase of a signal oscillated by the oscillator 13 in the wireless device 1.

In the system 10 according to the present invention, a place where the wireless device 1 is installed is not particularly limited, but the wireless device 1 is preferably installed at a fixed position that is a position at which the wireless device can be specified. The wireless device 1 may be installed, for example, in a power transmission tower or the like for supporting an overhead electric wire path. The plurality of wireless devices 1 may be installed. In order to specify the position of the mobile terminal 2 with high accuracy, the plurality of wireless devices 1 may be arrayed at predetermined distances (for example, every 500 m). Positional information regarding the positions at which the wireless devices 1 are installed may be stored in the server apparatus 3 or the like in association with identification information with which the wireless devices 1 can be identified.

[Mobile Terminal]

Next, the mobile terminal 2 will be described. The mobile terminal 2 is a computer apparatus carried by a user and outputs information regarding an evacuation location and/or an evacuation route in a disaster or the like. The user who operates the mobile terminal 2 is also referred to as a first user. The mobile terminal 2 is not particularly limited as long as the mobile terminal 2 can be carried by the user, such as a known mobile phone, smartphone, smart watch, smart glasses, or tablet.

The mobile terminal 2 has not only a function of a computer apparatus but also a function of synchronizing a clock of the mobile terminal 2 based on the time clocked by the wireless device 1. Specifically, in the present system, a time of the mobile terminal 2 is synchronized using the time clocked by the wireless device 1 as a reference, and a phase of the signal generated by the oscillator in the mobile terminal 2 is synchronized using the phase of the signal generated by the oscillator in the wireless device 1 as a reference. The mobile terminal 2 may function as the wireless device 1 with respect to a clock of another mobile terminal. That is, the times of the other mobile terminals are synchronized using the time clocked by the mobile terminal 2 using a reference, and the phases of the signals generated by the oscillators in the other mobile terminals are synchronized using the phase of a signal generated by the oscillator in the mobile terminal 2 as a reference.

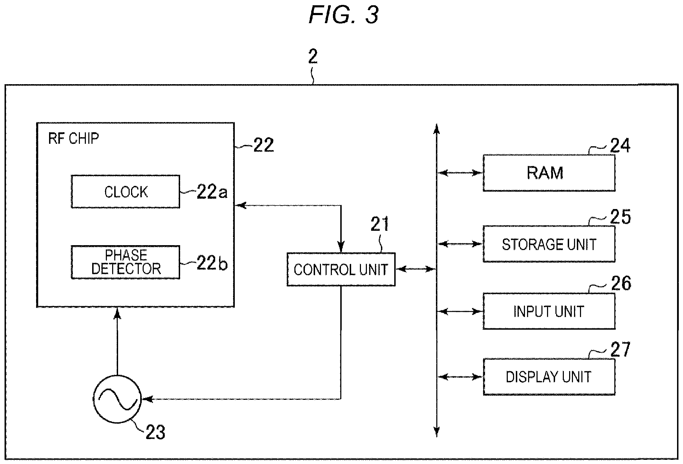

Fig. 3 is a block diagram illustrating a configuration of the mobile terminal according to the embodiment of the present invention. The mobile terminal 2 includes a control unit 21, an RF chip 22, an oscillator 23, a RAM 24, and a storage unit 25 that are connected via a bus. The mobile terminal 2 may include an input unit 26, a display unit 27, and a GPS reception unit (not illustrated).

The RF chip 22 includes a clock 22a and a phase detector 22b. The mobile terminal 2 may include another configuration as necessary in addition to the control unit 21, the RF chip 22, the oscillator 23, the clock 22a, and the phase detector 22b.

The control unit 21 includes a CPU and a ROM. The control unit 21 executes a program stored in the storage unit 25 and controls the mobile terminal 2. The RAM 24 is a work area of the control unit 21. The storage unit 25 is a storage area where programs and data are stored. The control unit 21 executes arithmetic processing based on the program and data read from the RAM 24 and the data input by the input unit 26.

The RF chip 22 can transmit and receive data to and from other computer apparatuses. The data received by the RF chip 22 is loaded into the RAM 24 and is subjected to an arithmetic processing by the control unit 21.

The oscillator 23 oscillates at a predetermined frequency and outputs a signal for giving an operational timing of each unit of the apparatus. As the oscillator 23, for example, a crystal oscillator can be used. The clock 22a clocks the output signal of the oscillator 23 as a source vibration and outputs a time. The time clocked by the clock 22a is controlled by the control unit 21 such that the time is transmitted to the wireless device 1 via the RF chip 22. The phase detector 22b detects a phase of the carrier wave included in the information received from the wireless device 1 and detects a phase of the signal oscillated by the oscillator 23 of the mobile terminal 2.

The display unit 27 has a display screen. The control unit 21 outputs a video signal for displaying an image on the display screen in accordance with a result of the arithmetic processing. Here, the display screen of the display unit 27 may be a touch panel including a touch sensor. In this case, the touch panel functions as the input unit 26. The GPS reception unit receives a GPS signal and specifies the position of the mobile terminal 2.

[Server Apparatus]

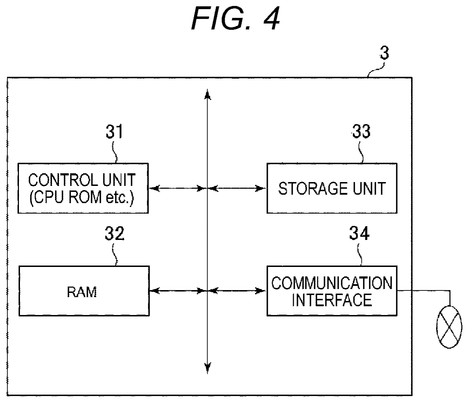

Next, the server apparatus 3 will be described. Fig. 4 is a block diagram illustrating a configuration of the server apparatus according to the embodiment of the present invention. The server apparatus 3 includes at least a control unit 31, a RAM 32, a storage unit 33, and a communication interface 34 and is connected via an internal bus.

The control unit 31 includes a CPU and a ROM, executes a program stored in the storage unit 33, and controls the server apparatus 3. The control unit 31 includes a clock that clocks a time. The RAM 32 is a work area of the control unit 31. The storage unit 33 is a storage region where programs and data are stored. That is, the storage unit 33 functions as a recording medium storing a program. The control unit 31 reads a program and data from the RAM 32 and executes program execution processing based on information or the like received from the wireless device 1 or the mobile terminal 2.

In the system 10, when the server apparatus 3 receives disaster information including information indicating that a disaster or a possibility of a disaster is detected from the sensor 5, the server apparatus 3 transmits the disaster information to the mobile terminal 2. The mobile terminal 2 can notify the first user of the disaster or the possibility of the disaster by outputting the received disaster information. In the system 10, the server apparatus 3 can specify the position of the first user based on the position of the mobile terminal 2, and can specify the evacuation information optimized for the user.

The server apparatus 3 can calculate an application usage fee (also referred to as an app usage fee) in addition to a power usage fee of the user. That is, an operator of the system 10 may charge the user of the mobile terminal 2 and the user of the second user terminal 6 for the application usage fee as a reward for using the system 10 according to the first embodiment. The system usage fee may be collectively charged to the user of the mobile terminal 2 and the user of the second user terminal 6 for each predetermined period such as once a month. Alternatively, for a business operator that employs a user who uses an application, the application usage fee may be added to the power usage fee of the business operator.

The server apparatus 3 may add the application usage fee to the power usage fee of a smart meter. In this case, various types of information may be transmitted from the server apparatus 3 to the mobile terminal 2 via the smart meter.

[Sensor]

Next, the sensor 5 according to the present invention will be described. The sensor 5 is not particularly limited as long as it can detect a predetermined event that may pose a danger to people. Examples of the predetermined event include natural disasters such as an earthquake, a flood, a heavy rain, an avalanche, and a landslide, and artificial disasters such as a fire and a ground subsidence. The sensor can detect not only a disaster that has already occurred but also a possibility of a disaster occurring after a predetermined period (for example, in the near future, such as one week, one day, several hours, or the like). As the sensor 5, various known sensors can be adopted according to a disaster that could be detected, such as an earthquake sensor that detects shake, a water level sensor that detects a water level, and a rainfall amount sensor that detects a rainfall amount. The positional information of the installed sensor 5 and the event that can be detected by the sensor 5 may be stored in the server apparatus 3 or the like in association with identification information (also referred to as a sensor ID) with which the sensor 5 can be identified.

[Second User Terminal]

Next, the second user terminal 6 according to the present invention will be described. The second user terminal 6 is a computer apparatus that is operated by the second user. The second user is a user that is associated with the first user, and the associated user is different for each first user. For example, a relative such as a parent, a child, a sibling, or a spouse of the first user may be stored in advance as the second user in association with the first user. A person such as a friend, a roommate, or a guardian of the first user other than a relative may also be stored in advance as the second user in association with the first user. A plurality of second users may also be stored in association with one first user. The same one second user may be stored in association with the plurality of first users. For example, the storage unit 33 of the server apparatus 3 stores the second user in association with the first user.

The second user terminal 6 has the same configuration as the server apparatus 3. The second user terminal 6 includes, for example, a control unit, a RAM, a storage unit, an input unit, and a display unit and may be connected by a bus. As the second user terminal 6, a terminal that has the same configuration as that of the mobile terminal 2 can be used. The second user terminal is not limited to a portable terminal and may be a stationary type desktop personal computer, a notebook type personal computer, or the like. One mobile terminal 2 can also function as the second user terminal 6. Specifically, a terminal operated by the same user may serve as either the mobile terminal 2 or the second user terminal 6. That is, the mobile terminal 2 can be regarded as the second user terminal 6, and the second user terminal 6 can be regarded as the mobile terminal 2.

Here, before the system 10 is used, the user of the mobile terminal 2 installs an application program (hereinafter referred to as a first dedicated application) used to use the system 10 in the mobile terminal 2. Identification information (hereinafter also referred to as a user ID) for identifying the user is assigned to the user. The user ID is identification information with which the user can be identified.

The user operates the mobile terminal 2 to input the user himself or herself and information or the like regarding the second user when the user himself or herself is the first user. The user inputs information regarding the user, such as a name, an address, an age, a sex, and presence or absence of an underlying disease. The user inputs information regarding the second user, such as a user ID of the second user, a name of the second user, or an e-mail address or a telephone number of the second user. Next, when the user transmits the input information to the server apparatus 3, these pieces of information are stored in association with the user ID in a user ID data table.

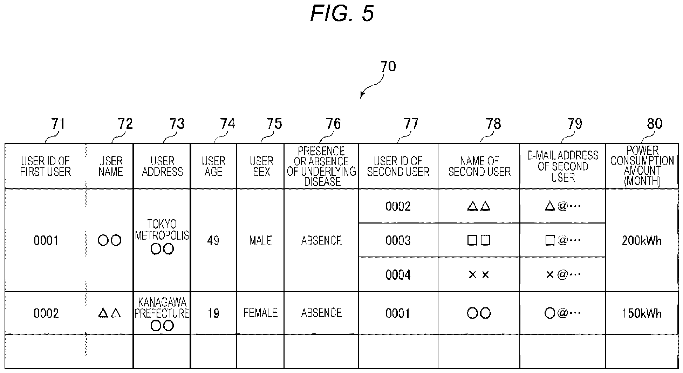

Fig. 5 is a diagram illustrating an example of a user ID data table according to the embodiment of the present invention. A user ID data table 70 is set in the server apparatus 3. In the user ID data table 70, a user name 72, a user address 73, a user age 74, a user sex 75, presence or absence of an underlying disease 76, a user ID 77 of the second user, a name 78 of the second user, an e-mail address 79 of the second user, and a power consumption amount 80 are stored in association with a user ID 71. In Fig. 5, the user IDs "0002", "0003", and "0004" are stored in association with the user ID "0001" of the first user, and the user ID "0001" is stored in association with the user ID "0002" of the first user. The number of user IDs associated with one user ID may be 1 or plural.

Information regarding the contact information such as an e-mail address or a telephone number of the second user is stored in the user ID data table 70. Thus, the information can be provided to the second user even when the user ID is not assigned to the second user.

[Evacuation Route Output Processing]

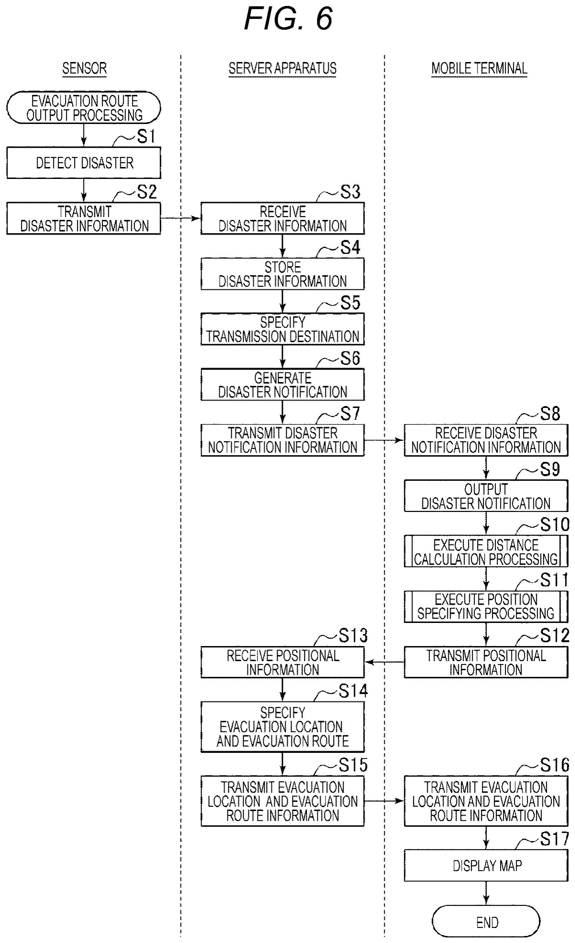

Fig. 6 is a flowchart illustrating evacuation route output processing according to the embodiment of the present invention. First, the sensor 5 detects a disaster (step S1). For example, an earthquake detector can detect an earthquake by sensing a predetermined seismic intensity or more. The water level sensor can detect a flood or a heavy rain by sensing that a water level exceeds a predetermined water level at a predetermined site.

When the sensor 5 detects a disaster, disaster information is transmitted from the sensor 5 to the server apparatus 3 (step S2). The disaster information is information regarding a disaster occurrence situation such as information indicating that a disaster has occurred or information indicating that a disaster is likely to occur. The information may be information itself that is detected by the sensor 5 and indicates that the water level of the river exceeds a predetermined value. The disaster information includes information regarding a type of disaster, disaster occurrence site information that is information regarding a site where the disaster occurred, and time information regarding a time at which the disaster has been detected. The sensor ID may be transmitted together with the disaster information. The disaster occurrence site may be a position at which the sensor 5 detecting a predetermined event is installed.

The positional information indicating where the sensor 5 is installed is stored in the sensor 5. In step S2, the sensor 5 transmits the disaster information including the disaster occurrence site information to the server apparatus 3. Alternatively, the positional information of the sensor 5 and the sensor ID may be stored in advance in association in the server apparatus 3. In this case, in step S2, the disaster information and the sensor ID are transmitted, and the server apparatus 3 can specify the positional information of the sensor 5 from the sensor ID with which the disaster information is transmitted and can store the positional information as disaster occurrence site information.

The disaster information transmitted in step S2 is received by the server apparatus 3 (step S3), and the disaster information is stored in the storage unit 33 of the server apparatus 3 (step S4). Subsequently, the server apparatus 3 specifies a transmission destination of the disaster notification corresponding to the disaster information (step S5). The disaster notification is information including the fact that a disaster has occurred at a disaster occurrence site or there is a possibility of a disaster occurring. The disaster notification includes information regarding a type of disaster, a disaster occurrence site, and a time at which the disaster has occurred. Subsequently, a disaster notification is generated according to the positional information of the mobile terminal 2 of the specified transmission destination (step S6), and disaster notification information regarding the generated disaster notification is transmitted to the mobile terminal 2 corresponding to the specified transmission destination (step S7).

Processing for specifying the transmission destination in step S5 will be described. In step S5, the mobile terminal 2 within a predetermined range from the disaster occurrence site is specified as the transmission destination. Specifically, the transmission destination may be specified based on the positional information of the mobile terminal 2 specified by GPS, the position specifying processing, or the like in step S5 and the disaster occurrence site information received in step S3. For example, in step S5, the mobile terminal 2 of which the positional information is within a predetermined range (for example, within a radius of 10 km) from the disaster occurrence site is specified.

Alternatively, the mobile terminal 2 that can receive information from a base station determined based on the disaster occurrence site information may be specified, the mobile terminal 2 of which the positional information of an address of the user stored in the server apparatus 3 is within a predetermined range (for example, within a radius of 10 km) from the disaster occurrence site may be specified, or the mobile terminal 2 of which positional information of the address is in a local government determined based on the disaster occurrence site information may be specified. The predetermined range is not particularly limited and may change depending on a type of disaster and an occurrence situation of the disaster.

Processing for generating the disaster notification in step S6 will be described. In step S5, a disaster notification is generated according to the disaster information and the positional information of the mobile terminal 2. Specifically, the disaster notification may be generated according to a distance between the disaster occurrence site and the mobile terminal 2, and the type of disaster.

For example, when the type of disaster is a flood, it is important to recognize and respond to a danger earlier than other disasters. Therefore, when the type of disaster is a flood, the generated disaster notification includes information regarding a warning specified based on the distance between the disaster occurrence site and the mobile terminal 2. In a disaster notification master table set in the server apparatus 3, warning content is stored in association with the type of disaster and the distance between the disaster occurrence site and the mobile terminal 2. As the warning content, for example, sounds or vibrations of different magnitudes or patterns may be stored according to urgency of a warning, or text, an image, or a moving image in different display modes may be stored. In the disaster notification master table, the warning content is stored in association with information regarding the user (sex, age, presence or absence of an underlying disease, presence or absence of pregnancy, and the like), and the disaster notification may be generated according to the information regarding the user.

For example, in a case where the distance between the disaster occurrence site and the mobile terminal 2 is 1 km or less, a warning with high urgency is output in the output of the disaster notification (step S9) to be described below since the danger is imminent. On the other hand, when the distance between the disaster occurrence site and the mobile terminal 2 is 5 km or more and 10 km or less, it is not always immediately dangerous, and thus a warning with low urgency is output in the output of the disaster notification to be described below (step S9). The disaster notification master table is set in the server apparatus 3.

The user of the mobile terminal 2 or the second user terminal 6 not specified in step S5 can also access the server apparatus 3 through the first dedicated application so that the disaster information stored in step S4 can be displayed on the own mobile terminal 2 or the second user terminal 6.

When the mobile terminal 2 receives the disaster notification information transmitted in step S7 (step S8), the mobile terminal 2 outputs the disaster notification (step S9). When the disaster notification information is received, the first dedicated application starts, and the processing proceeds to step S10. Alternatively, after the disaster notification is output, an evacuation location display request may be transmitted from the mobile terminal 2 to the server apparatus 3 through an operation input by the user, and thus the processing may proceed to step S10. For example, a display message such as "displaying an evacuation location" is displayed on the display screen of the mobile terminal 2. When the display message is pressed, an evacuation location display request is transmitted to the server apparatus 3.

Here, it is preferable that the disaster notification is output in step S9 even when the user of the mobile terminal 2 does not start the first dedicated application. In the output of the disaster notification in step S9, text, an image, and/or a moving image may be displayed on the display screen of the mobile terminal 2, or sound, light, and/or vibration may be output. As described above, by transmitting and outputting the disaster notification to the mobile terminal 2 within a predetermined range from the disaster occurrence site, it is possible to notify a user who needs to know disaster information of danger and easily share the disaster information. Further, the owner can know a danger without continuing to confirm the disaster information by himself or herself.

After the first dedicated application starts, the mobile terminal 2 executes distance calculation processing to be described below (step S10). Thereafter, position specifying processing to be described below is executed to specify a position of the mobile terminal 2 (step S11). The processing of steps S10 and S11 is processing for specifying the position of the mobile terminal 2 carried by the first user. A known position specification method may be used instead of the processing of steps S10 and S11.

The user ID of the mobile terminal 2 and the positional information of the specified mobile terminal 2 are transmitted from the mobile terminal 2 to the server apparatus 3 (step S12) and are received by the server apparatus 3 (step S13). The server apparatus 3 specifies an evacuation location satisfying a predetermined condition and an evacuation route to the evacuation location based on the specified position of the mobile terminal (step S14). Examples of the predetermined condition include a condition of "within a predetermined distance from the specified position of the mobile terminal 2".

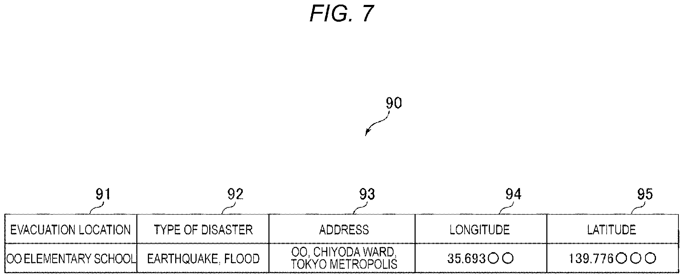

The processing for specifying the evacuation location in step S14 will be described. Fig. 7 is a diagram illustrating an example of an evacuation location master table according to the embodiment of the present invention. The evacuation location master table 90 is set in the server apparatus 3. The evacuation location master table 90 stores the positional information of the evacuation location and the type of disaster appropriate for evacuation to the evacuation location in association. The server apparatus 3 specifies the evacuation location within the predetermined distance from the specified position of the mobile terminal 2 with reference to the evacuation location master table 90.

In the evacuation location master table 90, for example, an evacuation location 91, a type of disaster 92, an address 93, longitude 94, latitude 95, and the like are stored. The type of disaster 92 indicates which type of evacuation location 91 is appropriate for evacuation from disaster. For example, in Fig. 7, an evacuation location "OO elementary school" that is an evacuation location appropriate for evacuation from the type of disaster "earthquake and flood" is stored. The server apparatus 3 may specify an evacuation location corresponding to the type of disaster that has occurred within a predetermined distance from the specified position of the mobile terminal 2 and the type of disaster with reference to the evacuation location master table 90.

Further, the evacuation location may be specified based on map information, disaster information, and positional information of the mobile terminal 2. Specifically, in case of a disaster that is flooding of a river, when there is an evacuation location within the predetermined range and it is necessary to cross the river from the position of the mobile terminal 2 to reach the evacuation location, the evacuation location is not specified and an evacuation location at which it is not necessary to cross the river is specified. In the case of a disaster that is an earthquake, when there is an evacuation location within a predetermined range and the evacuation location is a foot of a mountain, the evacuation location is not specified and an evacuation location in a direction away from the mountain is specified.

In the evacuation location master table 90, information that is preferably considered in selection of an evacuation location, such as information regarding the number of people accommodated in an evacuation location and information regarding stockpiles of emergency food or amounts of disaster prevention supplies, may be stored in association without being limited to information illustrated in Fig. 7.

Processing for specifying an evacuation route in step S14 will be described. The evacuation route can be specified based on a known algorithm related to route specification. For example, a movement route is specified based on whether the movement of the specified evacuation location from the position of the specified mobile terminal 2 is a shortest distance or whether a road on the route is one-way or two-way route.

The evacuation route may be specified based on the disaster information stored in the server apparatus 3 in step S14. Specifically, the evacuation route may be specified based on map information, disaster information, and positional information of the mobile terminal 2. For example, when the movement of the evacuation location is a shortest distance from the specified position of the mobile terminal 2 and a disaster occurrence site is included on the movement route, the movement route is specified so that the disaster occurrence site is not included. A case where the disaster occurrence site is included on the movement route may be a case where the disaster occurrence site is on the movement route or may be a state where the movement route is included in a predetermined range (for example, within a 1 km radius) from the disaster occurrence site. Alternatively, when the movement of the evacuation location is a shortest distance from the position of the specified mobile terminal 2 and the movement route includes a facility or topography related to a type of disaster, the movement route is specified so that the facility or the topography is not included. For example, when the type of disaster is a flood, the evacuation route can be specified so that the vicinity of a river including a disaster occurrence site is not included.

In the server apparatus 3, information regarding the specified evacuation location and evacuation route is transmitted to the mobile terminal 2 (step S15) and is received by the mobile terminal 2 (step S16). In the mobile terminal 2, a map in which the information regarding the evacuation location and the evacuation route received in step S16 is reflected is displayed on the mobile terminal 2 (step S17). Through the above processing of steps S1 to S17, the evacuation route output processing ends. Through the evacuation route output processing, users can be prompted to evacuate when a disaster occurs or when there is a possibility of a disaster occurring.

The processing of steps S10 to S17 may be repeatedly executed even after the evacuation route output processing ends. That is, the position of the mobile terminal 2 may be continuously specified. When the position of the mobile terminal 2 changes, the evacuation route may also change. The processing of steps S1 to S4 may be executed while the evacuation route output processing is being executed and after the evacuation route output processing ends. That is, a situation of the disaster occurrence site may be continuously detected, and a situation of the disaster occurrence site may be stored in the server apparatus 3.

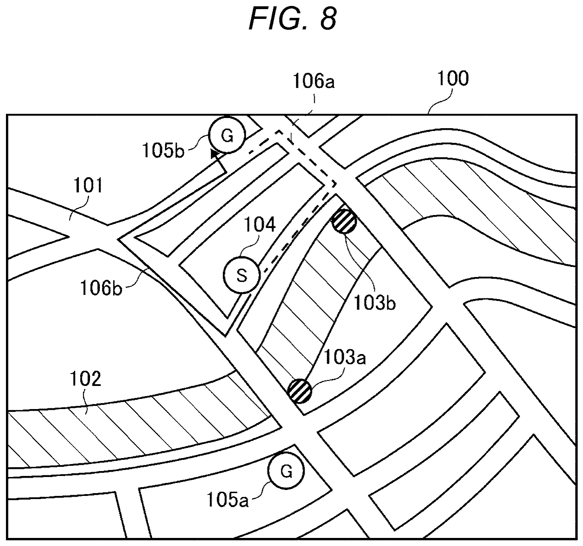

Next, the display screen displayed in step S17 will be described. Fig. 8 is a diagram illustrating an example of a display screen 100 of the display unit 27 of the mobile terminal 2 according to the embodiment of the present invention. A map in which information regarding evacuation locations and evacuation routes are reflected is displayed on the display screen 100.

On the display screen 100, a road 101, a river 102, and the like are displayed as in the map. Then, disaster information icons 103 are displayed at positions corresponding to disaster occurrence sites on the map. In the disaster information icons 103, types of disasters may be displayed, or disaster information at the disaster occurrence sites may be displayed by pressing the disaster information icons 103. For example, in Fig. 8, it can be understood that disasters have occurred at the positions of the disaster information icons 103a and 103b near the river 102. "Flood" may be displayed as a type of disaster, or information regarding the address of the disaster occurrence site and a time at which the disaster has occurred can be displayed by pressing the disaster information icon 103.

In Fig. 8, since it is necessary to cross the river 102 in order to go to the evacuation location 105a closest to the position 104 of the user, the evacuation location 105b at which it is not necessary to cross the river 102 is specified as an evacuation location. A movement route 106a that is a shortest route to the evacuation location 105b passes through the vicinity of the disaster occurrence site indicated by the disaster information icon 103b and the vicinity of the river 102. Therefore, the movement route 106b that does not include the disaster occurrence site indicated by the disaster information icon 103b is displayed as a movement route. Accordingly, the user can go to the evacuation location along a safer evacuation route. By pressing the icon of the evacuation location 105, it is possible to display information which is preferably considered in selection of an evacuation location stored in the evacuation location master table 90.

In the system 10, the server apparatus 3 can execute control such that the mobile terminal 2 can output information regarding the specified evacuation location and/or the route to the evacuation location. The output of the information regarding the specified evacuation location and/or the route to the evacuation location is a concept including not only display of the evacuation location and/or the evacuation route on the map on the display screen as described above, but also output by a voice such as voice guidance to the evacuation route and voice output of display content.

As described above, the evacuation location and the evacuation route, and the information regarding the evacuation location and/or the route to the evacuation location are output in the mobile terminal 2, and thus the information regarding the evacuation location and the evacuation route appropriate for the user in a disaster can be easily provided.

The display screen 100 may display not only the information regarding the disaster detected by the sensor 5 but also the information regarding a flood, the inundation, a fire, a storm, a heavy rain, and/or the power failure at the position of the mobile terminal 2. Accordingly, information necessary in a disaster can be shared in a state of high visibility.

[Distance Calculation Processing]

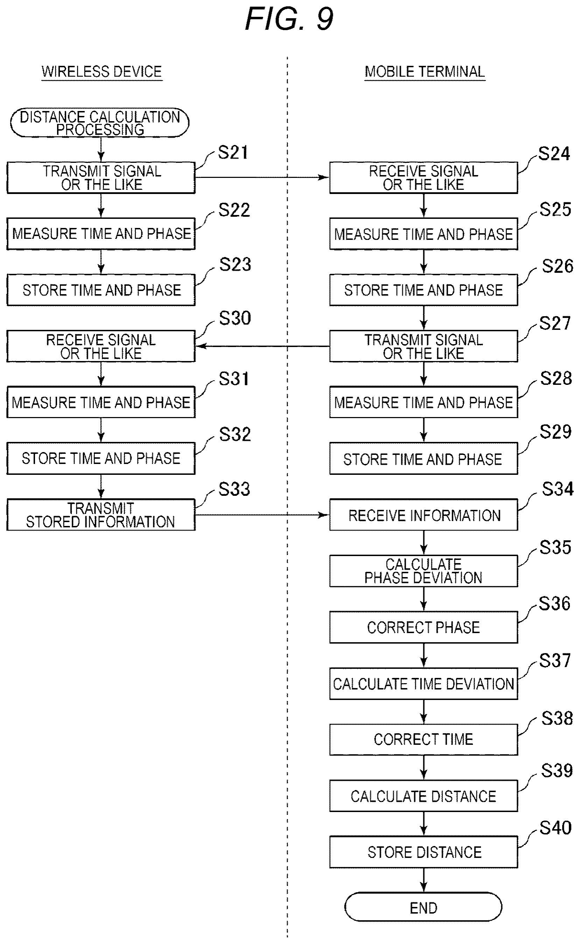

Next, the distance calculation processing in step S10 will be described. Fig. 9 is a flowchart illustrating distance calculation processing according to the embodiment of the present invention. The distance calculation processing is processing for calculating a distance between each of the plurality of wireless devices 1 and the mobile terminal 2 based on a propagation time of information or a signal between each of the plurality of wireless devices 1 and the mobile terminal 2.

First, information or a signal is transmitted from the wireless device 1 to the mobile terminal 2 (step S21). Information or a signal transmitted from the wireless device 1 to the mobile terminal 2 is not particularly limited. The wireless device 1 clocks a time at which the information or the signal is transmitted in step S21 and measures a phase at the transmission (step S22). Then, the clocked time and the measured phase are stored in a memory in the control unit 11 (step S23).

Next, the mobile terminal 2 receives the information or the signal from the wireless device 1 (step S24). The mobile terminal 2 clocks a time at which the information or the signal is received in step S24, and measures a phase at the reception (step S25). Then, the clocked time and the measured phase are stored in the storage unit 25 (step S26).

Next, the mobile terminal 2 transmits information or a signal to the wireless device 1 (step S27). The information or the signal transmitted from the mobile terminal 2 to the wireless device 1 is not particularly limited. The mobile terminal 2 clocks a time at which the information or the signal is transmitted in step S27 and measures the phase at the transmission (step S28). Then, the storage unit 25 stores the clocked time and the measured phase (step S29).

The wireless device 1 receives the information or the signal transmitted in step S27 (step S30). The wireless device 1 clocks the time at which the information or the signal is received in step S30 and measures the phase at the reception (step S31). Then, the clocked time and the measured phase are stored in the memory in the control unit 11 (step S32). When step S32 ends, the process proceeds to step S33.

In the wireless device 1, the RF chip 12 transmits information regarding the time and the phase at the transmission of the signal in step S21 stored in step S23 and information regarding the time and the phase at the reception of the signal in step S30 stored in step S32 to the mobile terminal 2 (step S33).

Then, the mobile terminal 2 receives the information regarding the time at which the wireless device 1 transmitted the information or the signal and the phase at the transmission in step S21 and the information regarding the time at which the wireless device 1 receives the information or the signal and the phase at the reception in step S30 (step S34).

Subsequently, the control unit 21 of the mobile terminal 2 calculates a phase deviation between the phase of the signal generated by the oscillator 13 of the wireless device 1 and the phase of the signal generated by the oscillator 23 of the mobile terminal 2 (step S35). The phase deviation can be calculated based on a phase difference between a phase of a carrier wave included in information or a signal transmitted from the wireless device 1 to the mobile terminal 2 and a phase of a signal oscillated by the oscillator 23 of the mobile terminal 2 when the mobile terminal 2 receives the information or the signal, and a phase difference between a phase of a carrier wave included in information or a signal transmitted from the mobile terminal 2 to the wireless device 1 and a phase of a signal oscillated by the oscillator 13 of the wireless device 1 when the wireless device 1 receives the information or the signal.

The phase of the carrier wave included in the information or the signal transmitted from the wireless device 1 to the mobile terminal 2 is the phase of the information or the signal transmitted in step S21. The information regarding the phase is transmitted from the wireless device 1 to the mobile terminal 2 in step S33. The phase of the signal oscillated by the oscillator 23 of the mobile terminal 2 when the mobile terminal 2 receives the information or the signal is the phase of the information or the signal received in step S24. The information regarding the phase is measured by the mobile terminal 2 in step S25 and is stored in step S26. The phase of the carrier wave included in the information or the signal transmitted from the mobile terminal 2 to the wireless device 1 is, for example, the phase of the information or the signal transmitted in step S27. The information regarding the phase is stored by the mobile terminal 2 in step S29. The phase of the signal oscillated by the oscillator 13 of the wireless device 1 when the wireless device 1 receives the information or the signal is, for example, the phase of the information or the signal received in step S30. The information regarding the phase is measured in step S31 and is transmitted from the wireless device 1 to the mobile terminal 2 in step S33.

Here, the phase of the carrier wave included in the information or the signal transmitted from the wireless device 1 to the mobile terminal 2 is a concept including not only the phase of the carrier wave included in the information or the signal transmitted from the wireless device 1 to the mobile terminal 2 but also the phase of the carrier wave included in the signal obtained by mixing down the information or the signal. Similarly, the phase of the carrier wave included in the information or the signal transmitted from the mobile terminal 2 to the wireless device 1 is a concept including not only the phase of the carrier wave included in the information or the signal transmitted from the mobile terminal 2 to the wireless device 1 but also the phase of the carrier wave included in the signal obtained by mixing down the information or the signal.

When the phase difference between the phase of the carrier wave included in the information or the signal transmitted from the wireless device 1 to the mobile terminal 2 and the phase of the signal oscillated by the oscillator 23 of the mobile terminal 2 when the mobile terminal 2 receives the information or the signal is defined as $\Delta\Phi_S$, and the phase difference between the phase of the carrier wave included in the information or the signal transmitted from the mobile terminal 2 to the wireless device 1 and the phase of the signal oscillated by the oscillator 13 of the wireless device 1 when the wireless device 1 receives the information or the signal is defined as $\Delta\Phi_M$, a phase difference $\Delta\Phi_P$ caused due to a signal propagating between the wireless device 1 and the mobile terminal 2 can be calculated from an arithmetic mean of the phase difference $\Delta\Phi_S$ and the phase difference $\Delta\Phi_M$. That is, the phase difference $\Delta\Phi_P$ can be calculated by

$$\text{Formula (1): } \Delta\Phi_P = 1/2 \times (\Delta\Phi_S + \Delta\Phi_M).$$

When the phase deviation between the wireless device 1 and the mobile terminal 2 is defined as $\Delta\Phi_C$, a relationship expressed by Formula (2): $\Delta\Phi_M = \Delta\Phi_P + (-\Delta\Phi_C)$ is established. Therefore, the phase deviation $\Delta\Phi_C$ can be calculated by subtracting the phase difference $\Delta\Phi_M$ from the phase difference $\Delta\Phi_P$. That is, the phase deviation $\Delta\Phi_C$ can be calculated by Formula (3): $\Delta\Phi_C = 1/2 \times (\Delta\Phi_S - \Delta\Phi_M)$. In step S35, the phase deviation between the wireless device 1 and the mobile terminal 2 is calculated using Formula (3).

Here, the phase deviation $\Delta\Phi_C$ is calculated by Formula (3), but the phase deviation $\Delta\Phi_C$ to be calculated may be obtained by further subtracting $2\pi$ or $4\pi$, that is, $2n\pi$. n may take 0 or a positive integer. Therefore, it is also possible to specify whether n is 0, 1, or 2 (that is, whether a value obtained by further subtracting $2n\pi$ from the phase deviation $\Delta\Phi_C$ obtained by Formula (3) is an original phase deviation or whether a value obtained without the subtraction is the original phase deviation) based on a propagation time $T_P$ to be described below or a time difference between the wireless device 1 and the mobile terminal 2.

A signal transmitted from the wireless device 1 to the mobile terminal 2 and a signal transmitted from the mobile terminal 2 to the wireless device 1 may start from a state in which an output at the start of transmission is not 0 but any value. In this case, it is necessary to correct the phase deviation $\Delta\Phi_C$ by measuring the phase and the transmission time at the start of transmission. By normally making the phase at the start of transmission constant and executing the transmission at a predetermined time, it is possible to omit processing for correcting $\Delta\Phi_C$ after measuring the phase and the transmission time at the start of transmission.

The mobile terminal 2 corrects the phase of the signal generated by the oscillator 23 of the mobile terminal 2 to achieve synchronization with the signal generated by the oscillator 13 of the wireless device 1 based on the calculated phase deviation $\Delta\Phi_C$ (step S36). The correction of the phase in step S36 is controlled and executed by the control unit 21. The phase deviation of the oscillator 23 of the mobile terminal 2 occurs due to the influence of the environment around the mobile terminal 2. By executing the synchronization processing periodically in this manner, the clock 22a of the mobile terminal 2 can be continuously clocked with high accuracy.

Subsequently, in the wireless device 1, the time difference between the wireless device 1 and the mobile terminal 2 is calculated based on a time at which the wireless device 1 transmits information or a signal to the mobile terminal 2, a time at which the mobile terminal 2 transmits information or a signal to the wireless device 1, a time at which the wireless device 1 transmits information or a signal and the mobile terminal 2 receives the information or a signal and clocks a time, and a time at which the mobile terminal 2 transmits information or a signal and the wireless device 1 receives the information or the signal and clocks a time (step S37).

The time at which the wireless device 1 transmits the information or the signal to the mobile terminal 2 is a time at which the information is transmitted in step S21. The information regarding the time is transmitted from the wireless device 1 to the mobile terminal 2 in step S33. The time at which the mobile terminal 2 transmits the information or the signal to the wireless device 1 is a time at which the information or the signal is transmitted in step S27. The information regarding the time is stored in the mobile terminal 2 in step S29. Subsequently, the time at which the wireless device 1 transmits the information or the signal and the mobile terminal 2 receives the information or the signal and clocks a time is a time at which the information is received in step S24. The information regarding the time is recorded by the mobile terminal 2 in step S25 and is stored in step S26. The time at which the mobile terminal 2 transmits the information or the signal and the wireless device 1 receives the information or the signal and clocks a time is a time at which the information or the signal is received in step S30. The information regarding the time is clocked in step S31 and transmitted from the wireless device 1 to the mobile terminal 2 in step S33.

When the time at which the wireless device 1 transmits information or a signal to the mobile terminal 2 is defined as $T_M$, the time at which the mobile terminal 2 transmits information or a signal to the wireless device 1 is defined as $T_S$, the time at which the wireless device 1 transmits information or a signal and the mobile terminal 2 receives the information or the signal and clocks a time is defined as $T_{MS}$, and the time at which the mobile terminal 2 transmits information or a signal and the wireless device 1 receives the information or the signal and clocks a time is defined as $T_{SM}$, the time difference between the wireless device 1 and the mobile terminal 2 can be calculated by Formula (4): $T_L = 1/2 \times ((T_{SM} - T_S) - (T_{MS} - T_M))$. In step S37, the time difference between the wireless device 1 and the mobile terminal 2 is calculated by Formula (4). The mobile terminal 2 corrects the time in the mobile terminal 2 to achieve synchronization with the time of the wireless device 1 based on the calculated time difference (step S38).

Subsequently, a distance between the wireless device 1 and the mobile terminal 2 is calculated (step S39). In step S39, the distance between the wireless device 1 and the mobile terminal 2 can be calculated by calculating a propagation time in which information or a signal propagates between the wireless device 1 and the mobile terminal 2 by a substantial difference between a time at which the wireless device 1 transmits the information or the signal and a time at which the mobile terminal 2 receives the information or the signal, and multiplying the propagation time by a propagation speed (for example, the speed of light) of the information or the signal. A difference between the time at which the wireless device 1 transmits the information or the signal and the time at which the mobile terminal 2 receives the information or the signal can be calculated based on, for example, a time at which the wireless device 1 transmits the information or the signal to the mobile terminal 2 in step S21 (a time at which the wireless device 1 transmits the information or the signal to the mobile terminal 2 in step S33), a time at which the mobile terminal 2 receives the information or the signal from the wireless device 1 in step S24 and the information or the signal is stored in the storage unit 25 in step S26, and the time difference calculated in step S37.

In step S39, the distance between the wireless device 1 and the mobile terminal 2 can be calculated by calculating a propagation time in which information or a signal propagates between the wireless device 1 and the mobile terminal 2 by a substantial difference between a time at which the mobile terminal 2 transmits information or a signal and a time at which the wireless device 1 receives the information or the signal, and multiplying the propagation time by a propagation speed (for example, the speed of light) of the information or the signal. The difference between the time at which the information or the signal is transmitted by the mobile terminal 2 and the time at which the wireless device 1 receives the information or the signal can be calculated based on, for example, the time at which the information or the signal is transmitted from the mobile terminal 2 to the wireless device 1 in step S27 and stored in the storage unit 25 in step S29, the time at which the information or the signal is received by the wireless device 1 in step S30 (transmitted from the wireless device 1 to the mobile terminal 2 in step S33), and the time difference calculated in step S37.

The distance between the wireless device 1 and the mobile terminal 2 calculated in step S39 is stored in the storage unit 25 of the mobile terminal 2 in association with, for example, time information regarding the calculated time or the like and identification information with which the wireless device 1 can be identified (or positional information of the wireless device 1) (step S40). When step S40 is executed, the distance calculation processing ends.

By executing the processing from steps S21 to S40, can not only a time deviation and a phase deviation between the wireless device 1 and the mobile terminal 2 be corrected, but the distance between the wireless device 1 and the mobile terminal 2 can also be calculated. While the time deviation between the wireless device 1 and the mobile terminal 2 is corrected in step S38, it is not always necessary to correct the time deviation, and the distance between the wireless device 1 and the mobile terminal 2 can be calculated without correcting the time deviation based on the time deviation calculated in step S37. That is, in the system 10, the distance can be calculated based on the time deviation between the time of one of the wireless device 1 and the time of the mobile terminal 2. While the phase deviation between the wireless device 1 and the mobile terminal 2 is corrected in step S36, it is not always necessary to correct the phase deviation, and the distance between the wireless device 1 and the mobile terminal 2 can be calculated without correcting the phase deviation. That is, in the system 10, the distance can be calculated based on the phase deviation between the time of one of the wireless device 1 and the time of the mobile terminal 2.

While the time deviation and the phase deviation between the wireless device 1 and the mobile terminal 2 are corrected and the distance between the wireless device 1 and the mobile terminal 2 is calculated by executing the processing from steps S21 to S40, it is also possible to separately execute processing for correcting the time deviation between the wireless device 1 and the mobile terminal 2, processing for correcting the phase deviation between the wireless device 1 and the mobile terminal 2, and processing for calculating the distance between the wireless device 1 and the mobile terminal 2.

In the processing for calculating the distance between the wireless device 1 and the mobile terminal 2, the distance between one mobile terminal 2 and each of the plurality of wireless devices 1 can be calculated. When the position of the mobile terminal 2 is specified, as will be described below, the distance between the wireless device 1 and the mobile terminal 2 is specified by the number of wireless devices 1 required for specifying the position. Here, even when the distance to each of the plurality of wireless devices 1 is calculated for one mobile terminal 2, time deviation correction processing and phase deviation correction processing may be executed only by one wireless device 1, and the time deviation correction processing and the phase deviation correction processing may not be executed during communication with the other wireless devices 1.

Here, the mobile terminal 2 calculates the distance between the wireless device 1 and the mobile terminal 2. Instead of the mobile terminal 2, the wireless device 1 may calculate the distance between the wireless device 1 and the mobile terminal 2 through the same processing as step S39. When the distance is calculated by the wireless device 1, the distance between the wireless device 1 and the mobile terminal 2 is stored in the memory in the control unit 11 in association with time information regarding the calculated time or the like and the identification information with which the mobile terminal 2 can be identified.

Instead of the mobile terminal 2, the server apparatus 3 may calculate the distance between the wireless device 1 and the mobile terminal 2 through the same processing as step S39. When the distance is calculated in the server apparatus 3, information necessary for the calculation is received directly or indirectly from the wireless device 1 and/or the mobile terminal 2. When the distance is calculated in the server apparatus 3, the distance between the wireless device 1 and the mobile terminal 2 is stored in the storage unit 33 of the server apparatus 3 in association with time information regarding the calculated time or the like, identification information with which the wireless device 1 can be identified (or positional information of the wireless device 1), and identification information with which the mobile terminal 2 can be identified.

While the distance between the wireless device 1 and the mobile terminal 2 is calculated here, in a case where the system includes a plurality of mobile terminals 2, it is also possible to calculate the distance between one mobile terminal 2 and another mobile terminal 2. In this case, the distance between one mobile terminal 2 and another mobile terminal 2 can be calculated by calculating a propagation time in which information or a signal propagates between one of the mobile terminal 2 and the other mobile terminal 2 by a substantial difference between a time at which one of the mobile terminal 2 transmits the information or the signal and a time at which the other mobile terminal 2 receives the information or the signal, and multiplying the propagation time by a propagation speed (for example, the speed of light) of the information or the signal.

Moreover, in the above, while the embodiment of calculating the distance between one wireless device and the mobile terminal 2, in the present system, for each of a plurality of wireless devices 1, the distance between the mobile terminal 2 and the other wireless device that is different from the one wireless device 1 can also be calculated as in the same manner with the embodiment of calculating the distance between one wireless device and the mobile terminal 2.

[Position Specifying Processing]

Next, a position specifying processing according to the step S11 will be described. The position specifying processing is a processing to specify the position of the mobile terminal 2 based on the distance between the each of the plurality of wireless devices 1 and the mobile terminal 2, the distance is calculated in the distance calculation processing.

In order to specify the position of the mobile terminal 2, it is assumed that a distance to each of the plurality of wireless devices 1 is calculated for one mobile terminal 2 in the distance calculation processing. For example, when one mobile terminal 2 and the plurality of wireless devices 1 are at the same height, that is, when there are these devices on the same XY plane, the position of the mobile terminal 2 (for example, XY coordinates of the mobile terminal 2) can be specified based on the distance between one mobile terminal 2 and each of the three wireless devices 1 and the position of each of the three wireless devices 1. Accordingly, when one mobile terminal 2 and the plurality of wireless devices 1 are at the same height, the number of pieces of data regarding the distance between the wireless device 1 and the mobile terminal 2 necessary for specifying the position is 3.

For example, when the height of one mobile terminal 2 is different from the height of at least one of the plurality of wireless devices 1 and the wireless devices 1 are not on the same plane, the position (for example, XYZ coordinates of the mobile terminal 2 or latitude and longitude) of the mobile terminal 2 can be specified based on the distance between one mobile terminal 2 and each of the four wireless devices 1 and the position of each of the four wireless devices 1. Accordingly, when the height of one mobile terminal 2 is different from the height of at least one of the plurality of wireless devices 1, and the wireless devices 1 are not on the same plane, the number of pieces of data regarding the distance between the wireless device 1 and the mobile terminal 2 necessary for specifying the position is 4. In this case, it is preferable that the four wireless devices 1 are not on the same plane. For example, an installation height of at least one wireless device 1 is preferably different from installation heights of the other three wireless devices 1. In this way, even when the mobile terminal 2 is located at any position, it is possible to specify the position in three dimensions.

That is, the system 10 preferably includes at least four wireless devices 1. This is because when the wireless device 1 is set as a power transmission tower, the wireless device 1 and the mobile terminal 2 are not at the same height.

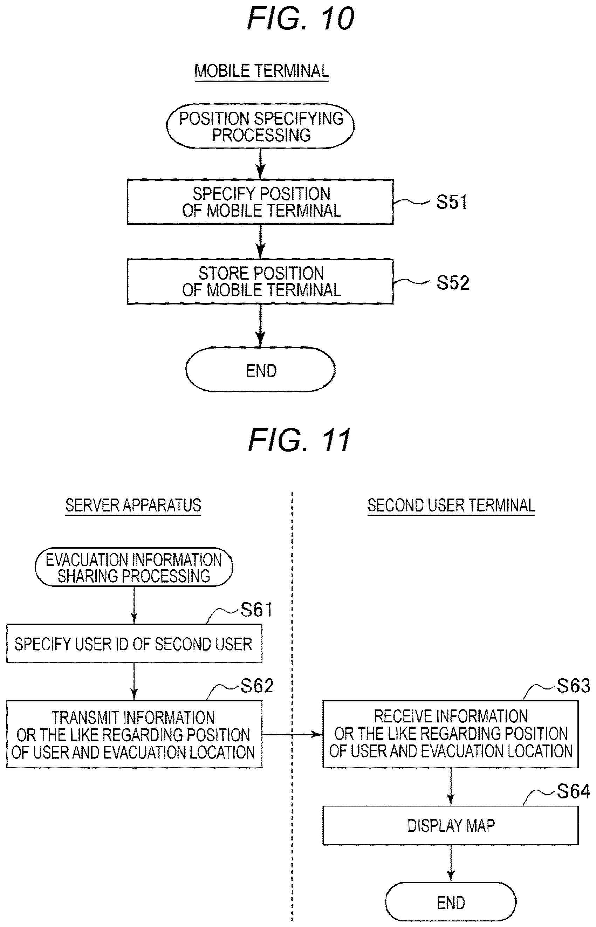

Fig. 10 is a flowchart illustrating the position specifying processing according to the embodiment of the present invention. In the following flowchart, processing for specifying a position in the mobile terminal 2 will be described.

In the position specifying processing, the position of the mobile terminal 2 is specified based on the distance between each of the plurality of wireless devices 1 and the mobile terminal 2 and the position of the wireless device 1 (step S51). The position of the wireless device may be stored in advance in any of the wireless device 1, the mobile terminal 2, and the server apparatus 3 that executes the position specifying processing. Calculation processing for specifying the position of the mobile terminal 2 is not particularly limited.

The specified position of the mobile terminal 2 is stored in the memory in the control unit 21 of the mobile terminal 2 in association with the time information regarding the calculated time (the time information regarding the time at which the distance is calculated or the time information regarding the time at which the position is specified), the identification information of the wireless device 1 (or the positional information of the wireless device 1), and the identification information of the mobile terminal 2 (or the user ID) (step S52). With steps S51 and S52, the position specifying processing ends.

The distance between each of the plurality of wireless devices 1 and the mobile terminal 2, which serves as the basis for specifying the position of the mobile terminal 2 in step S51, is preferably calculated at the same time or a close time (for example, the distance is calculated when the time at which each of the plurality of wireless devices 1 and the mobile terminal 2 measure the propagation time of the information or the signal is the same time or a close time). Here, the close time is not particularly limited, but is preferably a time within a range of a predetermined time from one time. By using the distance between each of the plurality of wireless devices 1 and the mobile terminal calculated at the same time or a close time, a more accurate position at that time can be specified.

Here, the distance between each of the plurality of wireless devices 1 and the mobile terminal 2 is calculated, and the position of the mobile terminal 2 is specified based on the calculated distance. However, when there is a plurality of mobile terminals 2, the distance between the one mobile terminal 2 and each of the plurality of mobile terminals 2 different from the one mobile terminal 2 is calculated, and the position of the one mobile terminal 2 can be specified based on the calculated distance.

Here, in the mobile terminal 2, the position of the mobile terminal 2 is specified. However, instead of the mobile terminal 2, the position of the mobile terminal 2 may be specified by the wireless device 1 or the server apparatus 3 through processing similar to step S51. When the position specifying processing is executed in the wireless device 1 or the server apparatus 3, the information regarding the distance (the distance calculated in step S39) between each of the plurality of wireless devices 1 and the mobile terminal 2 is transmitted to the wireless device 1 or the server apparatus 3 to be used in association with the time information regarding the calculated time, the identification information of the wireless device 1 (or the positional information of the wireless device 1), and the identification information of the mobile terminal 2 (or the user ID). When the position of the mobile terminal 2 is specified by the wireless device 1 or the server apparatus 3, the specified position of the mobile terminal 2 is stored in the memory in the control unit 11 or the storage unit 33 of the server apparatus 3 in association with the time information regarding the calculated time, the identification information of the wireless device 1 (or the positional information of the wireless device 1), and the identification information of the mobile terminal 2 (or the user ID).

[Evacuation Information Sharing Processing]

Next, evacuation information sharing processing will be described. Fig. 11 is a flowchart illustrating an evacuation information sharing processing according to the embodiment of the present invention. The evacuation information sharing processing is executed when a transmission destination is specified in step S5. First, in the server apparatus 3, the user ID of the second user associated with the user ID (that is, the user ID of the mobile terminal 2 and the user ID of the first user) of the transmission destination specified in step S5 is specified (step S61).

The processing for specifying the user ID of the second user in step S61 will be described. The server apparatus 3 specifies the user ID of the second user associated with the user ID with reference to the user ID data table 70. For example, when the user ID "0001" is specified in step S5, the user IDs "0002", "0003", and "0004" are specified as the second users with reference to the user ID data table 70.

Subsequently, the positional information of the user received in step S13 and the information regarding the evacuation location and/or the evacuation route specified in step S14 (that is, the information regarding the evacuation location and/or the evacuation route transmitted to the user in step S15) are transmitted from the server apparatus 3 to the second user terminal 6 (step S62) and received by the second user terminal 6 (step S63). In the second user terminal 6, the map in which the specified evacuation location and the evacuation route information received in step S63 are reflected is displayed on the second user terminal 6 (step S64). Through the above processing of steps S61 to S64, the evacuation information sharing processing ends.

When the position of the mobile terminal 2 changes even after end of the evacuation information sharing processing, it is preferable to execute the evacuation information sharing processing and transmit the information regarding the changed position of the user, the evacuation location transmitted to the user, and the like to the second user terminal 6.

The map displayed in step S64 may be a map similar to the map displayed in step S17 or may be a map in a different display mode in which the movement route of the first user is displayed. The positional information of the first user and the information regarding the specified evacuation location may be displayed as text or may be output by voice. Information regarding the specified evacuation location may be displayed regardless of whether the first user has evacuated. In the system 10, the server apparatus 3 can execute control such that the second user terminal 6 operated by the second user can output information regarding the position of the mobile terminal 2 carried by the first user and/or information regarding the specified evacuation location. That is, in step S64, as in step S17, the information regarding the position of the first user, the evacuation location, and/or the evacuation route may be displayed on the display screen or may be output by voice.

Here, according to the above embodiment, the description has been made on the assumption that the wireless device 1 and the server apparatus 3 are separate devices, but the wireless device 1 and the server apparatus 3 may be integrated. In this case, the processing executed by the server apparatus 3 according to the above embodiment is executed by the wireless device 1. For example, the processing of steps S4 to S7 and S13 to S15 in the evacuation route output processing and the processing of steps S61 and S62 in the evacuation information sharing processing are executed by the wireless device 1. In this case, the processing of steps S2 and S3 can be omitted.

In the above embodiment, the description has been made on the assumption that the processings of steps S3 to S7 and S13 to S15 in the evacuation route output processing are executed by the server apparatus 3, but the processing of steps S3 to S6 and S14 may be executed by the mobile terminal 2. In this case, the processing of steps S7, S8, S12, S13, S15, and S16 can be omitted. The transmission destination specification processing of step S5 may be processing for determining whether the mobile terminal 2 that has received the disaster information is within a predetermined range from the disaster occurrence site. As a result of the determination, when the mobile terminal 2 is within the predetermined range, the processing in and after step S6 is executed, and when the mobile terminal 2 is not within the predetermined range, the processing after step S6 is not executed.

In the above embodiment, the description has been made on the assumption that the processing of steps S61 and S62 in the evacuation information sharing processing is executed by the server apparatus 3, but the processing of step S61 may be executed by the second user terminal 6. In this case, the processing of S62 and S63 can be omitted. By storing the user ID associated with the user ID of the first user in the mobile terminal 2, the user ID of the second user can be specified in step S61.

When the processing of the server apparatus 3 is executed on the mobile terminal 2 or the second user terminal 6, for example, when the first dedicated application is installed on the mobile terminal 2 or the second user terminal 6, information necessary for each processing is preferably downloaded to the installed terminal.

[Second Embodiment]

In a second embodiment, a case where the terminal is a mobile terminal carried by a worker and the system is used for managing the worker will be described.

In the second embodiment, a system according to the present invention is a system that manages working hours, work hours, and/or a task duration of workers. The worker is a person engaged in predetermined business. The employment form of the worker is not particularly limited. For example, the worker includes regular employment and non-regular employment such as a contract employee, a dispatched worker, a part-timer, and a part-timer. The worker may execute business as a business commission or a business contract. In the system according to the present invention, it is preferable that information regarding work, such as working hours of a worker, business (also referred to as a task) of a worker, a time in which the business is executed, and a place where the business is executed (also referred to as a work area and a task area), can be set as appropriate and is determined in advance. The worker executes one or a plurality of tasks during working hours.

The working hour is a time from a work start time to a work end time, and includes a break time. The working hour is also a time from a start time to a finish time determined in advance. The work hours are the work performance of the worker and do not include the break time. The task duration is a time in which a worker executes a predetermined task and is also a time from a predetermined task start time to a task end time. The task content in which the system according to the present invention is used is not particularly limited. For example, tasks in which a worker moves, such as a cleaning task, a serving task, and a delivery task can be given as examples.

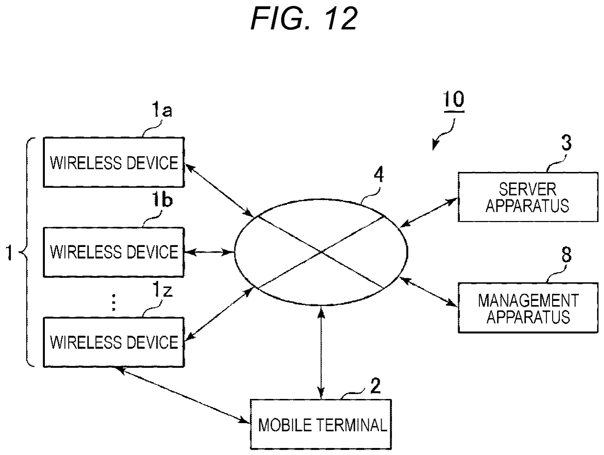

Fig. 12 is a block diagram illustrating a configuration of a system according to an embodiment of the present invention. As illustrated, a system 10 according to the present invention includes at least one computer apparatus. Specifically, a plurality of wireless devices 1 (1a to 1z) and a mobile terminal 2 are included. As illustrated, the system 10 may include a server apparatus 3 and a management apparatus 8. The wireless device 1 and the mobile terminal 2 can be directly communicably connected. The wireless device 1, the mobile terminal 2, and the management apparatus 8 can be communicably connected to the server apparatus 3 via the communication network 4.

[Wireless Device]

Wireless device 1 is a reference device that synchronizes clocks of mobile terminals 2, and one wireless device 1 can also function as a device that synchronizes clocks of mobile terminals 2 with respect to a plurality of mobile terminals 2. The function and the hardware configuration of the wireless device 1 according to the second embodiment can adopt the function and the hardware configuration (Fig. 2) of the wireless device 1 according to the first embodiment within a necessary range. Therefore, repeated description will be omitted.

[Mobile Terminal]

The mobile terminal 2 will be described. In the second embodiment, the mobile terminal 2 is a computer apparatus carried by a worker. The mobile terminal 2 is not particularly limited as long as it can be carried, such as a

## EP 4 692 836 A1

conventional mobile phone, a smartphone, a smart watch, a tablet, or a card-shaped computer apparatus.

The function and hardware configuration of the mobile terminal 2 of the second embodiment can adopt the function and hardware configuration (Fig. 3) of the mobile terminal 2 of the first embodiment within a necessary range. Therefore, repeated description will be omitted.

[Management Apparatus]

The system 10 may include the management apparatus 8. The management apparatus 8 is a terminal operated by an employer who employs workers or a business operator who manages the workers. The management apparatus 8 has, for example, a configuration similar to that of the server apparatus 3. The management apparatus 8 includes, for example, a control unit, an RF chip, an oscillator, a RAM, a storage unit, an input unit, and a display unit and may be connected via a bus. The management apparatus 8 that has a configuration similar to that of the mobile terminal 2 can be used. The management apparatus 8 is not limited to a portable terminal and may be a stationary type desktop personal computer, a notebook type personal computer, or the like.

[Server Apparatus]

Next, the server apparatus will be described. As a function and a hardware configuration of the server apparatus 3 of the second embodiment, the function and the hardware configuration (Fig. 4) of the server apparatus 3 according to the first embodiment can be adopted within a necessary range. Therefore, repeated description will be omitted. In the second embodiment, the control unit 31 reads a program and data from the RAM 32, and executes program execution processing based on information or the like received from the wireless device 1, the mobile terminal 2, or the management apparatus 8.

In the second embodiment, the server apparatus 3 may communicate with the wireless device 1, the mobile terminal 2, or the management apparatus 8 via a smart meter installed in a structure such as a building.

In the second embodiment, the server apparatus 3 is different from the server apparatus 3 according to the first embodiment mainly in that disaster information is not transmitted and received.

Here, before the system 10 is used, a worker who is a user of the mobile terminal 2 installs an application program for using the system 10 (hereinafter referred to as a second dedicated application) in the mobile terminal 2. Identification information for identifying the user (hereinafter also referred to as a worker ID) is assigned to the worker. The worker ID is identification information with which the worker can be identified.

The worker operates the mobile terminal 2 to input information and the like regarding the worker himself or herself. Subsequently, by transmitting the input information to the server apparatus 3, this information is stored in a worker ID data table in association with the worker ID.

The worker ID data table is set in the server apparatus 3. In the worker ID data table, a name, an address, an age, a sex, nationality, transfer destination account information, work information, and the like are stored in association with a worker ID. The information stored in the worker ID data table is not particularly limited, and information such as an emergency contact of the worker can also be stored. Examples of the information regarding work include information regarding a predetermined work day, work period, work area, task content, work start time, work end time, working hours, a method of determining a pay, and payment. The information regarding work is set through an operation input of the management apparatus 8 of an employer or an administrator.

Here, the work area is an area where a worker executes a task. Alternatively, the work area is also referred to as an area where a worker is always located when the worker starts or ends work. The work area is set by the employer or the administrator. The server apparatus 3 stores a work area management table, and stores identification information (also referred to as a work area ID) with which the work area and information regarding the work area can be identified in association. Examples of the information regarding the work area include an address, longitude, and latitude. A position, a range, and/or a shape of the work area are not particularly limited. For example, when the work destination is a building or a factory, the work area may be an entire area of the building or the factory, may be a predetermined range such as a dressing room of the work destination, or may be within a predetermined range (for example, a radius of 50 m from the position of an entrance of the work destination) from a predetermined site of the work destination. The work area may be the same area or a different area in work start and work end.

In the system 10, when the second dedicated application is started, a position of the worker is specified every predetermined time (for example, every 30 seconds) or whenever a predetermined condition is satisfied, and the specified positional information and a time are stored in association. Hereinafter, distance calculation processing (Fig. 9) for calculating a distance between each of the plurality of wireless devices 1 and the mobile terminal 2 based on a propagation time of information or a signal between each of the plurality of wireless devices 1 and the mobile terminal 2 and position specifying processing (Fig. 10) for specifying a position of the mobile terminal 2 based on the distance between each of the plurality of wireless devices 1 and the mobile terminal 2 calculated in the distance calculation processing will be described.

[Distance Calculation Processing]

The distance calculation processing according to an embodiment of the present invention will be described. As the distance calculation processing according to the second embodiment, the distance calculation processing (Fig. 9) according to the first embodiment can be applied. Therefore, repeated description will be omitted.

In the present embodiment, the distance calculation processing and the position specifying processing are executed every predetermined time or whenever a predetermined condition is satisfied. However, it is not always necessary to execute all steps of the distance calculation processing every time. For example, steps related to phase correction in steps S35 and S36 and time correction in steps S37 and S38 can be omitted.

[Position Specifying Processing]

Next, position specifying processing according to an embodiment of the present invention will be described. As the position specifying processing according to the second embodiment, the position specifying processing (Fig. 10) according to the first embodiment can be applied. Therefore, repeated description will be omitted.

According to the second embodiment, in step S52, the specified position of the mobile terminal 2 is stored in the memory in the control unit 21 of the mobile terminal 2 in association with time information regarding the calculated time (time information regarding a time at which the distance is calculated or time information regarding a time at which the position is specified), identification information of the wireless device 1 (or positional information of the wireless device 1), and identification information of the mobile terminal 2 (or a worker ID).

In the second embodiment, when the position specifying processing is executed by the wireless device 1 or the server apparatus 3, information regarding the distance between each of the plurality of wireless devices 1 and the mobile terminal 2 (the distance calculated in step S39) is transmitted to and used by the wireless device 1 or the server apparatus 3 in association with the time information regarding the calculated time, identification information of the wireless device 1 (or positional information of the wireless device 1), and identification information of the mobile terminal 2 (or a worker ID). When the position of the mobile terminal 2 is specified by the wireless device 1 or the server apparatus 3, the specified position of the mobile terminal 2 is stored in a memory in the control unit 11 or a position management table of the storage unit 33 of the server apparatus 3 in association with the time information regarding the calculated time, the identification information of the wireless device 1 (or the positional information of the wireless device 1), and the identification information of the mobile terminal 2 (or the worker ID). The position management table will be described below.

<Example 2: First Embodiment>

[Work Hours Calculation Processing]

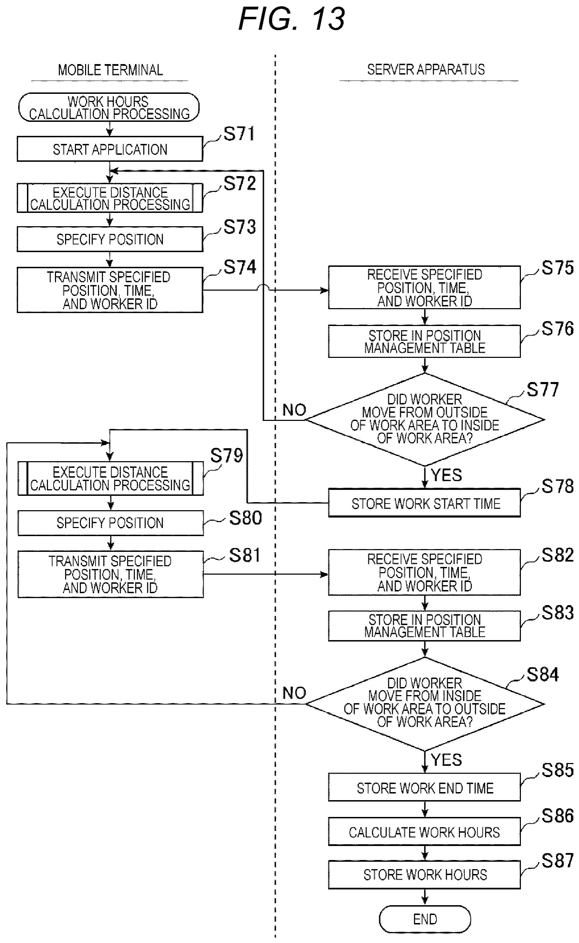

Fig. 13 is a diagram illustrating a flowchart of work hours calculation processing according to the embodiment of the present invention. The work hours calculation processing is processing for calculating work hours of a worker. Hereinafter, a case where a work place of the worker is fixed and the number of work destinations in one day is 1 will be described. At this time, a work area at the work start time and a work area at the work end time are the same area.

First, before the worker arrives at the work area, the worker operates the mobile terminal 2 to start the second dedicated application installed in advance (step S71). In step S71, the worker may start the second dedicated application by himself or herself, or the second dedicated application may be automatically started based on a predetermined condition stored in advance. Examples of the predetermined condition include a specific time such as one hour before a determined work start time or 8:00 on a work day.

After the second dedicated application starts, the mobile terminal 2 executes the above-described distance calculation processing (step S72), and specifies the position of the mobile terminal 2 (step S73). The processing of step S73 can also be said to be the processing of step S51 described above. In the mobile terminal 2, the positional information and the time information of the specified mobile terminal 2 (the time information regarding the time at which the distance is calculated or the time information regarding the time at which the position is specified) and the worker ID are transmitted to the server apparatus 3 (step S74) and are received by the server apparatus 3 (step S75). The server apparatus 3 stores the received positional information, time information, and worker ID in the position management table in association (step S76).

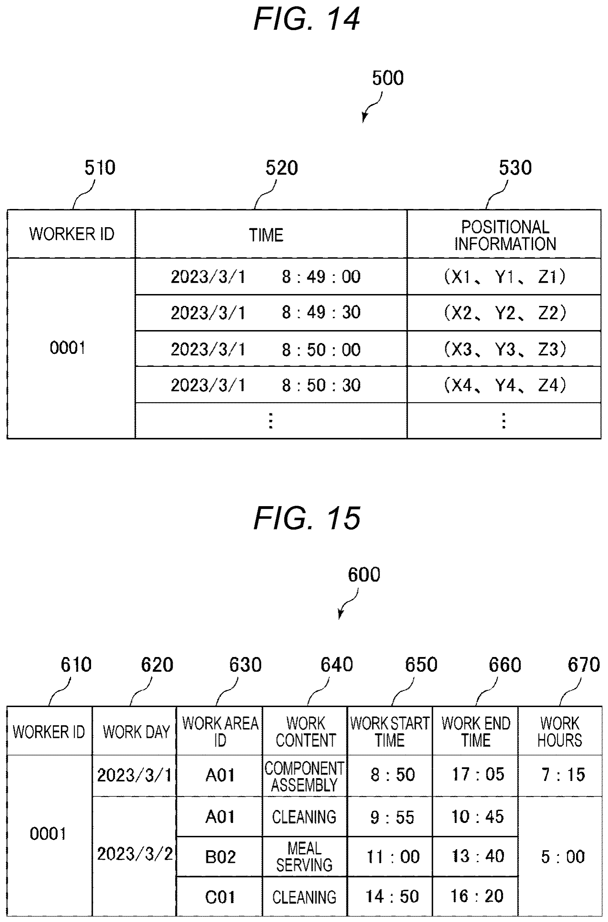

Fig. 14 is a diagram illustrating an example of a position management table according to the embodiment of the present invention. Information of the position management table 500 is stored in the server apparatus 3. Alternatively, it may be stored in the mobile terminal 2. In the position management table 500, a worker ID 510, a time 520 at which the position is specified, and positional information 530 are stored in association. It can also be said that the position management table 500 stores the position specified in step S51 in association with the time specified based on the time at which the propagation time of the information or the signal between each of the plurality of wireless devices 1 and the mobile terminal 2 is measured.

For example, in Fig. 14, the positional information specified at intervals of 30 seconds from a time "2023/3/1 8:49:00" is stored in association with a worker ID "0001". In the position management table 500, stores that the worker corresponding to the worker ID "0001" is located at a place indicated by coordinates (X1, Y1, Z1) at the time "2023/3/1 8:49:00".

Subsequently, the server apparatus 3 determines whether the worker moves from the outside of the work area to the inside of the work area with respect to the work area corresponding to the worker ID (step S77). The work area can be specified by referring to the worker ID data table corresponding to the worker ID.

When the worker does not move from the outside of the work area to the inside of the work area (NO in step S77), the processing of steps S72 to S76 is executed. When the worker moves from the outside of the work area to the inside of the work area (YES in step S77), the server apparatus 3 stores the time at which the worker moves as a work start time on the work day in the worker management table of the server apparatus 3 (step S78).

It can also be said that step S78 is processing for storing the time at which the specified position is moved from the outside of the predetermined work area to the inside of the predetermined work area in the predetermined period as the work start time in the predetermined period, and updating the worker management table. The predetermined period can be a predetermined work day, for example, from 0:00 to 24:00 that is a daily unit, from 5:00 to 24:00 that is a work unit, or the like.

Processing for detecting movement from the outside of the work area to the inside of the work area with respect to the position of the worker in step S77 will be described. The server apparatus 3 can compare the positional information of the work area with the received positional information to detect movement from the outside of the work area to the inside of the work area. Specifically, the server apparatus 3 determines whether the positional information received in step S75 is within the work area. That is, since the second dedicated application starts and the position of the worker is out of the work area in the first processing of step S77, the server apparatus 3 determines that the worker does not move from the outside of the work area to the inside of the work area.

On the other hand, when the positional information at one time is not the inside of the work area but the positional information at time 2 specified after time 1 is in the work area, the server apparatus 3 can detect movement from the outside of the work area to the inside of the work area at time 2. When the position of the worker is inside the work area in the first processing of step S77, the server apparatus 3 may determine that the worker moves from the outside of the work area to the inside of the work area.

For example, when coordinates (X2, Y2, Z2) of the positional information 530 of the position management table 500 are located out of the work area and coordinates (X3, Y3, Z3) are located inside the work area, the server apparatus 3 can detect movement from the outside of the work area to the inside of the work area. As the time at which the worker moves from the outside of the work area to the inside of the work area, "8:50:00" of the time 520 is stored as the work start time. The work start time may change according to a predetermined condition set in advance. For example, when a wage is paid at a predetermined time interval, the work start time may be rounded up to the earliest predetermined time after the time at which the movement to the work area is detected. Specifically, when the wage is paid in units of 15 minutes and movement to the inside of the work area is detected at 8:51, the server apparatus 3 may store 9:00 as the work start time.

Here, the worker management table stores the worker and information regarding working hours specified from the stored positional information in association. Fig. 15 is a diagram illustrating an example of a worker management table according to the embodiment of the present invention. In a worker management table 600 illustrated in Fig. 15, a worker ID 610, a work day 620, a work area ID 630, task content 640, a work start time 650, a work end time 660, and work hours 670 are stored in association. In the worker management table 600, other information may be stored.

In the worker management table 600, the work day is "2023/3/1", and "8:50" is stored as a work start time of the worker ID "0001". The worker ID 610, the work day 620, the work area ID 630, and the task content 640 are information similar to the information stored in association with the worker ID data table.

Subsequently, when the work start time is stored, the mobile terminal 2 executes distance calculation processing (step S79), and the position of the mobile terminal 2 is specified (step S80). In the mobile terminal 2, the positional information, the time information, and the worker ID of the specified mobile terminal 2 are transmitted to the server apparatus 3 (step S81), and are received by the server apparatus 3 (step S82). The server apparatus 3 stores the received positional information, time information, and worker ID in the position management table in association with each other (step S83). The processing of steps S79 to S83 is similar to the processing of steps S72 to S76.

Subsequently, the server apparatus 3 determines whether the worker moves from the inside of the work area to the outside of the work area with respect to the work area corresponding to the worker ID (step S84). When the worker does not move from the inside of the work area to the outside of the work area (NO in step S84), the processing of steps S79 to S83 is executed.

The processing of step S84 can be executed similarly to the processing of S77. The server apparatus 3 can compare the positional information of the work area with the received positional information to detect movement from the inside of the work area to the outside of the work area. Specifically, the server apparatus 3 determines whether the received positional information is within the work area. When the positional information is the inside of the work area, the server apparatus 3 determines that the worker does not move from the inside of the work area to the outside of the work area. Conversely, when the positional information at time 1 is the inside of the work area and the positional information at time 2 stored after time 1 is the outside of the work area, the server apparatus 3 can detect movement from the inside of the work area to the outside of the work area at time 2.

When the worker moves from the inside of the work area to the outside of the work area (YES in step S84), the server apparatus 3 stores the time at which the movement is detected as the work end time on the work day corresponding to the received time information in the worker management table of the server apparatus 3 (step S85). In the worker management table 600, the work day is "2023/3/1", and "17:05" is stored as a work end time of the worker ID "0001". It can also be said that the processing of step S85 is a processing for storing the time at which the specified position moves from the inside of the predetermined work area to the outside of the predetermined work area in the predetermined period as the work end time in the predetermined period and updating the worker management table.

Subsequently, the work start time stored in step S78 and the work end time stored in step S85 are used, and the server apparatus 3 calculates work hours of the worker on the work day (step S86). After the work hours are calculated, the work hours are stored in the worker management table (step S87). Through the above processing of steps S71 to S87, the work hours calculation processing ends. After the work hours calculation processing ends, the second dedicated application may automatically stop.

In step S86, the server apparatus 3 stores the time calculated based on a time passing from the work start time to the work end time in the predetermined period as the work hours of the worker in the predetermined period. For example, in the calculation of the work hours in step S86, a time from the work start time to the work end time may be calculated. The server apparatus 3 may calculate the work hours by subtracting a predetermined time from the time from the work start time to the work end time. Examples of the predetermined time include a predetermined break time (for example, one hour as a lunch break, or the like). In the worker management table 600, as a result obtained by updating the worker management table in step S87, the worker has worked for 7 hours and 15 minutes is stored on 2023/3/1.

In the above description, the configuration in which the information regarding the working hours is stored while specifying the positional information of the worker has been described. However, the processing for calculating the work hours may be executed after the positional information of one day is stored in the position management table 500. The processing for calculating the work hours may be executed once a day at a predetermined time or may be executed every predetermined period. In this case, the server apparatus 3 first specifies the worker ID, and the position management table and the work area corresponding to the work day from the worker ID and the work day in which the work hours are calculated.

The processing for specifying the position management table and the work area may be executed when the mobile terminal 2 inputs an end of the second dedicated application. At this time, information regarding the worker ID may be transmitted from the mobile terminal 2 to the server apparatus 3, and a date on which the information is received in the server apparatus 3 may be set as a work day. Alternatively, when a predetermined condition such as a case where a work hours calculation request is received by the server apparatus 3 through an input of the mobile terminal 2 or the management apparatus 8 is satisfied, processing for specifying the position management table and the work area may be executed. The work hours calculation request includes information regarding the worker ID and the work day.

Then, the processing of steps S77, S78, and S84 to S87 is executed. The movement from the outside of the work area to the inside of the work area and the movement from the inside of the work area to the outside of the work area can be detected by comparing the positional information of the specified work area with the positional information stored in the position management table.

Specifically, the server apparatus 3 determines whether the positional information stored in the position management table 500 is the inside of the work area for each stored time. Then, when the positional information at time 1 is not the inside of the work area but the positional information at time 2 stored after time 1 is the inside of the work area, the server apparatus 3 can detect movement from the outside of the work area to the inside of the work area at time 2. Similarly, when the positional information at time 1 is not the outside of the work area and the positional information at time 2 stored after time 1 is the outside of the work area, the server apparatus 3 can detect movement from the inside of the work area to the outside of the work area at time 2.

When the movement from the outside of the work area to the inside of the work area is detected a plurality of times, the server apparatus 3 may store an earliest time at which the movement is detected as the work start time. Alternatively, the server apparatus 3 may store, as the work start time, a time that is earlier than the work start time stored in the worker ID data table and is close to the work start time. When the movement from the inside of the work area to the outside of the work area is detected a plurality of times, the server apparatus 3 may store a latest time at which the movement is detected as the work end time. Alternatively, the server apparatus 3 may store, as the work end time, a time that is later than the work end time stored in the worker ID data table and is close to the work end time.

In the work hours calculation processing of step S86, a time in which the worker is not in the work area may be subtracted. Specifically, since the time and the positional information are stored in the position management table 500 in association, the server apparatus 3 determines whether the stored positional information is the inside of the work area. Subsequently, the server apparatus 3 can calculate the work hours by calculating a time from the time at which the worker moves from the inside of the work area to the outside of the work area to the time at which the worker moves from the outside of the work area to the inside of the work area, adding up the time at which the worker has been positioned out of the work area in the time from the work start time to the work end time, and subtracting the time.

<Example 2: Second Embodiment>

[Task Duration Calculation Processing]

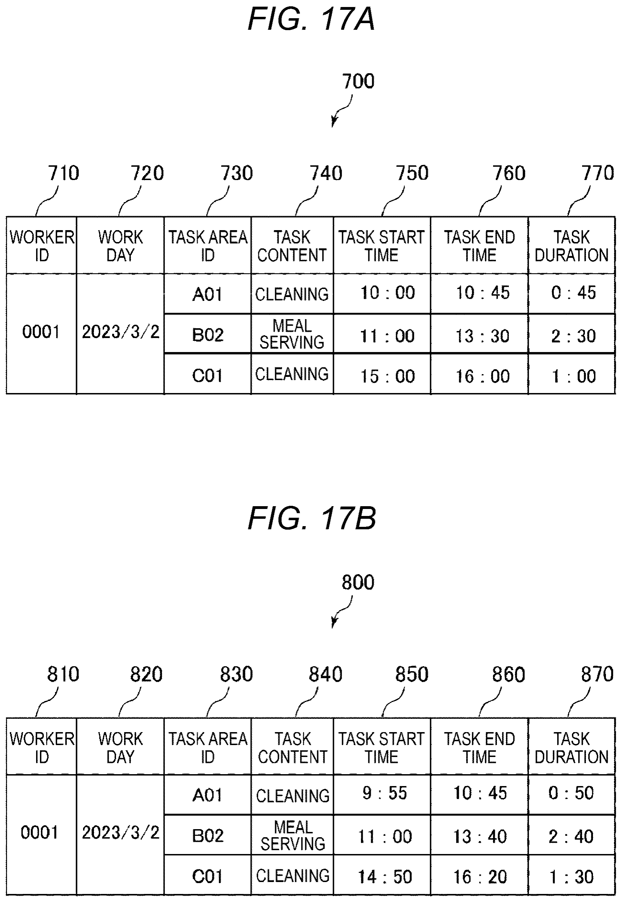

In Example 1 of the second embodiment, the case where there is one work destination in one day has been described. In Example 2 of the second embodiment, a case where there are a plurality of work destinations in one day will be described. The example can be applied to a case where the same task or different tasks are executed at a plurality of places in one day, for example, a case where movement between floors in one building or movement between a plurality of buildings is involved. When there are a plurality of work areas in one day, each work area is also referred to as a task area.
Hereinafter, a case where the worker executes a task in a plurality of task areas within the working hours of one day will be described as an example. The case where there is a plurality of task areas includes a case where any of the task areas is the same, such as a case where the first task area and the last task area are the same.

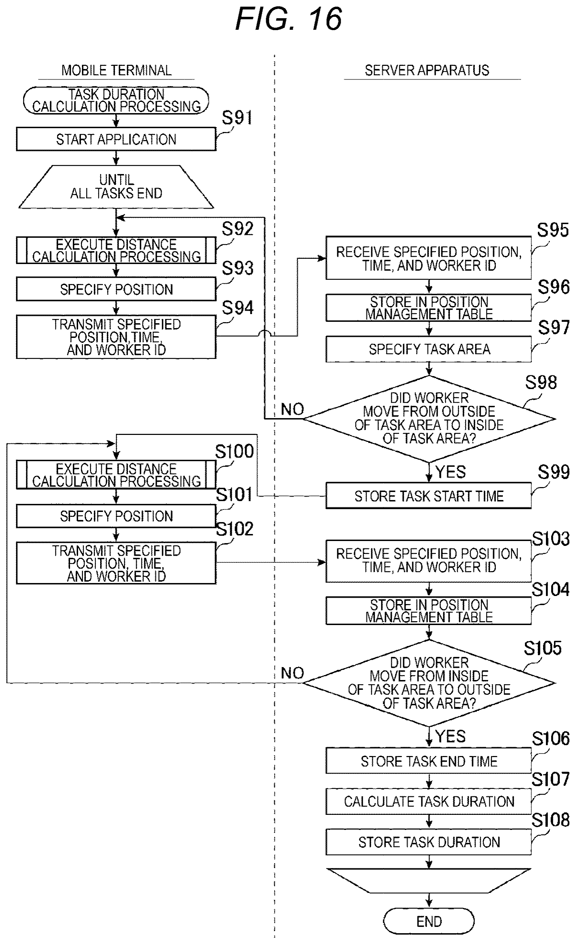

Fig. 16 is a diagram illustrating a flowchart of task duration calculation processing according to the embodiment of the present invention. The task duration calculation processing is processing for calculating a time in which the worker has executed a task for each task. The processing of steps S91 to S96 is similar to the processing of steps S71 to S76, and thus detailed description thereof will be omitted. For the processing of steps S98 to S108, the above description can be referred to within a necessary range.
When step S96 is executed, the server apparatus 3 specifies a task area from the worker ID and the work day received in step S95 (step S97). In step S97, the task area corresponding to the received work day can be specified with reference to the task management master table corresponding to the worker ID.
Here, information similar to that in the worker ID data table is stored in the task management master table, and a task area where the worker should execute a task and a time zone in which the worker should execute a task in the task area are stored as the information regarding the work of the worker. Fig. 17A is a diagram illustrating an example of a task management master table according to the embodiment of the present invention. Information of a task management master table 700 is stored in the server apparatus 3. In the task management master table 700, a worker ID 710, a work day 720, a task area ID 730, task content 740, a task start time 750, a task end time 760, and a task duration 770 are stored in association. In the task management master table 700, other information may be stored. The task area ID is identification information with which the task area can be identified. The task area ID may be assigned with the same ID as the work area ID.
In the task management master table 700, task area IDs "A01", "B02", and "C01" are stored on a work day "2023/3/2" in association with the worker ID "0001". The fact that the worker moves in an order of an area corresponding to "A01", an area corresponding to "B02", and an area corresponding to "C01", and executes tasks of "cleaning", "meal serving", and "cleaning" in each area is stored.
By referring to the task management master table 700, the server apparatus 3 specifies three task areas from the worker ID "0001" and the work day "2023/3/2", and the processing after step S98 is executed in order from the task area of which task start time is the earliest. That is, the processing after step S98 is first executed on the area corresponding to the task area ID "A01".
When the task area is specified, the server apparatus 3 determines whether the worker moves from the outside of the task area to the inside of the task area (step S98). Step S98 can be similarly executed by replacing the work area in step S77 with a task area.
When the worker does not move from the outside of the task area to the inside of the task area (NO in step S98), the processing of steps S92 to S97 is executed. Since the task area has already been specified, the processing of step S97 may be omitted. When the worker moves from the outside of the task area to the inside of the task area (YES in step S98), the server apparatus 3 stores the movement time as a task start time of the specified task area on the work day in the worker management table of the server apparatus 3 (step S99). The processing of step S99 can also be said to be processing for storing the time at which the specified position moves from the outside of the predetermined task area to the inside of the predetermined task area in the predetermined period as the task start time in the predetermined period.
In the task management table, the worker and information regarding the task duration specified from the stored positional information are stored in association. Fig. 17B is a diagram illustrating an example of a task management table according to the embodiment of the present invention. In the task management table 800 illustrated in Fig. 17B, a worker ID 810, a work day 820, a task area ID 830, a task content 840, a task start time 850, a task end time 860, and a task duration 870 are stored in association. In the task management table 800, other information may be stored.

In the task management table 800, "9:55" is stored as a task start time in the task area ID "A01" for which the work day is "2023/3/2" and the worker ID "0001". The worker ID 810, the work day 820, the task area ID 830, and the task content 840 are information similar to the information stored in association with the worker ID data table.

Subsequently, when the task start time is stored, the processing of steps S100 to S104 is executed. Since the processing of steps S100 to S104 is similar to the processing of steps S92 to S96, detailed description thereof will be omitted.

Subsequently, the server apparatus 3 determines whether the worker moves from the inside of the task area to the outside of the task area (step S105). When the worker does not move from the inside of the task area to the outside of the task area (NO in step S105), the processing of steps S100 to S104 is executed. Step S105 can be similarly executed by replacing the work area in step S84 with a task area.

When the worker moves from the inside to the outside of the task area (YES in step S105), the server apparatus 3 stores the time at which the movement is detected in the worker management table of the server apparatus 3 as the task end time of the specified task area on the work day corresponding to the received time information (step S106).

In the task management table 800, "10:45" is stored as a task end time in the task area ID "A01" for which the work day is "2023/3/2" and the worker ID is "0001". The processing of step S106 can also be said to be processing for storing the time at which the specified position moves from the inside of the predetermined task area to the outside of the predetermined task area in the predetermined period as the task end time in the predetermined period.

Subsequently, the server apparatus 3 calculates the task duration of the worker using the task start time stored in step S99 and the task end time stored in step S106 (step S107). Step S107 can be executed similarly to the processing of step S96. When the task duration is calculated, the task duration is stored in the task management table (step S108). The processing of steps S92 to S108 is repeatedly executed until the task duration is stored for all the task areas specified in step S97. The task area is processed in order of the stored task start time 750. The task duration calculation processing ends by the above processing of steps S91 to S108.

After the task duration calculation processing ends, the work hours calculation processing of step S86 and the work hours storage processing of step S87 may be executed. The work hours may be calculated by calculating a time from the earliest task start time to the latest task end time. The server apparatus 3 may execute calculation by subtracting a predetermined time such as a predetermined break time from the time from the earliest task start time to the latest task end time or may execute calculation by adding the calculated task duration.

Here, in the second embodiment, the task area corresponding to the earliest task start time may be different from the task end area corresponding to the latest task end time. That is, the work area may be an area in which the work start time and the work end time are different from each other. In this case, for the above-described work hours calculation processing, the server apparatus 3 can execute step S77 using the work area at the work start time as the first work area and can execute step S84 using the work area at the work end time as the second work area. Accordingly, even when a start location and an end location of work are different, the server apparatus 3 can store accurate work hours based on the position of the worker. For example, in the worker management table 600, on a work day "2023/3/2" with a worker ID "0001", the first work area that is an area corresponding to a work area ID "A01" and the second work area that is an area corresponding to a work area ID "C01" are stored.

In the above description, the configuration in which the information regarding the task duration is stored while the positional information of the worker is specified has been described, but the task duration calculation processing may be executed after the positional information of one day is stored in the position management table 500. In this case, the server apparatus 3 first specifies the position management table and the task area from the worker ID and the work day with which the task duration is calculated.

Then, the processing of steps S98, S99, and S105 to S108 is repeatedly executed for all the task areas until the task duration is stored. The movement from the outside of the task area to the inside of the task area and the movement from the inside of the task area to the outside of the task area can be detected by comparing the positional information of the specified task area with the positional information stored in the position management table.

In the processing of step S98 after the second time, it is preferable to use the positional information stored at a time after the task end time of the task before the task related to the determination when it is determined whether the positional information stored in the position management table 500 is within the task area. Accordingly, it is possible to reduce a burden of the calculation processing of the server apparatus 3.

[Task Determination Processing]

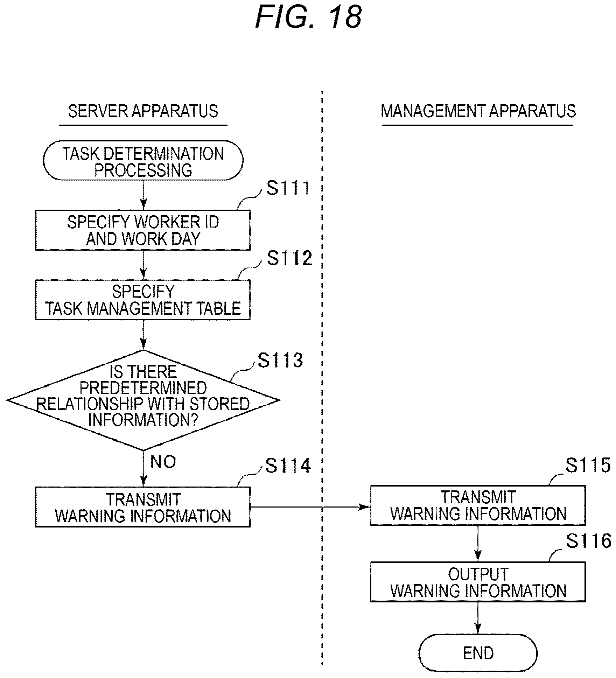

Fig. 18 is a diagram illustrating a flowchart of task determination processing according to the embodiment of the present invention. The task determination processing is processing for determining whether the stored task start time and/or task end time and the task area corresponding to the task start time and/or task end time have a predetermined relationship with the time zone and/or the task area stored in advance. That is, the task determination processing is processing for determining whether the stored information of the task management table has a predetermined relationship

EP 4 692 836 A1

with the information of the predetermined task management master table.

The task determination processing may be executed according to a predetermined condition or may be executed after the processing for storing information regarding the task duration in steps S99, S106, and/or S108. The predetermined condition under which the task determination processing is executed can be set based on information regarding a predetermined task and includes, for example, a case where information regarding a task duration is not stored at a predetermined time at the same time as a predetermined task start time or after a predetermined time has passed from the time.

Hereinafter, a case where it is determined whether the worker is located in the task area at the determined task start time will be described as an example. First, the server apparatus 3 specifies a worker ID and a work day on which the task determination processing is executed (step S111). In step S111, the worker ID and the work day corresponding to the determined task start time can be specified with reference to the task management master table or the worker ID data table.

Subsequently, the server apparatus 3 specifies a task management table corresponding to the specified worker ID and work day (step S112). Subsequently, at the determined task start time, the server apparatus 3 determines whether the information of the stored task management table has a predetermined relationship with the determined task start time (step S113). Step S113 can also be said to be processing for determining whether the position of the worker at the predetermined time stored in the position management table matches a condition stored in advance.

Here, the predetermined relationship is, for example, a relationship indicating that the task start time in the task management table is earlier than the task start time in the task management master table or within a predetermined range (for example, within 5 minutes), or that the task area corresponding to the task start time in the task management table matches the task area corresponding to the task start time in the task management master table. The predetermined relationship is preferably set in advance.

Specifically, since the task start time with the task area ID "A01" in Fig. 17A is 10:00 and the task start time with the task area ID "A01" in Fig. 17B is 9:55, the server apparatus 3 determines that there is a predetermined relationship with the content of the task management master table. When the task start time of the worker in the area of "B02" is 9:55 (the work destination is different) or the task start time in the area of "A01" is 10:10, the server apparatus 3 determines that there is no predetermined relationship with the content of the task management master table.

When the server apparatus 3 determines in step S113 that the information of the stored task management table does not have the predetermined relationship with the content of the task management master table, the server apparatus 3 transmits warning information including information regarding a portion that does not have the predetermined relationship with the content of the task management master table (for example, information indicating that the task area is different) to the management apparatus 8 (step S114), and the management apparatus 8 receives the warning information (step S115). The warning information transmitted in step S114 may be stored in the server apparatus 3 in association with the worker ID. In the second embodiment, the warning information is information including information regarding a portion in which the information of the task management table does not have the predetermined relationship with the content of the task management master table.

The content of the warning information may be changed according to a predetermined condition such as a difference between the information of the task management table and the content of the task management master table. For example, when a time exceeding the task start time of the task management table from the task start time of the task management master table is less than 5 minutes, it is considered that there is a low possibility of a large trouble or the like occurring. Therefore, a warning with a low warning level can be set. For example, for the task start time and the task area ID of the task management table, when the exceeding time is 10 minutes or more or when the work destination is different, it is considered that there is a possibility of a large trouble or the like occurring. Therefore, a warning with a high warning level can be set.

The warning information received in step S115 is output in the management apparatus 8 (step S116). The task determination processing ends by the processing of steps S111 to S116 described above. As an output of the warning information in step S116, text, an image, and/or a moving image may be displayed on a display screen of the management apparatus 8, or a sound, light, and/or vibration may be output. Accordingly, an employer can be effectively notified of a possibility of a trouble such as a late arrival, absence from work, and overtime work of the worker. The employer can know the possibility of trouble without continuing to confirm a work situation by himself or herself. By executing the task determination processing at the same timing as the specification of the position of the worker, the employer can cope with the trouble of the worker.

In the above description, the configuration in which the server apparatus 3 determines whether the task start time has the predetermined relationship has been described. The similarly stored task end time and the task area or the task duration corresponding to the task end time may be determined whether the task start time has the predetermined relationship with the time zone and/or the task area stored in advance. In this case, examples of the predetermined relationship include a relationship indicating that the task end time in the task management table is later than the task end time in the task management master table or within a predetermined range (for example, within 5 minutes), a relationship indicating that the task duration in the task management table is longer than the task duration in the task management master table or within a predetermined range (for example, when the task duration is short, the task duration is within 5 minutes), and a relationship indicating that the task area corresponding to the task end time in the task management table matches the task area corresponding to the task end time in the task management master table.

In the above description, the configuration in which the server apparatus 3 determines whether there is a predetermined relationship with the task area and the time information regarding the task has been described. It may be configured to determine whether there is a predetermined relationship with the work area and the time information regarding the work. Specifically, it is determined whether the stored work start time and/or work end time and the work area corresponding to the work start time and/or work end time have a predetermined relationship with the time zone and/or the work area stored in advance. The determination processing may be executed according to the predetermined condition or may be executed after the processing for storing the information regarding the working hours in steps S78, S85, and/or S87.

At this time, in step S112, the worker management table and the worker ID data table are specified, and the processing after step S113 is executed. Examples of the predetermined relationship include a relationship indicating that the work start time in the worker management table is before the work start time in the worker ID data table or within a predetermined range (for example, within 5 minutes), a relationship indicating that the work end time in the worker management table is later than the work end time in the worker ID data table or within a predetermined range (for example, within 5 minutes), a relationship indicating that the task duration in the worker management table is longer than the work time in the worker ID data table or within a predetermined range (for example, when work hours are short, the work hours are within 5 minutes.), and a relationship indicating that the work area corresponding to the work start time or the work end time in the worker management table matches the work area corresponding to the work start time or the work end time in the worker ID data table.

In the second embodiment, the configuration in which the task of the worker in which there are a plurality of task areas in one day is managed using the preset task management master table has been described. The task management master table may be configured to cooperate with an individual scheduler. The scheduler is filled for each business partner and is shared in an organization. The setting in the task management master table may be completed in the scheduler, for example, by filling a work destination which is a task area, a work destination address, a task start time, and a task end time. The scheduler may be provided in the second dedicated application. Accordingly, even in a case of a type of job such as a sales job in which a work destination changes from moment to moment, setting of the task management master table is not complicated, and the task duration can be managed.

In the above embodiment, the description has been made on the assumption that the wireless device 1 and the server apparatus 3 are separate apparatuses, but the wireless device 1 and the server apparatus 3 may be an integrated apparatus. In this case, the processing executed by the server apparatus 3 according to the above embodiment is executed by the wireless device 1. For example, work hours calculation processing and task duration calculation processing can be executed in the wireless device 1.

In the above embodiment, as described above, it is assumed that the work hours calculation processing and the task duration calculation processing are executed in the server apparatus 3, but the processing may be executed in the mobile terminal 2. In this case, for example, when the second dedicated application is installed on the mobile terminal 2, it is preferable to download information necessary for each processing to the installed terminal.

In the above embodiment, the configuration in which a time at which the worker moves from the outside of the work area or the outside of the task area to the inside of the work area or the inside of the task area is stored as the work start time or the task start time, and a time at which the worker moves from the inside of the work area or the inside of the task area to the outside of the work area or the outside of the task area is stored as the work end time or the task end time has been described. However, the following configuration can be adopted.

For example, the server apparatus 3 may function as a start time storage that stores a time at which the specified position moves from the inside of the predetermined work area or the inside of the task area to the outside of the predetermined work area or the outside of the task area in a predetermined period as a work start time or a task start time in the predetermined period, an end time storage that stores a time at which the specified position moves from the outside of the predetermined work area or the outside of the task area to the inside of the predetermined work area or the inside of the task area in the predetermined period as a work end time or a task end time in the predetermined period, and a work hours storage that stores a time calculated based on a time passing from the work start time to the work end time in the predetermined period as work hours or a task duration of the worker in the predetermined period.

Specifically, the present invention can be applied to a case where the mobile terminal 2 is installed in the predetermined work area or task area, and the worker starts the installed mobile terminal 2 and carries the mobile terminal 2 while working. As the predetermined work area or task area, a room such as a dressing room or a management room where the mobile terminal 2 is stored is stored. The worker takes the installed mobile terminal 2 before working, and starts the second dedicated application by inputting a worker ID and a password to the mobile terminal 2. Then, the worker ID can be transmitted to the server apparatus 3. When the worker ends the business, the worker puts the mobile terminal 2 at an original position.

That is, in the work hours calculation processing, the task duration calculation processing, and the task determination processing described above, similar processing may be executed except that the outside of the work area or the outside of the task area is replaced with the inside of the work area or the inside of the task area, and the inside of the work area or the inside of the task area is replaced with the outside of the work area or the outside of the task area.

An operator of the system 10 can charge a system usage fee to an employer or the like of a company or the like that employs a worker as a reward for using the system 10 in the second embodiment. For example, in a predetermined period (for example, one month), the system usage fee may be calculated according to the number of mobile terminals 2 using the system 10, the number of times the position of the mobile terminal 2 is stored in step S52, the number of times the work hours is stored in step S87, the number of times the task duration is stored in step S108, or the like. The system usage fee may be calculated according to calculation of a time deviation or calculation of a phase deviation between the wireless device 1 in the mobile terminal 2 and the mobile terminal 2, or correction of the time or correction of the phase of the mobile terminal 2.

It is possible to control a frequency at which the time correction or the phase correction is executed, accuracy of the clock of the wireless device 1 that is the basis for calculation of a time deviation or calculation of a phase deviation, a distance between the wireless device 1 and the mobile terminal 2, or a response speed of the wireless device 1, the mobile terminal 2, and/or the server apparatus 3 to be different depending on the system usage fee. A usage fee of the second dedicated application may be added to a power usage fee of a smart meter.

The system 10 may also calculate a wage to be paid to each worker. For example, when the work hours are stored in step S87, the server apparatus 3 executes processing for calculating the wage. The wage is calculated, for example, by multiplying the work hours stored in step S87 by a unit price of work per hour set in advance for each worker. Then, the server apparatus 3 transmits transfer information for instructing the management apparatus 8 to transfer the calculated wage to a transfer destination account stored in the worker ID data table, and the management apparatus 8 receives the transfer information. The transfer information is output by the management apparatus 8, and an employer or the like confirms the output transfer information and executes transfer. The wage may be withdrawn from a preset account. The calculation of the wage may be executed whenever the working hours are stored or may be collectively executed every predetermined period such as every month.

The system 10 may also calculate a transportation cost to be paid to each worker. Since the system 10 can specify that the worker works in the work area, therefore, for example, when the system can specify that the worker works in the work area using an address of the worker stored in the worker ID data table, the system may calculate a transportation cost of a shortest route and a minimum expense to the work area starting from the address of the worker. The calculation of the transportation cost may be executed whenever the work hours are stored or may be collectively executed every predetermined period such as every month. The payment can be executed using not only currency such as Japanese yen but also various points.

The system 10 may also evaluate a work situation of each worker. The system 10 can accurately record the work start time, the work end time, the task start time, and the task end time. It is possible to determine whether work conforming to a predetermined condition is executed using the task management master table or the worker ID data table. Therefore, for example, a work situation of a worker who always works according to the predetermined condition can be evaluated highly, and a work situation of a worker who works in many ways different from the predetermined condition can be evaluated low. Specifically, when the number of warnings in a predetermined period (for example, 6 months) is equal to or less than a predetermined number (for example, once), a work situation of the worker can be highly evaluated. Alternatively, when the number of warnings in a predetermined period (for example, 6 months) is equal to or more than a predetermined number (for example, five times), the work situation of the worker can be evaluated low.

Based on the evaluation, a worker's unit price per hour can be changed periodically. For example, when the number of warnings in a specific work area is large, it is possible to request to take some improvement measures (for example, improvement of movement lines) in the specific work destination. For example, when exceeding of the working hours in the specific work area in a predetermined period (for example, 2 months) is equal to or more than a predetermined time or equal to or more than a predetermined number of people, a notification may be given to the administrator terminal operated by the administrator who manages the worker so that the working hours in the work area are changed, or the evaluation of the work destination corresponding to the work area can be lowered. Accordingly, the worker can avoid working at a work destination with a poor working environment. In this way, not only the evaluation of the work situation of each worker but also the evaluation of each work destination can be executed.

In the system 10, the specified position is stored in association with the time specified based on the time at which the propagation time of information or a signal between each of the plurality of wireless devices and the mobile terminal is measured. Therefore, the movement line of the worker during working can be stored. As a result, by analyzing the stored data, it is possible to use data for improving movement lines in an office or a factory.

[Third Embodiment]

In a third embodiment, a case where the terminal is an order device used for ordering a product or a utilization device used for receiving provision of a service, and the system is used for preventing theft of the order device or the utilization device will be described.

In the third embodiment, the present invention relates to a system including an order device used to order a product or a utilization device used to receive provision of a service. Here, the order device is preferably, for example, a device used when ordering a product in a space such as a store or a facility in which a product or a service is provided to a customer.

The utilization device is preferably, for example, a device used when a user receives a service in a space such as a store or a facility in which a product or a service is provided to a customer. The utilization device is not particularly limited as long as it can be connected to another device of the system by wired or wireless communication. The utilization device may be, for example, a computer apparatus that includes a control unit, such as a wearable terminal such as VR goggles or a smart watch in addition to a computer apparatus that includes an input unit a display unit, and a control unit, such as a smartphone, a tablet terminal, or a notebook computer. More specific examples of the utilization device include VR goggles worn by the user in an attraction facility and used for attraction, a smart watch that manages entrance and exit of a hotel, a ryokan, or an amusement facility, and a smart watch used to measure a heart rate or the like during exercise in a fitness facility or a sports facility.

Hereinafter, a system including an order device will be described. The following description, the following block diagram, and the following flowchart can also be applied to a system including a utilization device as long as they do not contradict the gist of the present invention or the application or purpose of the utilization device.

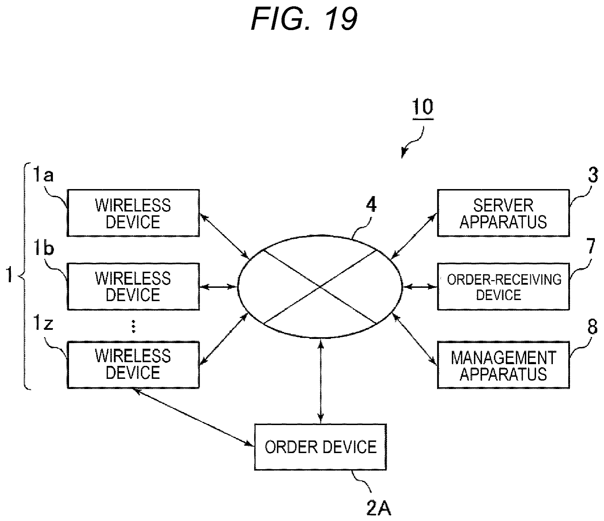

Fig. 19 is a block diagram illustrating a configuration of a system according to the embodiment of the present invention. As illustrated, a system 10 according to the present invention includes a plurality of wireless devices 1a to 1z and an order device 2A. The system 10 may include a server apparatus 3, an order-receiving device 7, a management apparatus 8, and a communication network 4.

In the third embodiment, the "first computer apparatus" is a computer apparatus (that is, a computer apparatus that receives information) to which the information indicating that a position of the order device 2A is out of the predetermined range is transmitted. For example, at least one of the server apparatus 3, the order-receiving device 7, and the management apparatus 8 can serve as the "first computer apparatus". In the third embodiment, the "second computer apparatus" is a computer apparatus (that is, a computer apparatus that receives order information) to which order information from the order device 2A is transmitted. For example, at least one of the server apparatus 3 and the order-receiving device 7 can serve as the "second computer apparatus". One computer apparatus may serve as either the "first computer apparatus" or the "second computer apparatus". For example, the server apparatus 3 or the order-receiving device 7 can serve as either the "first computer apparatus" or the "second computer apparatus". A certain computer apparatus may serve as the "first computer apparatus", and a different computer apparatus may serve as the "second computer apparatus". For example, the management apparatus 8 may serve as the "first computer apparatus", and the order-receiving device 7 may serve as the "second computer apparatus".

The system 10 is not particularly limited as long as the order device 2A is installed in a space where a product or a service is provided to a customer. The "space in which a product or a service is provided to a customer" is not particularly limited. Examples of the space include a restaurant where an order for food and drink is made using a computer terminal, a karaoke shop, and a store such as a supermarket where a terminal to be lent out for allowing a customer to register a purchase scheduled product. A "product or service" provided in the space is not particularly limited.

The wireless devices 1a to 1z and the order device 2A can be directly communicably connected without being involved in the communication network 4. The wireless devices 1a to 1z can be communicably connected to the server apparatus 3 via the communication network 4. The order device 2A can be communicably connected to the server apparatus 3 via the communication network 4. Further, the order-receiving device 7 and the management apparatus 8 can be communicably connected to the server apparatus 3 via the communication network 4.

[Wireless Device]

The wireless device 1 is a device that specifies a position of the order device 2A. The wireless device 1 is a reference device synchronizing clocks of the order device 2A, and one wireless device 1 can also function as a wireless device for a plurality of order devices 2A. Further, even when a certain wireless device 1 functions as the order device 2A, the wireless device can function as a wireless device for another order device.

Further, there are a plurality of order devices 2A for one certain wireless device 1, and each of the plurality of order devices 2A may function as a wireless device for a plurality of other order devices, which form a pyramidal relationship.

A configuration of the wireless device 1 according to the present invention will be described. As a function and a hardware configuration of the wireless device 1 according to the third embodiment, the function and the hardware configuration (Fig. 2) of the wireless device 1 according to the first embodiment can be adopted within a necessary range. Therefore, repeated description will be omitted.

In the third embodiment, a time clocked by the clock 12a is controlled by the control unit 11 such that the time is transmitted to the order device 2A via the RF chip 12. The phase detector 12b detects a phase of a carrier wave included in the information received from the order device 2A, and detects a phase of a signal oscillated by the oscillator 13 in the wireless device 1.

In the third embodiment, a place where the wireless device 1 is installed is not particularly limited. The wireless device 1 may be installed inside or outside of a store where the order device 2A is used. In this case, some of the plurality of wireless devices 1 may be installed outdoors, and another wireless device 1 may be installed indoors. When the plurality of wireless devices 1 are installed, a positional relationship between the plurality of wireless devices 1 to be installed is not particularly limited. For example, in order to cover a region where the position of the order device 2A can be specified, the plurality of wireless devices 1 may be arranged to be located at intersections of grids, or the wireless devices 1 may be arrayed at predetermined intervals in a store where the order device 2A is used or on a corner post or a wall surface of a store to surround the outer periphery of the store and a parking lot. From the viewpoint of reducing obstacles affecting communication, it is preferable to install the plurality of wireless devices 1 inside a store where the order device 2A is installed.

In the third embodiment, positional information regarding installation of the wireless device 1 may be stored in the order device 2A, the server apparatus 3, or the like in association with identification information with which the wireless device 1 can be identified.

[Order Device]

The order device 2A will be described. The order device 2A is installed, for example, on a table of a restaurant. In a supermarket or the like, a basket or a cart used by a customer is arranged and used. The order device 2A is not particularly limited as long as the order device 2A can be connected to another apparatus of the system 10 through wired or wireless communication. The order device 2A is preferably, for example, a computer apparatus including an input unit, a display unit, and a control unit, such as a smartphone, a tablet terminal, or a notebook computer.

The order device 2A is preferably a portable small computer apparatus that has a width of 10 cm or less, a length of 20 cm or less, and a thickness of 1.5 cm or less, such as a smartphone. In the related art, a tablet terminal is often used as an order device. The tablet terminal is large in size. Therefore, when the tablet terminal is provided on a table in a restaurant, there is a problem that a space where a dish is placed on the table becomes narrowed. On the other hand, when a smartphone or the like is used as the order device 2A, there is an advantage that a space where a dish is placed does not become narrowed, but there is a problem that theft becomes easier as compared with a tablet terminal. Accordingly, in particular, when the order device 2A is a small computer apparatus such as a smartphone, the present invention can be used as appropriate.

The order device 2A can be communicably connected to the wireless device 1 without being involved in the communication network 4, and can be communicably connected to the server apparatus 3 via the communication network 4. The order device 2A is a device used to input a product or a service desired by a customer. In the order device 2A, a time of the order device 2A is synchronized based on a time clocked by the wireless device 1, and a phase of a signal generated by the oscillator in the order device 2A is synchronized based on a phase of a signal generated by the oscillator in the wireless device 1.

The order device 2A may function as the wireless device 1 for another order device. A time of the other order device is synchronized based on a time clocked by the order device 2A, and a phase of the signal generated by the oscillator in the other order device is synchronized based on a phase of a signal generated by the oscillator in the order device 2A.

As a function and a hardware configuration of the order device 2A according to the third embodiment, the function and the hardware configuration (Fig. 3) of the mobile terminal 2 according to the first embodiment can be adopted within a necessary range. Therefore, repeated description will be omitted. Fig. 3 can also be said to be a block diagram illustrating a configuration of the order device according to the embodiment of the present invention.

In the third embodiment, the order device 2A may not include a GPS reception unit. The order device 2A may include an imaging unit.

In the third embodiment, the input unit 26 can input a product or a service desired by a customer. Information input by the input unit 26 of the order device 2A is set as order information regarding a product or a service by a customer. The input unit 26 receives an input by pressing a button or the like, an input by an operation on a display screen to be described below, an input by reading a code or the like by the imaging unit, or the like.

In the third embodiment, it is possible to turn on and off a power supply of the order device 2A and execute an input operation on a touch panel.

In the third embodiment, the imaging unit includes a camera, and the camera can image the surroundings of the order device 2A. For example, a 1-dimensional code such as a barcode corresponding to a product or a service desired by a customer or a code such as a 2-dimensional code such as a QR code (registered trademark) may be read by a camera, and order information corresponding to the code may be stored in the storage unit 25.

In the third embodiment, positional information of the order device 2A may be stored in the server apparatus 3 or the like in association with identification information (hereinafter referred to as an order device ID) with which the order device 2A can be identified, identification information (hereinafter referred to as a seat ID) with which a seat can be identified in a store where the order device 2A is arranged, and identification information (hereinafter referred to as a table ID) with which a table can be identified. The order information input by the order device 2A may be stored in the server apparatus 3 or the like in association with the order device ID, the seat ID, or the table ID.

[Server Apparatus]

Next, the server apparatus 3 will be described. As a function and a hardware configuration of the server apparatus 3 according to the third embodiment, the function and the hardware configuration (Fig. 4) of the server apparatus 3 according to the first embodiment can be adopted within a necessary range. Therefore, repeated description will be omitted. In the third embodiment, the control unit 31 reads a program and data from the RAM 32, and executes the program execution processing based on information or the like received from the wireless device 1 or the order device 2A.

In the third embodiment, the server apparatus 3 is different from the server apparatus 3 according to the first embodiment mainly in that disaster information is not transmitted and received and the following processing is executed.

When the system 10 includes the server apparatus 3, the server apparatus 3 can acquire a distance to the wireless device 1 calculated through the distance calculation processing and/or positional information regarding the position of the order device 2A specified through the position specifying processing from the order device 2A. It is also possible to specify a position of the order device 2A from the distance between each of the plurality of wireless devices 1 and the order device 2A calculated through the distance calculation processing. The positional information of the order device 2A is transmitted from the order device 2A to the server apparatus 3 in association with, for example, identification information with which the order device 2A can be identified and a time at which the positional information is specified, and the server apparatus 3 stores the time and the positional information in association. On the other hand, the server apparatus 3 can transmit the positional information of the order device 2A to the management apparatus 8.

The server apparatus 3 determines whether the order device 2A is out of a predetermined range based on the positional information or the specified position. When the order device 2A is out of the predetermined range, the server apparatus 3 can transmit warning information together with positional information to the management apparatus 8. Here, the predetermined range is a range corresponding to a store or an area in which a product or a service is provided in the store, and the outside of the predetermined range is a range corresponding to a region other than the area out of the store or the area in which the product or the service is provided in the store. Any predetermined range can be set for each store. For example, a region within a predetermined distance from any position such as the center of a store may be set as the predetermined range, and positional information such as latitude and longitude for the predetermined range may be set in advance for each store. Whether the order device 2A is out of the predetermined range can be determined based on whether the order device 2A passes through a predetermined place, for example, a straight line or a curve connecting both ends of the opening of an entrance of the store or a straight line or a curve corresponding to the entrance of the store. In the third embodiment, the warning information is information indicating that the order device 2A is out of the predetermined range.

The server apparatus 3 may receive the order information from the order device 2A and store the order information. In this case, the server apparatus 3 may store the order information in association with identification information with which the order device 2A can be identified. The order information is transmitted from the order device 2A to the order-receiving device 7 via the server apparatus 3.

The server apparatus 3 may communicate with the wireless device 1, the order device 2A, the order-receiving device 7, or the management apparatus 8 via the communication network 4. The server apparatus 3 may communicate with the wireless device 1, the order device 2A, the order-receiving device 7, or the management apparatus 8 via an optical fiber provided side by side with a power transmission tower.

[Order-receiving Device]

Next, the order-receiving device 7 will be described. The order-receiving device 7 receives and displays order information regarding a product or a service input by the order device 2A. The order-receiving device 7 may directly receive the order information from the order device 2A or may receive the order information via the server apparatus 3. The received order information includes a seat ID (or an order device ID) corresponding to the order device 2A. Information regarding an ordered product or service based on the order information and a seat ID (or an order device ID) are displayed on the order-receiving device 7. In the case of a restaurant, the order-receiving device 7 is installed in a kitchen, and a store clerk who looks at the order information prepares an ordered dish. Then, the store clerk carries a dish to a table (or a seat) corresponding to the seat ID (or the order device ID). The order-receiving device 7 can also collect orders with the same seat ID (or order device ID) and execute accounting.

The order-receiving device 7 includes, for example, a control unit, a RAM, a storage unit, a communication interface, an input unit, and a display unit that are connected via an internal bus. The control unit of the order-receiving device 7 includes a CPU and a ROM and executes a program stored in the storage unit to control the order-receiving device 7. The RAM is a work area of the control unit. The storage unit is a storage region where programs and data are stored. The control unit reads a program and data from the RAM, and executes program execution processing based on information or the like received from the server apparatus 3.

The display unit of the order-receiving device 7 may be a touch panel in which the display screen of the display unit includes a touch sensor. The touch panel may be a contact type or a contactless type. The touch panel may also function as an input unit.

[Management Apparatus]

Next, the management apparatus 8 will be described. The management apparatus 8 is an apparatus that receives information indicating that the position of the order device 2A is out of the predetermined range from the server apparatus 3 or the order device 2A and displays the information when the position of the order device 2A is out of the predetermined range. The management apparatus 8 is an apparatus owned by an administrator who manages or monitors the order device 2A. The administrator may be a clerk of a store where the order device 2A is installed or may be a person in charge of a security company.

The management apparatus 8 can establish communication connection with the order device 2A directly or with the server apparatus 3 via the communication network 4. The management apparatus 8 may manage one order device 2A or may manage a plurality of order devices 2A.

The management apparatus 8 includes, for example, a control unit, a RAM, a storage unit, a communication interface, an input unit, and a display unit that are connected by an internal bus. The control unit of the management apparatus 8 includes a CPU and a ROM, executes a program stored in the storage unit, and controls the management apparatus 8. The RAM is a work area of the control unit. The storage unit is a storage region where programs and data are stored. The control unit reads a program and data from the RAM, and executes program execution processing based on information or the like received from the server apparatus 3.

The display unit of the management apparatus 8 may be a touch panel in which the display screen of the display unit includes a touch sensor. The touch panel may be a contact type or a contactless type. The touch panel may also function as an input unit.

In the system 10, the order-receiving device 7 and the management apparatus 8 may be separate terminals, or the same one terminal may serve as an order-receiving device and a management apparatus.

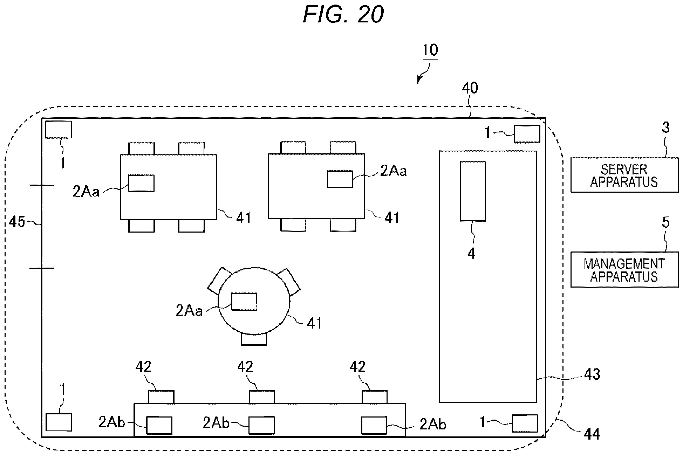

Next, a usage mode of the system according to the embodiment of the present invention will be described. Fig. 20 is a diagram illustrating an example of a usage mode of the system according to the embodiment of the present invention. In Fig. 20, a case where the system 10 is applied to a restaurant serving food and drink will be described. As illustrated, the system 10 includes the wireless devices 1 at four corners of the store 40. An order device 2Aa associated with identification information (table ID) with which a table can be identified is provided in a table 41 used by a user. An order device 2Ab associated with identification information (seat ID) with which a seat 42 can be identified may be provided. The order-receiving device 7 is provided in a kitchen area 43 of the store. The server apparatus 3 and the management apparatus 8 may be provided outside of the store 40.

[Warning Display Processing]

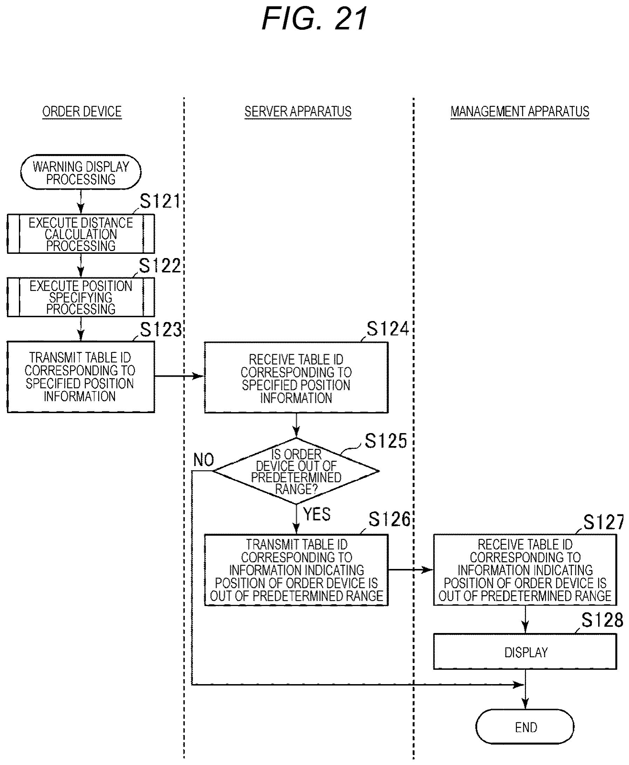

Next, warning display processing according to an embodiment of the present invention will be described. The warning display processing is processing for displaying warning information indicating that the order device is out of the predetermined range when the position of the order device is out of the predetermined range based on the position of the order device. For example, in Fig. 20, when it is determined that the order device 2Aa or 2Ab is located outside of the predetermined range 44, warning information is displayed on the management apparatus 8. For example, when it is determined that the order device 2Aa or 2Ab has passed the straight line 45 connecting both ends of the opening of the entrance of the store to the outside of the store, warning information is displayed on the management apparatus 8. Hereinafter, processing for displaying a warning will be described. Fig. 21 is a flowchart illustrating warning display processing according to the embodiment of the present invention.

First, the order device 2A communicates with the plurality of wireless devices 1 and executes distance calculation processing for calculating a distance to each wireless device 1 (step S121). The distance calculation processing in step S121 is processing for calculating a distance between the wireless device and the order device based on a propagation time of information or a signal between the wireless device and the order device. Details of the distance calculation processing in step S121 will be described below.

Next, in the warning display processing, position specifying processing for specifying the position of the order device 2A is executed (step S122). The position specifying processing is processing for specifying the position of the order device based on the distance between the wireless device and the order device calculated in the distance calculation processing. Details of the position specifying processing in step S122 will be described below.

Then, in the warning display processing, the positional information of the specified order device 2A and the table ID (seat ID) corresponding to the order device 2A are transmitted to the server apparatus 3 (step S123). The server apparatus 3 receives the transmitted positional information of the order device 2A and the table ID (seat ID) corresponding to the order device 2A (step S124).

Subsequently, the server apparatus 3 determines whether the order device 2A is out of a predetermined range based on the received positional information of the order device 2A and the table ID (seat ID) corresponding to the order device 2A (step S125). In step S125, the position of the order device that is out of the predetermined range means that a range assumed to be used is set in advance for one order device, and the order device is located out of the set range. For example, in Fig. 20, when it is assumed that the order device 2A is used within a predetermined range 44 of the store 40, the position of the order device 2A is located out of the predetermined range 44. For example, in Fig. 20, when the order device 2A is assumed to be used on a store of a straight line 45 connecting both ends of the opening of the store entrance, the position of the order device 2A passes through the straight line 45 from the inside of the store to the outside of the store.

When it is determined in step S125 that the position of the order device 2A is out of the predetermined range (YES in step S125), the server apparatus 3 transmits information (warning information) indicating that the position of the order device 2A is out of the predetermined range to the management apparatus 8 (step S126). The warning information includes a table ID (or a seat ID) corresponding to the order device 2A. The warning information may include positional information of the order device 2A or time information regarding a time at which the position of the order device 2A is calculated.

Subsequently, the management apparatus 8 receives the transmitted information indicating that the position of the order device 2A is out of the predetermined range and the table ID (or the seat ID) corresponding to the order device 2A (step S127) and displays the received information regarding the display unit of the management apparatus 8 (step S128). Even after the warning information is displayed in step S128, the position specifying processing is continuously executed, and it is also possible to display the position of the order device 2A in real time and a state of a change in the position so that the position and the state can be confirmed. Accordingly, the administrator who manages or monitors the order device 2A can take necessary measures or actions according to the information displayed on the management apparatus 8.

When it is determined in step S125 that the position of the order device 2A is within the predetermined range (NO in step S125), a series of warning display processing is ended.

Here, the mode in which, when it is determined in step S125 that the position of the order device 2A is out of the predetermined range, the server apparatus 3 transmits the information (warning information) indicating that the position of the order device 2A is out of the predetermined range to the management apparatus 8 has been described. However, the present invention is not limited to the case where the position of the order device 2A is out of the predetermined range, and the position of the order device 2A may be transmitted to the server apparatus 3 or the management apparatus 8 so that the administrator can normally confirm the position of the order device 2A.

In step S126, the mode in which the server apparatus 3 transmits the information (warning information) indicating that the position of the order device 2A is out of the predetermined range to the management apparatus 8 has been described, but the server apparatus 3 may transmit the information (warning information) indicating that the position of the order device is out of the predetermined range to the order device 2A. In this case, the order device 2A may include a speaker unit capable of emitting a sound and may emit a predetermined sound based on reception of the warning information.

In the above description, the mode in which the server apparatus 3 determines in step S125 whether the position of the order device 2A is out of the predetermined range has been described, but the order device 2A may determine whether the position of the order device 2A is out of the predetermined range. In this case, in a mode in which the order device 2A includes a speaker unit capable of emitting a sound and emits a predetermined sound based on the reception of the warning information, a time until a sound of the warning is emitted can be made shorter than in a case where the server apparatus 3 executes the determination.

[Distance Calculation Processing]

The distance calculation processing in step S121 will be described. As distance calculation processing in the third embodiment, the distance calculation processing in the first embodiment (Fig. 9) can be applied. Therefore, repeated description will be omitted.

In the third embodiment, the distance calculation processing can be executed, for example, every predetermined time or whenever a predetermined condition is satisfied. For example, when power of the order device 2A is turned on, the distance calculation processing in steps S21 to S40 can be set to be started every predetermined time (for example, every 5 minutes) after the power is turned on. It can be set such that the position specifying processing is executed within a predetermined time (for example, within a few seconds) after the distance calculation processing is executed. In the case of the settings, since the order device 2A moves slightly or does not move from the position specified in the distance calculation processing, it is possible to curb a deviation between the position specified in the distance calculation processing and the position of the order device 2A in real time.

[Position Specifying Processing]

The position specifying processing in step S122 will be described. As the position specifying processing according to the third embodiment, the position specifying processing (Fig. 10) according to the first embodiment can be applied. Therefore, repeated description will be omitted. In the third embodiment, the position specifying processing is processing for specifying the position of the order device based on a distance between the wireless device calculated in the distance calculation processing and the order device.

In the third embodiment, the system 10 includes at least three wireless devices 1. For example, when a store has only one floor and the wireless device and the order device are at the same height, the position of the order device is specified based on the three wireless devices. When the heights of the wireless device and the order device are different, for example, when the user holds the order device 2A in the store to freely operate the order device 2A, the position of the order device is specified based on the four wireless devices.

The position specifying processing illustrated in Fig. 10 can be executed by, for example, any of the wireless device 1, the order device 2A, and the server apparatus 3. When the position specifying processing is executed in the wireless device 1 and the server apparatus 3, information regarding the distance (the distance calculated in step S39) between each of the plurality of wireless devices 1 and the order device 2A is transmitted to the server apparatus 3 to be used in association with time information regarding the calculated time, identification information of the wireless device 1 (or positional information of the wireless device 1), and identification information capable of identifying the order device 2A.

In the third embodiment, in step S52, the position of the order device 2A specified in step S51 is stored in a memory in the control unit 11 of the wireless device 1, a memory in the control unit 21 of the order device 2A, the storage unit 25 of the order device 2A, or the storage unit 33 of the server apparatus 3 in association with time information regarding the calculated time (the time information regarding the time at which the distance is calculated or the time information regarding the time at which the position is specified), the identification information of the wireless device 1 (or the positional information of the wireless device 1), and the identification information with which the order device 2A can be identified. More preferably, the storage unit 33 of the server apparatus 3 preferably stores time information regarding the specified position of the order device 2A and the calculated time in association with the order device ID.

[Order processing]

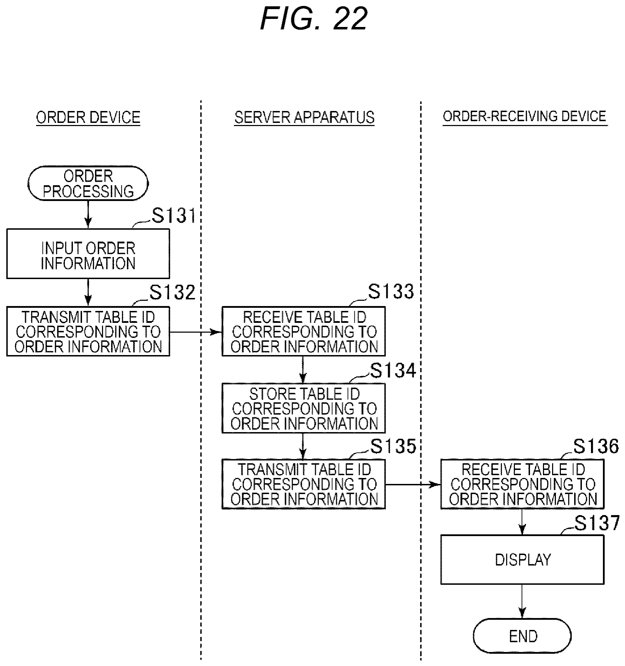

The order device 2A is usually used to order a product or a service in a used store. Fig. 22 is a flowchart illustrating order processing according to the embodiment of the present invention. First, in the order device 2A, order information regarding a product or a service is input by a user's operation (step S131). The order device 2A transmits the order information regarding a product or a service and a table ID (or a seat ID) corresponding to the order device 2A to the server apparatus 3 in response to an operation of the user to the order device 2A (step S132). The order information may include a time at which the order device 2A transmits the order information. The order device ID may be transmitted to the server apparatus 3 instead of the table ID or the seat ID or along with the table ID or the seat ID.

The server apparatus 3 receives the transmitted order information and the table ID (or a seat ID) corresponding to the order device 2A and stores the order information and the table ID in the storage unit 33 of the server apparatus 3 (steps S133 and S134). Subsequently, the server apparatus 3 transmits the order information and the table ID (or the seat ID) corresponding to the order device 2A to the order-receiving device 7 (step S135).

The order-receiving device 7 receives the transmitted order information and the table ID (or the seat ID) corresponding to the order device 2A, and causes the display unit of the order-receiving device 7 to display the order information and the table ID (or the seat ID) (steps S136 and S137). A store clerk seeing the order information prepares an ordered dish or prepares to provide a service or a product to the user based on the order information. Then, the food, the product, or the like is carried to a table (or a seat) corresponding to the table ID (or the seat ID). It is also possible to collect orders of the same table ID (or seat ID) in the order-receiving device 7 and execute accounting. Alternatively, the order-receiving device 7 may collect orders with the same order device ID and execute accounting.

Here, the mode in which, in the order processing, the server apparatus 3 is included and the order information or the like are received by the server apparatus 3 has been described, but the order information or the like may be directly transmitted to the order-receiving device 7. Specifically, the system 10 may not include the server apparatus 3, and the order-receiving device 7 may receive the order information and the table ID (or the seat ID or the order device ID) input by the order device 2A. The order information and the table ID (or the seat ID or the order device ID) input by the order device 2A may be received by the management apparatus 8 via the server apparatus 3. In this case, the management apparatus 8 also functions as an order-receiving device.

[Fourth Embodiment]

In a fourth embodiment, a case where the terminal is a first user terminal operated by a first user and the system is used for managing post messages will be described.

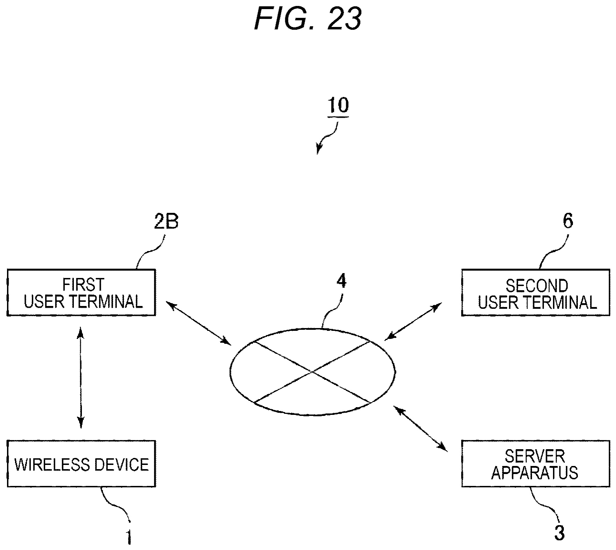

Fig. 23 is a block diagram illustrating a configuration of a system according to an embodiment of the present invention. In Fig. 23, the system 10 includes a first user terminal 2B, a second user terminal 6, a wireless device 1, and a server apparatus 3.

The first user terminal 2B and the second user terminal 6 are terminal apparatuses operated by a user who uses the system 10. The system 10 may include three or more user terminals. In the system 10, the user can post a message and view post messages. Here, of the user terminals included in the system 10, a user terminal operated by a user who posts a message to an SNS or the like (hereinafter also referred to as a poster) is referred to as a first user terminal 2B, and a user terminal operated by a user other than the poster is referred to as a second user terminal 6. The same user terminal may function as the first user terminal 2B or may function as the second user terminal 6. Hereinafter, a user who operates the first user terminal 2B is also referred to as a first user. Hereinafter, a user who operates the second user terminal 6 is also referred to as a second user.

The first user terminal 2B and the wireless device 1 can be directly connected to each other through wireless communication. Although not illustrated, the second user terminal 6 and the wireless device 1 may also be directly connected to each other through wireless communication. The system 10 may include two or more wireless devices 1. In this case, each of the two or more wireless devices 1 and the first user terminal 2B and/or the second user terminal 6 may be directly connected to each other through wireless communication.

The first user terminal 2B, the second user terminal 6, and the server apparatus 3 can communicate with each other via the communication network 4. Although not illustrated, the wireless device 1 may also be communicably connected to the first user terminal 2B, the second user terminal 6, and the server apparatus 3 via the communication network 4.

The server apparatus 3 may be distributed to a plurality of computer apparatuses to function. For example, instead of the server apparatus 3, a distributed ledger technique such as a blockchain may be used.

[First User Terminal]

As a function and a hardware configuration of the first user terminal 2B according to the fourth embodiment, the function and the hardware configuration (Fig. 3) of the mobile terminal 2 of the first embodiment can be adopted within a necessary range. Therefore, repeated description will be omitted.

[Second User Terminal]

As the hardware configuration of the second user terminal 6, the description of the hardware configuration of the first user terminal 2B or the mobile terminal 2 according to the first embodiment can be adopted as appropriate within a necessary range.

[Wireless Device]

A configuration of the wireless device 1 will be described. A function and a hardware configuration of the wireless device 1 according to the fourth embodiment, the function and the hardware configuration (Fig. 2) of the wireless device 1 of the first embodiment can be adopted within a necessary range. Therefore, repeated description will be omitted.

In the fourth embodiment, a time clocked by the clock 12a is controlled by the control unit 11 such that the time is transmitted to the first user terminal 2B via the RF chip 12. The phase detector 12b detects a phase of a carrier wave included in the information received from the first user terminal 2B, and detects a phase of the signal oscillated by the oscillator 13 in the wireless device 1.

[Server Apparatus]

Next, the server apparatus 3 will be described. As a function and a hardware configuration of the server apparatus 3 according to the fourth embodiment, the function and the hardware configuration (Fig. 4) of the server apparatus 3 of the first embodiment can be adopted within a necessary range. Therefore, repeated description will be omitted. In the fourth embodiment, the control unit 31 reads a program and data from the RAM 32 and executes the program execution processing based on information or the like received from the first user terminal 2B, the second user terminal 6, or the like.

In the fourth embodiment, the program may be stored in a recording medium such as a CD-ROM. In this case, the program stored in the recording medium may be installed in the first user terminal 2B, the second user terminal 6, the wireless device 1, the server apparatus 3, or the like to execute a predetermined function.

Alternatively, the program may be delivered from a computer apparatus outside of the system. In this case, a program delivered from a computer apparatus outside of the system may be installed in the first user terminal 2B, the second user terminal 6, the wireless device 1, the server apparatus 3, or the like to execute a predetermined function.

In the fourth embodiment, the server apparatus 3 is different from the server apparatus 3 according to the first embodiment mainly in that disaster information is not transmitted and received.

In the fourth exemplary embodiment, the system 10 may include at least one computer apparatus. For example, the system 10 may include the server apparatus 3. The first user terminal 2B, the second user terminal 6, and/or the wireless device 1 may be regarded as a computer apparatus outside of the system 10.

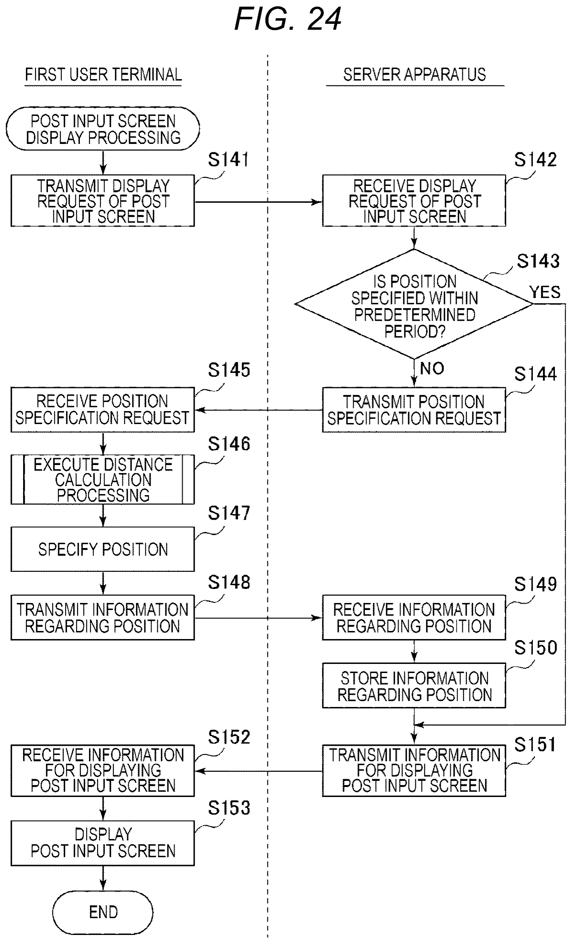

Hereinafter, a mode will be described in which the system 10 according to the present invention accepts posting of a message from the first user of which a position has been specified, and allows the second user to browse the message. A dedicated application for using the system 10 may be installed in the user terminal. Fig. 24 is a diagram illustrating a flowchart of post input screen display processing according to the embodiment of the present invention.

[Post Input Screen Display Processing]

First, a request for displaying a post input screen (hereinafter also referred to as a display request of a post input screen) for inputting a posted message (hereinafter also referred to as a post message) is transmitted from the first user terminal 2B to the server apparatus 3 (step S141). The server apparatus 3 receives the transmitted display request for the post input screen (step S142). In the server apparatus 3, it is determined whether the position of the first user terminal 2B has been specified within a predetermined period for the first user terminal 2B that has transmitted the display request for the post input screen (step S143).

When it is determined in step S143 that the position of the first user terminal 2B has not been specified within the predetermined period (NO in step S143), a request for specifying the position of the first user terminal 2B (hereinafter also referred to as a position specification request) is transmitted from the server apparatus 3 to the first user terminal 2B (step S144). The first user terminal 2B receives the transmitted position specification request (step S145). In the first user terminal 2B, distance calculation processing is executed (step S146). Then, in the first user terminal 2B, the position of the first user terminal 2B is specified (step S147). Information regarding the specified position (hereinafter also referred to as positional information) is transmitted from the first user terminal 2B to the server apparatus 3 (step S148). The server apparatus 3 receives the transmitted positional information (step S149). In the server apparatus 3, the received positional information is stored (step S150). Information for displaying the post input screen is transmitted from the server apparatus 3 to the first user terminal 2B (step S151). In the first user terminal 2B, the transmitted information for displaying the post input screen is received (step S152). In the first user terminal 2B, the post input screen is displayed (step S153), and the post input screen display processing ends.

Conversely, when it is determined in step S143 that the position of the first user terminal 2B has been specified within the predetermined period (YES in step S143), information for displaying the post input screen is transmitted from the server apparatus 3 to the first user terminal 2B without executing steps S144 to S150 (step S151). In the first user terminal 2B, the transmitted information for displaying the post input screen is received (step S152). In the first user terminal 2B, the post input screen is displayed (step S153), and the post input screen display processing ends.

In step S141, for example, a request for displaying the post input screen may be transmitted by selecting an icon for displaying the post input screen displayed on the display screen of the first user terminal 2B.

Further, in step S141, identification information with which the first user can be identified is preferably transmitted together with the request of displaying the post input screen.

The "within the predetermined period" in step S143 may be within a period from the current time back by a predetermined time. In this case, "the current time" may be a time at which the determination of step S143 is started. The "predetermined time" is not particularly limited, and can be designed as appropriate. The "predetermined time" may be, for example, 1 hour, 3 hours, 12 hours, 1 day, 3 days, or the like.

The server apparatus 3 preferably stores the position of the user terminal specified in the system 10 and operated by the user and a time at which the position is specified in association with the identification information of the user. The position of the user terminal stored in the server apparatus 3 and the time at which the position is specified may be specified in response to a position specification request from the server apparatus 3 as in steps S144 to S150 or may be specified at another timing. The server apparatus 3 may store not only the first user terminal 2B but also the position of the second user terminal 6 and the time at which the position is specified. In step S143, it may be determined whether the time at which the position of the first user terminal 2B corresponding to the identification information of the first user received in step S141 is specified is a time within a predetermined period.

The "case where it is determined that the position of the first user terminal 2B is not specified within the predetermined period" in step S143 can include a case where the position of the first user terminal 2B has never been specified, and a case where the time at which the latest position of the first user terminal 2B has been specified is before the predetermined period.

When the first user terminal 2B receives the position specification request in step S145, the distance calculation processing and the position specification in step S146 and/or S147 may be automatically executed in the first user terminal 2B, and a screen for selecting whether to specify the position may be displayed in the first user terminal 2B. In this case, when it is selected to specify the position, steps S146 and/or S147 may be executed. When it is selected not to specify the position, the post input screen display processing may be terminated without executing steps S146 to S153.

[Distance Calculation Processing]

The distance calculation processing in step S146 is processing for calculating a distance between the wireless device 1 and the first user terminal 2B based on the propagation time of information or a signal between the wireless device 1 and the first user terminal 2B. The wireless device 1 is installed at a predetermined location. The location at which the wireless device 1 is installed may be, for example, a power transmission tower or a utility pole. The position where the wireless device 1 is installed (for example, latitude, longitude, and altitude) is preferably stored in advance in a memory in the control unit 11 of the wireless device 1.

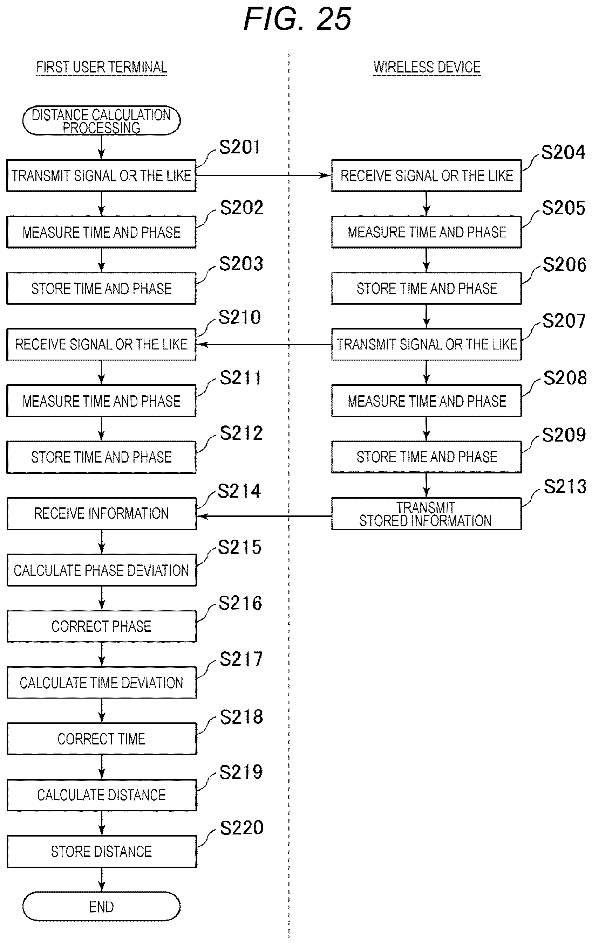

Fig. 25 is a flowchart illustrating distance calculation processing according to the embodiment of the present invention.

First, the first user terminal 2B transmits information or a signal to the wireless device 1 (step S201). The information or the signal transmitted from the first user terminal 2B to the wireless device 1 is not particularly limited. The first user terminal 2B clocks a time at which the information or the signal is transmitted in step S201 and measures a phase at the transmission (step S202). Then, the clocked time and the measured phase are stored in the storage unit 25 (step S203).

Subsequently, the wireless device 1 receives the information or the signal from the first user terminal 2B (step S204). The wireless device 1 clocks a time at which the information or the signal is received in step S204 and measures a phase at the reception (step S205). Then, the clocked time and the measured phase are stored in a memory in the control unit 11 (step S206).

Next, the wireless device 1 transmits information or a signal to the first user terminal 2B (step S207). The information or the signal transmitted from the wireless device 1 to the first user terminal 2B is not particularly limited. The wireless device 1 clocks a time at which the information or the signal is transmitted in step S207 and measures the phase at the transmission (step S208). Then, the clocked time and the measured phase is stored in the memory in the control unit 11 (step S209).

The first user terminal 2B receives the information or the signal transmitted in step S207 (step S210). The first user terminal 2B clocks the time at which the information or the signal is received in step S210 and measures the phase at the reception (step S211). Then, the clocked time and the measured phase are stored in the storage unit 25 (step S212).

After the step S209, in the wireless device 1, the RF chip 12 transmits information regarding the time and the phase at the reception of the signal in step S204 stored in step S206 and information regarding the time and the phase at the transmission of the signal in step S207 stored in step S209 to the first user terminal 2B (step S213).

Then, the first user terminal 2B receives the information regarding the time at which the signal is received and the phase at the reception in step S204 and the information stored in step S 209, the information regarding the time at which the signal is transmitted and the phase at the reception in step S207 (step S214).

Subsequently, the control unit 21 of the first user terminal 2B calculates a phase deviation between the phase of the signal generated by the oscillator 23 of the first user terminal 2B and the phase of the signal generated by the oscillator 13 of the wireless device 1 (step S215). The phase deviation can be calculated based on a phase difference between a phase of a carrier wave included in information or a signal transmitted from the first user terminal 2B to the wireless device 1 and a phase of a signal oscillated by the oscillator 13 of the wireless device 1 when the wireless device 1 receives the information or the signal, and a phase difference between a phase of a carrier wave included in information or a signal transmitted from the wireless device 1 to the first user terminal 2B and a phase of a signal oscillated by the oscillator 23 of the first user terminal 2B when the first user terminal 2B receives the information or the signal.

The phase of the carrier wave included in the information or the signal transmitted from the first user terminal 2B to the wireless device 1 is the phase of the information or the signal transmitted in step S201. The information regarding the phase is measured by the first user terminal 2B in step S202 and is stored in step S203. The phase of the signal oscillated by the oscillator 13 of the wireless device 1 when the wireless device 1 receives the information or the signal is the phase of the information or the signal received in step S204. The information regarding the phase is transmitted from the wireless device 1 to the first user terminal 2B in step S213. The phase of the carrier wave included in the information or the signal transmitted from the wireless device 1 to the first user terminal 2B is the phase of the information or the signal transmitted in step S207. The information regarding the phase is measured in step S208 and is transmitted from the wireless device 1 to the first user terminal 2B in step S213. The phase of the signal oscillated by the oscillator 23 of the first user terminal 2B when first user terminal 2B receives the information or the signal is the phase of the information or the signal received in step S210. The information regarding the phase is stored by the first user terminal 2B in step S212.

Here, the phase of the carrier wave included in the information or the signal transmitted from the first user terminal 2B to the wireless device 1 is a concept including not only the phase of the carrier wave included in the information or the signal transmitted from the first user terminal 2B to the wireless device 1 but also the phase of the carrier wave included in the signal obtained by mixing down the information or the signal. Similarly, the phase of the carrier wave included in the information or the signal transmitted from the wireless device 1 to the first user terminal 2B is a concept including not only the phase of the carrier wave included in the information or the signal transmitted from the wireless device 1 to the first user terminal 2B but also the phase of the carrier wave included in the signal obtained by mixing down the information or the signal.

When the phase difference between the phase of the carrier wave included in the information or the signal transmitted from the first user terminal 2B to the wireless device 1 and the phase of the signal oscillated by the oscillator 13 of the wireless device 1 when the wireless device 1 receives the information or the signal is defined as $\Delta\Phi_S$, and the phase difference between the phase of the carrier wave included in the information or the signal transmitted from the wireless device 1 to the first user terminal 2B and the phase of the signal oscillated by the oscillator 23 of the first user terminal 2B when the first user terminal 2B receives the information or the signal is defined as $\Delta\Phi_M$, a phase difference $\Delta\Phi_P$ caused due to a signal propagating between the first user terminal 2B and the wireless device 1 can be calculated from an arithmetic mean of the phase difference $\Delta\Phi_S$ and the phase difference $\Delta\Phi_M$. That is, the phase difference $\Delta\Phi_P$ can be calculated by Formula (1): $\Delta\Phi_P = 1/2 \times (\Delta\Phi_S + \Delta\Phi_M)$.

When the phase deviation between the first user terminal 2B and the wireless device 1 is defined as $\Delta\Phi_C$, a relationship expressed by Formula (2): $\Delta\Phi_M = \Delta\Phi_P + (-\Delta\Phi_C)$ is established. Therefore, the phase deviation $\Delta\Phi_C$ can be calculated by subtracting the phase difference $\Delta\Phi_M$ from the phase difference $\Delta\Phi_P$. That is, the phase deviation $\Delta\Phi_C$ can be calculated by Formula (3): $\Delta\Phi_C = 1/2 \times (\Delta\Phi_S - \Delta\Phi_M)$. In step S215, the phase deviation between the first user terminal 2B and the wireless device 1 is calculated using Formula (3).

Here, the phase deviation $\Delta\Phi_C$ is calculated by Formula (3), but the phase deviation $\Delta\Phi_C$ to be calculated may be obtained by further subtracting $2\pi$ or $4\pi$, that is, $2n\pi$. n may take 0 or a positive integer. Therefore, it is also possible to specify whether n is 0, 1, or 2 (that is, whether a value obtained by further subtracting $2n\pi$ from the phase deviation $\Delta\Phi_C$ obtained by Formula (3) is an original phase deviation or whether a value obtained without the subtraction is the original phase deviation) based on a propagation time $T_P$ to be described below or a time difference between the first user terminal 2B and the wireless device 1.

A signal transmitted from the first user terminal 2B to the wireless device 1 and a signal transmitted from the wireless device 1 to the first user terminal 2B may start from a state in which an output at the start of transmission is not 0 but any value. In this case, it is necessary to correct the phase deviation $\Delta\Phi_C$ by measuring the phase and the transmission time at the start of transmission. By normally making the phase at the start of transmission constant and executing the transmission at a predetermined time, it is possible to omit processing for correcting $\Delta\Phi_C$ after measuring the phase and the transmission time at the start of transmission.

The first user terminal 2B corrects the phase of the signal generated by the oscillator 23 of the first user terminal 2B to achieve synchronization with the signal generated by the oscillator 13 of the wireless device 1 based on the calculated phase deviation $\Delta\Phi_C$ (step S216). The correction of the phase in step S216 is controlled and executed by the control unit 21. The phase deviation of the oscillator 23 of the first user terminal 2B occurs due to the influence of the environment around the first user terminal 2B. By executing the synchronization processing periodically in this manner, the clock 22a of the first user terminal 2B can be continuously clocked with high accuracy.

Subsequently, in the first user terminal 2B, the time difference between the first user terminal 2B and the wireless device 1 is calculated based on a time at which the first user terminal 2B transmits information or a signal to the wireless device 1, a time at which the wireless device transmits information or a signal to the first user terminal 2B, a time at which the first user terminal 2B transmits information or a signal and the wireless device 1 receives the information or a signal and clocks a time, and a time at which the wireless device 1 transmits information or a signal and the first user terminal 2B receives the information or the signal and clocks a time (step S217).

The time at which the first user terminal 2B transmits information or a signal to the wireless device 1 is the time at which the information or the signal is transmitted in step S201. The information regarding the time is stored by the first user terminal 2B in step S203. The time at which the wireless device 1 transmits information or a signal to the first user terminal 2B is the time at which the information is transmitted in step S207. Information regarding the time is transmitted from the wireless device 1 to the first user terminal 2B in step S213. Subsequently, the time at which the first user terminal 2B transmits information or a signal and the wireless device 1 receives the information or the signal and clocks a time is the time at which the information is received in step S204. The information regarding the time is clocked in step S208 and is transmitted from the wireless device 1 to the first user terminal 2B in step S213. The time at which the wireless device 1 transmits information or a signal and the first user terminal 2B receives the information or the signal and clocks a time is the time at which the information or the signal is received in step S210. The information regarding the time is clocked by the first user terminal 2B in step S211 and is stored in step S212.

When a time at which the first user terminal 2B transmits information or a signal to the wireless device 1 is defined as $T_M$, a time at which the wireless device 1 transmits information or a signal to the first user terminal 2B is defined as $T_S$, a time at which the first user terminal 2B transmits information or a signal and the wireless device 1 receives the information or the signal and clocks a time is defined as $T_{MS}$, and a time at which the wireless device 1 transmits information or a signal and the first user terminal 2B receives the information or the signal and clocks a time is defined as $T_{SM}$, the time difference between the first user terminal 2B and the wireless device 1 can be calculated by Formula (4): $T_L = 1/2 \times ((T_{SM} - T_S) - (T_{MS} - T_M))$. In step S217, the time difference between the first user terminal 2B and the wireless device 1 is calculated by Formula (4). The first user terminal 2B corrects the time in the first user terminal 2B to achieve synchronization with the time of the wireless device 1 based on the calculated time difference (step S218).

By executing the processing of steps S201 to S218, it is possible to correct a time deviation and a phase deviation between the first user terminal 2B and the wireless device 1. By periodically synchronizing the time and/or phase of the internal clock of the wireless device 1 with the time and/or phase of an atomic clock that supplies a standard time and synchronizing the time and/or phase of the internal clock of the first user terminal 2B with the time and/or phase of the internal clock of the wireless device 1, the time and/or phase of the internal clock of the first user terminal 2B can match the standard time. For the processing for synchronizing the time and/or phase of the internal clock of the wireless device 1 with the time and/or phase of the atomic clock that supplies the standard time, the description of the processing of steps S201 to S218 can be adopted within a necessary range.

Subsequently, a distance between the first user terminal 2B and the wireless device 1 is calculated (step S219). In step S219, the distance between the first user terminal 2B and the wireless device 1 can be calculated by calculating a propagation time in which information or a signal propagates between the first user terminal 2B and the wireless device 1 by a substantial difference between a time at which the first user terminal 2B transmits the information or the signal and a time at which the wireless device 1 receives the information or the signal, and multiplying the propagation time by a propagation speed (for example, the speed of light) of the information or the signal. A difference between the time at which the first user terminal 2B transmits the information or the signal and the time at which the wireless device 1 receives the information or the signal can be calculated based on, for example, a time at which first user terminal 2B transmits the information or the signal to the wireless device 1 in step S201 and the information or the signal is stored in the storage unit 25 in step S203, a time at which the wireless device 1 receives the information or the signal from the first user terminal 2B in step S204 (a time at which the wireless device 1 transmits the information or the signal to the first user terminal 2B in step S213), and the time difference calculated in step S217.

In step S219, the distance between the first user terminal 2B and the wireless device 1 can be calculated by calculating a propagation time in which information or a signal propagates between the first user terminal 2B and the wireless device 1 by a substantial difference between a time at which the wireless device 1 transmits information or a signal and a time at which the first user terminal 2B receives the information or the signal, and multiplying the propagation time by a propagation speed (for example, the speed of light) of the information or the signal. The difference between the time at which the wireless device 1 transmits the information or the signal and the time at which the first user terminal 2B receives the information or the signal can be calculated based on, for example, the time at which the wireless device 1 transmits the information or the signal to the first user terminal 2B in step S207 (the time at which the wireless device 1 transmits the information or the signal to the first user terminal 2B in step S213), the time at which the first user terminal 2B receives the information or the signal in step S210 and stored in the storage unit 25 in step S212, and the time difference calculated in step S217.

The distance between the first user terminal 2B and the wireless device 1 calculated in step S219 is stored in the storage unit 25 of the first user terminal 2B in association with, for example, time information regarding the time at which the distance calculated or the like and identification information with which the wireless device 1 can be identified and/ or the positional information of the wireless device 1 (step S220), and the distance calculation processing ends. The identification information with which the wireless device 1 can be identified and/ or the positional information of the wireless device 1 may be transmitted from the wireless device 1 to the first user terminal 2B with the information regarding the time and the phase stored by the wireless device 1 in step S213.

By executing the processing from steps S201 to S220, can not only a time deviation and a phase deviation of the first user terminal 2B be corrected, but the distance between the first user terminal 2B and the wireless device 1 can also be calculated. While the time deviation of the first user terminal 2B is corrected in step S218, it is not always necessary to correct the time deviation, and the distance between the first user terminal 2B and the wireless device 1 can be calculated without correcting the time deviation based on the time deviation calculated in step S217. While the phase deviation of the first user terminal 2B is corrected in step S216, it is not always necessary to correct the phase deviation, and the distance between the first user terminal 2B and the wireless device 1 can be calculated without correcting the phase deviation. That is, it is enough if at least the distance between the first user terminal 2B and the wireless device 1 is calculated based on the time deviation and/or the phase deviation between the internal timer included in the first user terminal 2B and the internal timer included in the wireless device 1 in a case where it is supposed that there is no time deviation and/or phase deviation or in a case where it is supposed that the time deviation and/or the phase deviation is corrected.

While the time deviation and the phase deviation of the first user terminal 2B are corrected and the distance between the first user terminal 2B and the wireless device 1 is calculated by executing the processing from steps S201 to S220, it is also possible to separately execute processing for correcting the time deviation of the first user terminal 2B, processing for correcting the phase deviation of the first user terminal 2B, and processing for calculating the distance between the first user terminal 2B and the wireless device 1.

In the processing for calculating the distance between the first user terminal 2B and the wireless device 1, the distance between one first user terminal 2B and each of the plurality of wireless devices 1 can be calculated. When the position of the first user terminal 2B is specified, as will be described below, the distance between the first user terminal 2B and the wireless device 1 is specified by the number of wireless devices 1 required for specifying the position. Here, even when the distance to each of the plurality of wireless devices 1 is calculated for one first user terminal 2B, time deviation correction processing and phase deviation correction processing may be executed only by one wireless device 1, and the time deviation correction processing and the phase deviation correction processing may not be executed during communication with the other wireless devices 1.

Here, a distance between the first user terminal 2B and the wireless device 1 is calculated in the first user terminal 2B. However, instead of the first user terminal 2B, a distance between the first user terminal 2B and the wireless device 1 may be calculated in the wireless device 1 by processing similar to step S219. When the wireless device 1 calculates the distance, the distance between the first user terminal 2B and the wireless device 1 is stored in the memory in the control unit 11 in association with time information regarding a time at which the distance is calculated and/or identification information with which the first user terminal 2B can be identified. The stored distance between the first user terminal 2B and the wireless device 1 and/or time information regarding the time at which the distance is calculated may be transmitted to the first user terminal 2B.

Instead of the first user terminal 2B, the server apparatus 3 may calculate the distance between the first user terminal 2B and the wireless device 1 through the same processing as step S219. When the distance is calculated in the server apparatus 3, information necessary for the calculation is received from the first user terminal 2B and/or the wireless device 1. When the distance is calculated by the server apparatus 3, the distance between the first user terminal 2B and the wireless device 1 is stored in the storage unit 33 of the server apparatus 3 in association with time information regarding the time at which the distance is calculated or the like, identification information with which the first user terminal 2B is identified, identification information with which the wireless device 1 be identified, and/or positional information of the wireless device 1. The stored distance between the first user terminal 2B and the wireless device 1 and/or time information regarding the time at which the distance is calculated may be transmitted to the first user terminal 2B.

The position of the first user terminal 2B may be specified in step S147 of the post input screen display processing based on the distance between the wireless device 1 and the first user terminal 2B calculated in this way. The position of the first user terminal 2B may be represented by latitude, longitude, altitude, or the like.

A method of specifying the position of the first user terminal 2B based on the distance between the wireless device 1 and the first user terminal 2B is not particularly limited, and can be designed as appropriate. For example, when a plurality of wireless devices 1 are provided, the position of the first user terminal 2B may be specified based on the distance between one first user terminal 2B and each of the plurality of wireless devices 1.

For example, when one first user terminal 2B and the plurality of wireless devices 1 are located at the same height, that is, when there the apparatuses on the same XY plane, the position of the first user terminal 2B (for example, XY coordinates of the first user terminal 2B) can be specified based on the distance between one first user terminal 2B and each of the three wireless devices 1 and the position of each of the three wireless devices 1. Accordingly, when one first user terminal 2B and the plurality of wireless devices 1 are located at the same height, the number of pieces of data of the distance between the wireless device 1 and the first user terminal 2B necessary for specifying the position is 3.

For example, when one first user terminal 2B and at least one of the plurality of wireless devices 1 have different heights and are not on the same plane, the position (for example, XYZ coordinates of the first user terminal 2B or latitude, longitude, and altitude of the first user terminal 2B) of the first user terminal 2B can be specified based on the distance between one first user terminal 2B and each of the four wireless devices 1 and the position of each of the four wireless devices 1. Accordingly, when one first user terminal 2B and at least one of the plurality of wireless devices 1 have different heights and are not on the same plane, the number of pieces of data of the distance between the wireless device 1 and the first user terminal 2B necessary for specifying the position is 4. In this case, it is preferable that the four wireless devices 1 are not on the same plane. For example, the height at which at least one wireless device 1 is installed is preferably different from the heights at which the other three wireless devices 1 are installed. In this way, even when the first user terminal 2B is located at any position, a position in three dimensions can be specified.

Alternatively, when the first user terminal 2B includes a global navigation satellite system (GNSS), a position (latitude, longitude, and altitude) of the first user terminal 2B can be measured by the GNSS. In this case, the position of the first user terminal 2B may be specified based on the latitude, longitude, and altitude of the first user terminal 2B measured by the GNSS included in the first user terminal 2B and the distance between the wireless device 1 and the first user terminal 2B.

For example, of the latitude, longitude, and altitude measured by the GNSS of the first user terminal 2B, the latitude and longitude may be specified as measured and the altitude may be specified based on the distance between the wireless device 1 and the first user terminal 2B calculated in step S219. In this case, altitude of an intersection between a straight line passing through the measured latitude and longitude and parallel to the gravity direction and a sphere that is centered on the wireless device 1 and has a radius of the distance between the wireless device 1 and the first user terminal 2B may be specified as the altitude of the first user terminal 2B. In this case, the number of pieces of data of the distance between the wireless device 1 and the first user terminal 2B necessary for specifying the position is 1.

When there are two intersections between a straight line that passes through the latitude and longitude measured by the GNSS of the first user terminal 2B and is parallel to the gravity direction and a sphere that is centered on the wireless device 1 and has a radius of the distance between the wireless device 1 and the first user terminal 2B, the altitude of the intersection close to the altitude measured by the first user terminal 2B between the two intersections may be specified as an altitude of the first user terminal 2B. Alternatively, when the altitude of any one of the two intersections is lower than the ground surface, altitude of an intersection where the altitude is higher than the ground surface may be specified as altitude of the first user terminal 2B. When there is an error in the latitude and/or longitude measured by the GNSS of the first user terminal 2B and/or the distance between the wireless device 1 and the first user terminal 2B calculated in step S219, there is a possibility of the number of intersections being 2.

For example, when the number of data of the distance between the wireless device 1 and the first user terminal 2B is 2 or more, the latitude and the longitude may be specified as measured among the latitude, the longitude, and the altitude measured by the GNSS of the first user terminal 2B, and the altitude may be specified based on the calculated data of the distance between two or more of the wireless devices 1 and the first user terminal 2B. In this case, altitude of the intersection between the straight line that passes through the latitude and longitude measured by the GNSS of the first user terminal 2B and is parallel to the gravity direction and two or more spheres that are centered on each wireless device 1 and have the distance between each wireless device 1 and the first user terminal 2B as a radius may be specified as altitude of the first user terminal 2B.

Alternatively, when the first user terminal 2B includes the GNSS, a position (latitude, longitude, and altitude) measured by the GNSS of the first user terminal 2B may be specified as a position of the first user terminal 2B. In that case, the distance calculation processing in step S146 may not be executed.

When a position of the first user terminal 2B is specified and the distances between the plurality of wireless devices 1 and the first user terminal 2B are used, times at which the distances are acquired are preferably synchronized. For example, times at which the propagation times of the information or the signals between the plurality of wireless devices 1 and the first user terminal 2B are calculated are preferably the same time or close times.

When the position of the first user terminal 2B is specified and the distance between the wireless device 1 and the first user terminal 2B and the position measured by the GNSS of the first user terminal 2B are used, a time at which the distance between the wireless device 1 and the first user terminal 2B is acquired is preferably synchronized with a time at which the position measured by the GNSS of the first user terminal 2B is measured. For example, the time at which the propagation time of the information or the signal between the wireless device 1 and the first user terminal 2B is calculated is preferably the same time as or close to the time at which the latitude, longitude, and altitude are measured by the GNSS of the first user terminal 2B.

Here, the close times are not particularly limited, but are preferably times within a range of a predetermined time from time 1. By using the distance and/or the position calculated at the same time or the close times, a more accurate position at the time can be specified.

The information regarding the position of the first user terminal 2B specified in step S147 may be stored in the storage unit 25 of the first user terminal 2B. The information regarding the position of the first user terminal 2B may include the position of the first user terminal 2B specified in step S147 and the time at which the position is specified.

The time at which the position of the first user terminal 2B is specified may be any time at which the position of the first user terminal 2B is substantially specified. For example, the time may be a time at which the position of the first user terminal 2B is specified in step S147, a time at which the distance between the wireless device 1 and the first user terminal 2B used to specify the position is calculated, a time at which the propagation time of the information or the signal between the wireless device 1 and the first user terminal 2B used to calculate the distance is calculated, or a time at which the information or the signal is transmitted or received between the wireless device 1 and the first user terminal in order to calculate the propagation time. Each time may be a time clocked by the clock 22a of the first user terminal 2B. The time at which the position of the first user terminal 2B is specified may be specified by the first user terminal 2B.

In the above description, the mode in which the position of the first user terminal 2B is specified in the first user terminal 2B has been described. However, the position of the first user terminal 2B may be specified in the wireless device 1 or the server apparatus 3. In this case, information necessary for specifying the position of the first user terminal 2B may be transmitted to the wireless device 1 or the server apparatus 3. The time at which the position of the first user terminal 2B is specified may be specified by the wireless device 1 or the server apparatus 3.

The information regarding the position of the first user terminal 2B transmitted in step S148 may include the position of the first user terminal 2B specified in step S147 and the time at which the position is specified.

In step S150, the position of the first user terminal 2B specified in step S147 and the time at which the position is specified are stored in the server apparatus 3 in association with the identification information of the first user terminal 2B.

In step S151, information for displaying the post input screen on the display screen of the first user terminal 2B may be transmitted. In step S152, the information for displaying the post input screen on the display screen of the first user terminal 2B is received, and thus the first user terminal 2B can display the post input screen on the display screen.

The post input screen displayed on the display screen of the first user terminal 2B in step S153 may include an input field used for the user to input a post message and a transmission button for transmitting the input message to the server apparatus 3. The input field may include an image search button for searching for an image included in a message when the image is included in the message in the storage unit 25 of the first user terminal 2B.

[Post Storage Processing]

A user of the first user terminal 2B can post an input message by inputting the post message in the input field and pressing a transmission button on the post input screen.

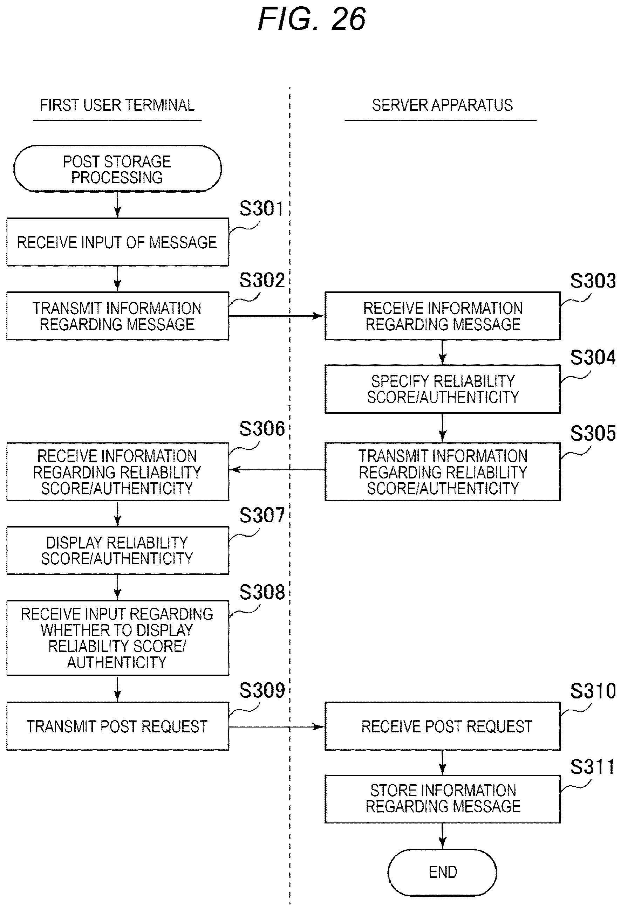

Fig. 26 is a diagram illustrating a flowchart of post storage processing according to the embodiment of the present invention.

First, the first user terminal 2B receives an input of a message (step S301). Information regarding the input message is transmitted from the first user terminal 2B to the server apparatus 3 (step S302). The server apparatus 3 receives information regarding the transmitted message (step S303). The server apparatus 3 specifies a reliability score or authenticity of the message (step S304). Information regarding the specified reliability score or authenticity is transmitted from the server apparatus 3 to the first user terminal 2B (step S305). The first user terminal 2B receives the transmitted reliability score or information regarding the authenticity (step S306). In the first user terminal 2B, the reliability score or the authenticity is displayed (step S307). In the first user terminal 2B, an input regarding whether to display the reliability score or the authenticity is received together with the post message on the second user terminal (step S308). A request for posting a message (hereinafter also referred to as a post request) is transmitted from the first user terminal 2B to the server apparatus 3 (step S309). The server apparatus 3 receives the transmitted post request (step S310). In the server apparatus 3, information regarding the message corresponding to the received post request is stored (step S311) and the post storage processing ends.

The message input in step S301 may include text and an image. The message may be input in an input field displayed on the post input screen.

When the transmission button displayed on the post input screen is pressed with the post message being input in the input field, the information regarding the input post message may be transmitted in step S302. The information regarding the post message may include a post message and a time at which the post message is transmitted.

In step S304, a method of specifying the reliability score or the authenticity of the post message is not particularly limited, and can be designed as appropriate. For the reliability score, for example, the reliability score of the post message may be specified using a machine-trained prediction model (learning model) in which reference information serving as a reference for specifying the reliability score of the post message is used as input data and the reliability score of the reference information is used as output data. For the authenticity, for example, authenticity of the post message may be specified using a machine-trained prediction model (learning model) in which reference information serving as a reference for specifying the authenticity of the post message is used as input data and the authenticity of the reference information is used as output data.

The reference information serving as a reference for specifying the reliability score of the post message as the input data may be a message posted by a poster in the past or a message generated for training. The reliability score of the reference information that is output data may be a reliability score given by an evaluator who evaluates the message, or a reliability score given by a known fact-check tool or the like.

The reliability score may be represented by a numerical value for which a predetermined numerical value is an upper limit, or may be represented by a percentage.

For example, the reliability score may be specified by a ratio of information that is a fact in the information included in the input data. Specifically, for example, when the reliability score is represented by a numerical value for which the upper limit is set to 100 and all the information included in the input data is the fact (when a ratio of the information that is the fact is 100%), the output data is set to 100. When all the information included in the input data is different from the fact (when the ratio of the information that is the fact is 0%), the output data is set to 0, and the machine learning may be executed. The output data may be set to 80 when the ratio of the information that is the fact is about 80% among the information included in the input data. The output data may be set to 20 when the ratio of the information that is the fact is about 20%.

Alternatively, for example, the reliability score may be specified by a statistical support rate for information included in the input data. Specifically, for example, the machine learning may be executed in such a manner that the output data is set to 70 when information of which the majority approve statistically is the input data, the output data is set to 50 when the information in which opinions are statistically divided is the input data, and the output data is set to 30 when the information of which the minority approve statistically is input data.

The reference information serving as a reference for specifying the authenticity of a post message as the input data may be a message posted by a poster in the past or a message generated for training. The authenticity of the reference information that is the output data may be authenticity assigned by an evaluator who evaluates a message, or authenticity assigned by a known fact-check tool or the like.

The authenticity may be represented by "true" or "false". For example, authenticity of a post message may be specified based on a ratio of information that is a fact in the information included in the input data. Specifically, for example, in the information included in the input data, the output data may be set to "true" when the ratio of the information that is the fact is equal to or higher than a predetermined ratio or higher than a predetermined ratio. The output data may be set to "false" when the ratio of the information that is the fact is equal to or lower than the predetermined ratio or lower than the predetermined ratio. The "predetermined ratio" may be 100%, 80%, or 50%. The "predetermined ratio" when the output data is set to "true" and the "predetermined ratio" when the output data is set to "false" may be the same ratio or different ratios.

When the ratio of the information that is the fact is not specified as "true" or "false" in the ratio at which the "predetermined ratio" in the output data that is set to "true" and the "predetermined ratio" in the output data that is set to "false" are different, the output data may be set to "authenticity cannot be specified". Specifically, for example, when the ratio of information that is the fact in the information included in the input data is 40% or more and 60% or less, the output data may be determined as "authenticity cannot be specified".

Alternatively, for example, the authenticity of a post message may be specified based on a statistical support rate for information included in the input data. Specifically, for example, the machine learning may be executed in such a manner that the output data may be set to "true" when the information of which the majority statistically approve is the input data, the output data may be set to "authenticity cannot be specified" when the information in which opinions are statistically divided is the input data, and the output data may be set to "false" when the information of which the minority statistically approve is the input data.

A machine learning algorithm is not particularly limited, and a known algorithm can be used. Linear regression, multiple regression analysis, a support vector machine, a decision tree, a random forest, and deep learning using a multilayer neural network can be given as examples.

The multilayer neural network includes an input layer, an output layer, and a plurality of intermediate layers. A weight is set to an edge connecting a node to a node in each layer. A weight corresponding to each input to the node is set to the edge, and a value obtained by multiplying each input to the node by the weight and multiplying these weights and a bias are added. To calculate an activity value is calculated by performing nonlinear conversion on the value obtained by the addition using an activation function. The calculated activity value is a value of an input passed to the node of the next layer. The number of intermediate layers can be appropriately designed.

Alternatively, in step S304, a reliability score or authenticity of the post message may be specified by a known fact-check tool or the like.

The information regarding the reliability score or the authenticity transmitted in step S305 may include the reliability score or the authenticity specified in step S304, and the time at which the reliability score or the authenticity is specified.

After the reliability score or the authenticity displayed in step S307 is confirmed, the user can determine whether to display the reliability score or the authenticity of the post message input by the user together with the post message.

An input regarding whether to display the reliability score or the authenticity of the post message together with the post message in step S308 may be executed by inputting selection of whether to display the reliability score or the authenticity.

In step S308, an input regarding whether to display the position of the first user terminal 2B that has transmitted the post message and the time at which the position has been specified together with the post message may be received. The position of the first user terminal 2B that has transmitted the post message may be the position specified in step S147, the time at which the position is specified may be the closest to the time at which the post message is transmitted among the positions of the first user terminal 2B stored in the server apparatus 3, and the time at which the position is specified may be within a predetermined period among the positions of the first user terminal 2B stored in the server apparatus 3.

When an input regarding whether to display the position of the first user terminal 2B that has transmitted the post message and the time at which the position has been specified is received together with the post message, the position of the first user terminal 2B that can be displayed together with the post message and the time at which the position has been specified may be displayed on the display screen of the first user terminal 2B. After the displayed position of the first user terminal 2B and the time at which the position is specified are confirmed, the first user can determine whether to display the position of the first user terminal 2B and the time at which the position is specified together with the post message.

The post request in step S309 may be transmitted by pressing a post button for posting a post message displayed on the display screen in a state where an input regarding whether to display the reliability score or the authenticity of the post message together with the post message is received. In conjunction with the post request, input content regarding whether to display the reliability score or the authenticity of the post message accepted in step S308 together with the post message may be transmitted. Further, in conjunction with the post request, input content regarding whether to display the position of the first user terminal 2B that has transmitted the post message and the time at which the position has been specified together with the post message may be transmitted.

The information regarding the message stored in the storage unit 33 of the server apparatus 3 in step S311 may be information regarding the message received by the server apparatus 3 in step S303. The information regarding the message may include a post message and a time at which the post message is transmitted. In conjunction with the information regarding the message, input content regarding whether to display the reliability score or the authenticity of the post message specified in step S304, the reliability score or the authenticity of the post message together with the post message, input content regarding whether to display the position of the first user terminal 2B transmitting the post message, the time at which the position has been specified together with the post message, and the like may be stored in association with each other.

[Post Display Processing]

When a browsing request is given from the second user terminal 6, the post message stored in the server apparatus 3 is transmitted to the second user terminal 6 and displayed on the second user terminal 6.

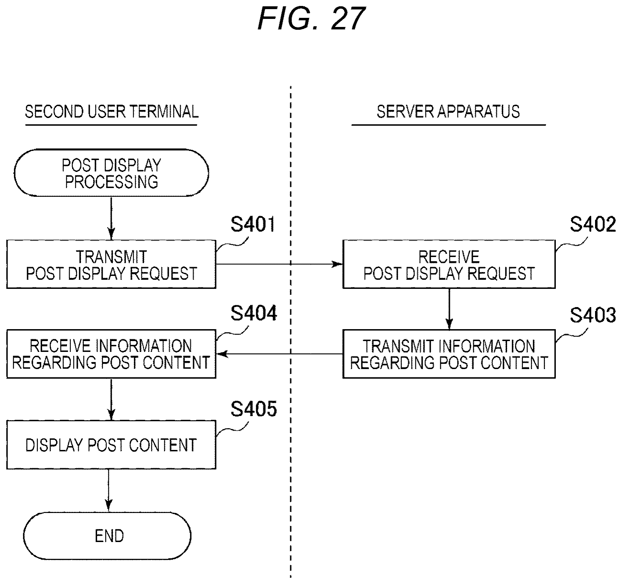

Fig. 27 is a diagram illustrating a flowchart of post display processing according to the embodiment of the present invention.

First, a request for displaying a post (hereinafter also referred to as a post display request) is transmitted from the second user terminal 6 to the server apparatus 3 (step S401). In the server apparatus 3, the post display request is received (step S402). Information regarding post content is transmitted from the server apparatus 3 to the second user terminal 6 (step S403). The second user terminal 6 receives the information regarding the post content (step S404). In the second user terminal 6, the post content is displayed (step S405), and the post display processing ends.

For example, the post display request in step S401 may be transmitted by pressing an icon for displaying a screen on which a post is browsed on the display screen of the second user terminal 6.

The information regarding the post content transmitted in step S401 may include a post message, a time at which the post message is transmitted by the first user terminal 2B, and information to be displayed together with the post message. The information displayed together with the post message can include a reliability score or authenticity of the post message, a position of the first user terminal 2B, and a time at which the position is specified. The information to be displayed together with the post message may be information that the first user executes an input for approving of display in step S308.

In step S405, the post content may include a post message, the time at which the post message is transmitted by the first user terminal 2B, and the information to be displayed together with the post message. The information displayed together with the post message can include a reliability score or authenticity of the post message, a position of the first user terminal 2B, and a time at which the position is specified. The information to be displayed together with the post message may be information that the first user executes an input for approving of display in step S308.

As described above, "posting a message" includes processing in which the first user terminal 2B transmits a post message to the server apparatus 3, the server apparatus 3 stores the post message, the server apparatus 3 transmits the post message to the second user terminal 6, and the second user terminal 6 displays the post message.

In the above description, the mode in which the post input screen is displayed on the first user terminal 2B when the position of the first user terminal 2B is specified within the predetermined period, and the post input screen is not displayed on the first user terminal 2B when the position of the first user terminal 2B is not specified within the predetermined period has been described. However, the post input screen may be displayed on the first user terminal 2B regardless of whether the position is specified. Then, when the position of the first user terminal 2B is specified within the predetermined period, the transmission button can be pressed. When the position of the first user terminal 2B is not specified within the predetermined period, the transmission button cannot be pressed.

That is, when the position of the first user terminal 2B is specified within the predetermined period, control may be executed such that transmission of a post message by the first user terminal 2B is enabled. When the position of the first user terminal 2B is not specified within the predetermined period, control may be executed such that transmission of a post message by the first user terminal 2B is disabled.

Alternatively, the post message from the first user terminal 2B may be transmitted regardless of whether the position is specified. Then, when the position of the first user terminal 2B is specified within the predetermined period, control may be executed such that display of the post message on the second user terminal 6 is enabled. When the position of the first user terminal 2B is not specified within the predetermined period, control may be executed such that display of the post message on the second user terminal 6 is disabled.

Examples of the method of disabling the display of the post message on the second user terminal 6 include a method of allowing the server apparatus 3 not to receive the post message transmitted by the first user terminal 2B, a method of allowing the server apparatus 3 not to store the post message received by the server apparatus 3, a method of allowing the post message stored in the server apparatus 3 not to be transmitted to the second user terminal 6, and a method of allowing the post message transmitted to the second user terminal 6 not to be displayed on the second user terminal 6. The method of allowing the post message transmitted to the second user terminal 6 not to be displayed on the second user terminal 6 includes a method of allowing at least a part of the content of the post message not to be displayed so that the second user terminal 6 cannot ascertain at least a part of the content of the post message.

That is, when the position of the first user terminal 2B is specified within the predetermined period, control may be executed such that posting by the first user terminal 2B is enabled. When the position of the first user terminal 2B is not specified within the predetermined period, control is executed such that posting by the first user terminal 2B is disabled.

It is possible to appropriately design a timing at which whether the position of the first user terminal 2B is specified within the predetermined period is determined by a method of enabling or disabling the posting.

Further, in the above description, the mode in which the message can be posted regardless of the reliability score or the authenticity of the post message has been described. However, when the specified reliability score or the specified authenticity satisfies the predetermined condition, control may be executed such that posting by the first user terminal 2B is enabled. When the specified reliability score or the specified authenticity does not satisfy the predetermined condition, control may be executed such that posting by the first user terminal 2B is disabled. For example, control may be executed such that display of the post message on the second user terminal is enabled when the specified reliability score or the specified authenticity satisfies the predetermined condition. Control may be executed such that display of the post message on the second user terminal is disabled when the specified reliability score or the specified authenticity does not satisfy the predetermined condition.

The case where the specified reliability score satisfies the predetermined condition may be, for example, a case where the reliability score is higher than a predetermined value or ratio, a case where the reliability score is equal to or higher than the predetermined value or ratio, a case where the reliability score is lower than the predetermined value or ratio, or a case where the reliability score is equal to or lower than the predetermined value or ratio.

The case where the specified authenticity satisfies the predetermined condition may be, for example, a case where the specified authenticity is "true", a case where the specified authenticity is "false", or a case where "authenticity cannot be specified".

Examples of the method of disabling the post message on the second user terminal 6 include a method in which the post message received by the server apparatus 3 is not stored in the server apparatus 3, a method in which the post message stored in the server apparatus 3 is not transmitted to the second user terminal 6, and a method in which the post message transmitted to the second user terminal 6 is not displayed on the second user terminal 6. The method of preventing the post message transmitted to the second user terminal 6 from being displayed on the second user terminal 6 includes a method of not displaying at least a part of the content of the post message so that the second user terminal 6 cannot recognize at least a part of the content of the post message.

Further, in the above description, the mode in which the first user inputs whether to display the reliability score or the authenticity of the post message together with the post message has been described. However, the reliability score or the authenticity of the post message may be automatically displayed together with the post message without receiving an input from the first user.

In the above description, the mode in which the first user inputs whether to display the position of the first user terminal 2B and the time at which the position is specified together with the post message has been described. However, the position of the first user terminal 2B and the time at which the position is specified may be automatically displayed together with the post message without receiving an input from the first user.

According to the present invention, the system including at least one computer apparatus includes a position specifier configured to specify a position of a terminal carried or operated by a user based on a distance between each of a plurality of wireless devices and the terminal. Thus, since the position of the terminal carried or operated by the user can be specified, the position of the user can be specified.

According to the present invention, a system including at least one computer apparatus includes: a position specifier configured to specify a position of a mobile terminal carried by a first user; and an evacuation location specifier configured to specify an evacuation location satisfying a predetermined condition based on the specified position of the mobile terminal. Thus, since an evacuation location satisfying a predetermined condition is specified based on the position of the mobile terminal carried by the first user, an evacuation location optimized for the user can be specified. The first user can be prompted to evacuate. According to the present invention, since the position of the mobile terminal is specified based on the distance between each of the plurality of wireless devices and the mobile terminal calculated based on the propagation time of the information or the signal between each of the plurality of wireless devices and the mobile terminal, the position of the mobile terminal can be specified with high accuracy.

According to the present invention, since the distance is calculated based on a time deviation between the clock of one wireless device and the clock of the mobile terminal, the position of the mobile terminal can be specified without including an error due to the time deviation. According to the present invention, since a time in the mobile terminal is corrected based on the calculated time deviation, the position of the mobile terminal can be specified with high accuracy based on the synchronized time. According to the present invention, since a phase in the mobile terminal is corrected based on the calculated phase deviation, the position of the mobile terminal can be specified with high accuracy based on a time at which the phase is synchronized.

According to the present invention, control is executed such that different second users are associated with each first user, and information regarding a position of a mobile terminal carried by the first user can be output by a second user terminal operated by the second user. Therefore, the second user can be notified of the position of the first user, and the second user can confirm the position of the user. According to the present invention, the second user terminal operated by the second user is controlled such that information regarding the specified evacuation location can be output. Therefore, the evacuation location where the first user will evacuate can be confirmed. Accordingly, safety confirmation can be smoothly executed when a disaster occurs. According to the present invention, in response to detection of a predetermined event by a predetermined sensor, specifying the position of the mobile terminal and/or specifying the evacuation location is executed. Therefore, evacuation can be prompted when the predetermined event occurs.

According to the present invention, a system including a plurality of wireless devices and a mobile terminal carried by a worker includes a distance calculator configured to calculate a distance between each of the plurality of wireless devices and the mobile terminal based on a propagation time of information or a signal between each of the plurality of wireless devices and the mobile terminal, and a position specifier configured to specify a position of the mobile terminal based on the calculated distance between the wireless device and the mobile terminal. Thus, since the position of the mobile terminal carried by the worker can be specified, a position of the worker can be specified. According to the present invention, the time at which the specified position moves from the outside of the predetermined work area to the inside of the predetermined work area in the predetermined period is stored as the work start time in the predetermined period. Therefore, it is possible to record an accurate work start time based on the position of the worker. According to the present invention, a time in which the specified position moves from the inside of the predetermined work area to the outside of the predetermined work area in the predetermined period is stored as the work end time in the predetermined period. Therefore, it is possible to record an accurate work end time based on the position of the worker.

According to the present invention, a time calculated based on a time passing from a work start time to a work end time in the predetermined period is stored as the work hours of the worker in the predetermined period. Therefore, it is possible to store accurate work hours based on the position of the worker.

According to the present invention, a time at which the specified position moves from the inside of the predetermined task area to the outside of the predetermined task area in the predetermined period is stored as the task end time in the predetermined period. Therefore, it is possible to store an accurate task duration based on the position of the worker. Accordingly, it is possible to manage working hours, work hours, and/or the task duration based on an actual behavior of the worker.

According to the present invention, it is determined whether the task start time and the task end time stored in association with the worker, and a task area corresponding to the task start time and the task end time have a predetermined relationship with the time zone and the task area in which the worker should execute tasks and which are stored in advance. Therefore, it is possible to prove that the worker executes the task according to the predetermined condition.

According to the present invention, the distance is calculated based on the time deviation between the clock of one wireless device and the clock of the mobile terminal. Therefore, it is possible to specify the position of the worker without including an error due to the time deviation. According to the present invention, the time in the mobile terminal is corrected based on the calculated time deviation. Therefore, the position of the worker can be specified with high accuracy based on the synchronized time. According to the present invention, the phase in the mobile terminal is corrected based on the calculated phase deviation. Therefore, the position of the worker can be specified with high accuracy based on the time at which the phase is synchronized.

According to the present invention, a system including a plurality of wireless devices and an order device used to order a product or a utilization device used to receive provision of a service includes a distance calculator configured to calculate a distance between each of the plurality of wireless devices and the order device or the utilization device based on a propagation time of information or a signal between each of the plurality of wireless devices and the order device or the utilization device, and a position specifier configured to specify a position of the order device or the utilization device based on the calculated distance between the wireless device and the order device or the utilization device. Thus, the position of the order device or the utilization device can be specified. In particular, even indoors, the position of the order device or the utilization device can be specified with high accuracy as compared with a GPS.

According to the present invention, when the position of the order device or the utilization device is out of the predetermined range, an administrator of the order device or the utilization device is notified of information indicating that the position of the order device or the utilization device is out of the predetermined range. In addition, by specifying the position of the order device from the propagation time of the information or the signal between each of the plurality of wireless devices 1 and the order device or the utilization device, it is possible to curb theft of the order device or the utilization device without providing a security gate for preventing theft in a store or the like. As a result, a cost for installing the security gate can be reduced, and it is possible to prevent an area of a place for providing a product or a service of the store from being narrowed by the installation of the security gate. According to the present invention, unlike the case where the security gate is used, even after the order device or the utilization device moves to the outside of the store, the position of the order device or the utilization device can be ascertained.

According to the present invention, a system including at least one computer apparatus includes: a position specifier configured to specify a position of a first user terminal operated by a first user; and a controller configured to execute control such that transmission of a post message by the first user terminal or display of the post message on a second user terminal is enabled when the position of the first user terminal is specified within a predetermined period, and execute control such that transmission of the post message by the first user terminal or display of the post message on the second user terminal is disabled when the position of the first user terminal is not specified within the predetermined period. Thus, it is possible to provide the system capable of posting a message for a person specifying the position within the predetermined period.

According to the present invention, the system further includes: a time specifier configured to specify a time at which a position is specified by the position specifier; and a time determinator configured to determine whether the specified time is a time within a predetermined period. The controller executes control such that transmission of a post message by the first user terminal or display of the post message on the second user terminal is enabled when the time determinator determines that the specified time is a time within the predetermined period, and the controller executes control such that transmission of a post message by the first user terminal or display of the post message on the second user terminal is disabled when the time determinator determines that the specified time is not a time within the predetermined period. Thus, it is possible to provide the system capable of executing posting of a message for a person of which a position is specified within a predetermined period.

According to the present invention, the system further includes the time specifier configured to specify a time at which the position is specified by the position specifier; and a display controller configured to execute control such that the post message is displayed on the second user terminal together with the specified position and the specified time. Thus, the second user can ascertain the position of the first user posting the message and the time at which the position is specified.

According to the present invention, the system further includes a time specifier configured to specify a time at which the position specifier specifies the position; and a position storage configured to store the specified position and the specified time in association with the identification information with which the first user can be identified. Thus, it is possible to store the position of the first user and the time at which the position is specified.

According to the present invention, the system further includes a distance calculator configured to calculate a distance between the wireless device and the first user terminal based on the propagation time of the information or the signal between the wireless device and the first user terminal. The position specifier specifies the position of the first user terminal based on the calculated distance between the wireless device and the first user terminal. Thus, it is possible to specify the position of the first user terminal based on the distance between the wireless device and the first user terminal.

According to the present invention, the distance calculator calculates the distance based on the time deviation between an internal clock of the wireless device and an internal clock of the first user terminal. Thus, it is possible to accurately calculate the distance between the wireless device and the first user terminal.

According to the present invention, the system further includes a time deviation calculator configured to calculate the time deviation between the internal clock of the wireless device and the internal clock of the first user terminal by transmitting and receiving information or a signal between the wireless device and the first user terminal; and a time corrector configured to correct a time of the internal clock of the first user terminal based on the calculated time deviation. Thus, it is possible to synchronize the time of the internal clock of the first user terminal with the time of the internal clock of the wireless device.

According to the present invention, the system further includes a phase deviation calculator configured to calculate a phase deviation between the internal clock of the wireless device and the internal clock of the first user terminal by transmitting and receiving information or a signal between the wireless device and the first user terminal; and a phase corrector configured to correct the phase of the internal clock of the first user terminal based on the calculated phase deviation. It is possible to synchronize the phase of the internal clock of the first user terminal with the phase of the internal clock of the wireless device.

According to the present invention, the system further includes a reliability specifier configured to specify a reliability score of the post message using a machine-trained prediction model using reference information serving as a reference for specifying the reliability score of the post message as input data and using a reliability score of the reference information as output data. Thus, it is possible to specify the reliability score of the post message by the learning model.

According to the present invention, the system further includes an authenticity specifier configured to specify authenticity of the post message using a machine-trained prediction model using reference information serving as a reference for specifying the authenticity of the post message as input data and using the authenticity of the reference information as output data. Thus, it is possible to specify the authenticity of the post message by the learning model.

According to the present invention, the controller executes control such that display of the post message on the second user terminal is enabled when the specified reliability score or the specified authenticity satisfies a predetermined condition, and the controller executes control such that display of the post message on the second user terminal is disabled when the specified reliability score or the specified authenticity does not satisfy the predetermined condition. Thus, it is possible to enable display of the post message when the specified reliability score or the specified authenticity satisfies the predetermined condition.

According to the present invention, the display controller executes control such that the post message is displayed on the second user terminal together with the specified reliability score or the specified authenticity. Thus, the second user can ascertain the reliability score or the authenticity of the post message.

According to the present invention, the display controller controls the first user terminal such that the specified reliability score or the specified authenticity is displayed. Thus, the first user can ascertain the reliability score or the authenticity of the post message.

Reference Signs List

| | | | | | |
|---|---|---|---|---|---|
| 1 | Wireless device, | 2 | Mobile terminal, | | |
| 2A: | Order device, | 2B | First user terminal, | | |
| 3 | Server apparatus, | 4 | Communication network, | | |
| 5 | Sensor, | 6 | Second user terminal, | | |
| 7 | Order-receiving device, | 8 | Management apparatus, | | |
| 10 | System, | | | | |
| 11 | Control unit, | | | | |
| 12 | RF chip, | 12a | Clock, | 12b | Phase detector, |
| 13 | Oscillator, | | | | |
| 21 | Control unit, | | | | |
| 22 | RF chip, | 22a | Clock, | 22b | Phase detector, |
| 23 | Oscillator, | 24 | RAM, | 25 | Storage unit, |
| 26 | Input unit, | 27 | Display unit | | |
| 31 | Control unit, | 32 | RAM, | 33 | Storage unit, |
| 34 | Communication interface, | | | | |
| 40 | Store, | 41 | Table, | 42 | Seat |
| 43 | Kitchen area, | 44 | Range, | 45 | Straight line |
| 70 | User ID data table, | 71 | User ID, | | |
| 72 | User name, | 73 | User address, | 74 | User age, |
| 75 | User sex, | | | | |
| 76 | Presence or absence of an underlying disease, | | | | |
| 77 | User ID of the second user, | | | | |
| 78 | Name of the second user, | | | | |
| 79 | E-mail address of the second user, | | | | |
| 80 | Power consumption amount, | | | | |
| 90 | Evacuation location master table, | | | | |
| 91 | Evacuation location, | 92 | Type of disaster, | | |
| 93 | Address, | 94 | Longitude, | 95 | Latitude, |
| 100 | Display screen, | 101 | Road, | 102 | River, |
| 103 | Disaster information icon, | 104 | Position of the user, | | |
| 105 | Evacuation location, | 106 | Movement route, | | |
| 500 | Position management table, | 510 | Worker ID, | 520 | Time, |
| 530 | Position information, | | | | |

(continued)

| | | | | | |
|---|---|---|---|---|---|
| 600 | Worker management table, | 610 | Worker ID, | | |
| 620 | Work date, | 630 | Work area ID, | 640 | Task content, |
| 650 | Work start time, | 660 | Work end time, | | |
| 670 | Work hours, | | | | |
| 700 | Task management master table, | 710 | Worker ID, | | |
| 720 | Work day, | 730 | Task area ID, | 740 | Task content, |
| 750 | Task start time, | 760 | Task end time, | | |
| 770 | Task duration, | | | | |
| 800 | Task management table, | 810 | Worker ID, | | |
| 820 | Work day, | 830 | Task area ID, | 840 | Task content, |
| 850 | Task start time, | 860 | Task end time, | | |
| 870 | Task duration | | | | |

**Claims**

1. A system comprising at least one computer apparatus, the system comprising
   a position specifier that specifies a position of a terminal carried or operated by a user based on a distance between each of a plurality of wireless devices and the terminal.

2. The system according to claim 1,

   wherein the terminal is a mobile terminal carried by a first user, and
   wherein the system comprising
   an evacuation location specifier that specifies an evacuation location satisfying a predetermined condition based on the specified position of the mobile terminal.

3. The system according to claim 2, comprising
   an outputter that executes control such that the mobile terminal outputs information regarding the specified evacuation location and/or a route to the evacuation location.

4. The system according to claim 2 or 3, comprising
   a second outputter that executes control such that different second users are associated with each first user, and information regarding a position of the mobile terminal carried by the first user is able to be output by a second user terminal operated by the second user.

5. The system according to claim 2 or 3, comprising
   a third outputter that executes control such that different second users are associated with each first user, and a second user terminal operated by the second user can output information regarding the specified evacuation location.

6. The system according to claim 2 or 3, wherein the position specifier and/or the evacuation location specifier are executed in response to detection of a predetermined event by a predetermined sensor.

7. The system according to claim 1,

   wherein the terminal is a mobile terminal carried by a worker,
   wherein the system comprising
   a distance calculator that calculates a distance between each of the plurality of wireless devices and the mobile terminal based on a propagation time of information or a signal between each of the plurality of wireless devices and the mobile terminal, and
   wherein the position specifier specifies the position of the mobile terminal based on the calculated distance between the wireless device and the mobile terminal.

8. The system according to claim 7, comprising
   a work start time storage that stores, as a work start time in a predetermined period, a time at which the specified position moves from an outside of the predetermined work area to the inside of the predetermined work area in the predetermined period.

9. The system according to claim 7 or 8, comprising
a work end time storage that stores, as a work end time in a predetermined period, a time at which the specified position moves from the inside of the predetermined work area to an outside of the predetermined work area in the predetermined period.

10. The system according to claim 9, comprising
a work hours storage that stores, as work hours of the worker in the predetermined period, a time calculated based on a time passing from the work start time to the work end time in a predetermined period.

11. The system according to claim 7, comprising:

a task start time storage that stores, as a task start time in the predetermined period, a time at which the specified position moves from outside of the predetermined task area to an inside of the predetermined task area in a predetermined period; and
a task end time storage that stores, as a task end time in the predetermined period, a time at which the specified position moves from the inside of the predetermined task area to the outside of the predetermined task area in the predetermined period.

12. The system according to claim 11, comprising:

a task duration storage that stores a task area where the worker should execute tasks and a time zone in which the worker should execute tasks in the task area; and
a time zone determinator that determines whether the stored task start time and task end time, and the task area corresponding to the task start time and the task end time have a predetermined relationship with the time zone and the task area stored in the task duration storage.

13. The system according to claim 11 or 12, comprising:

a start time storage that stores, as a work start time in a predetermined period, a time at which the specified position moves from the outside of the predetermined first work area to the inside of the predetermined first work area in the predetermined period;
an end time storage that stores, as a work end time in a predetermined period, a time at which the specified position moves from the inside of the predetermined second work area to the outside of the predetermined second work area in the predetermined period; and
a work hours storage that stores, as work hours of the worker in the predetermined period, a time calculated based on a time passing from the work start time to the work end time in the predetermined period.

14. The system according to claim 7 or 8, comprising
a position storage that stores the specified position in association with a time specified based on a time in which a propagation time of information or a signal between each of the plurality of wireless devices and the mobile terminal is measured.

15. The system according to claim 1,

wherein the terminal is an order device used to order a product or a utilization device used to receive provision of a service,
wherein the system comprising
a distance calculator that calculates a distance between each of the plurality of wireless devices and the order device or the utilization device based on a propagation time of information or a signal between each of the plurality of wireless devices and the order device or the utilization device, and
wherein the position specifier specifies the position of the order device or the utilization device based on the calculated distance between the wireless device and the order device or the utilization device.

16. The system according to claim 15, comprising
a first information transmitter that transmits, to the first computer apparatus, information indicating that the position of the order device or the utilization device is out of a predetermined range when the position of the order device or the utilization device is out of the predetermined range.

17. The system according to claim 15 or 16, comprising
a second information transmitter that transmits information regarding a product or a service to a second computer apparatus in response to a user's operation on the order device or the utilization device.

18. The system according to claim 15 or 16,

wherein the order device is installed in a restaurant, and
wherein the predetermined range is a range set in relation to the restaurant.

19. The system according to claim 1,

wherein the terminal is a first user terminal operated by a first user,
wherein the position specifier specifies the position of the first user terminal, and
wherein the system comprising
a controller that executes control such that transmission of a post message by the first user terminal or display of the post message on a second user terminal is enabled when the position of the first user terminal is specified within a predetermined period, and to execute control such that transmission of the post message by the first user terminal or display of the post message on the second user terminal is disabled when the position of the first user terminal is not specified within the predetermined period.

20. The system according to claim 19, comprising:

a time specifier that specifies a time at which the position is specified by the position specifier; and
a time determinator that determines whether the specified time is a time within a predetermined period,
wherein the controller executes control such that transmission of the post message by the first user terminal or display of the post message on the second user terminal is enabled when the time determinator determines that the specified time is a time within the predetermined period, and the controller executes control such that transmission of the post message by the first user terminal or display of the post message on the second user terminal is disabled when the time determinator determines that the specified time is not a time within the predetermined period.

21. The system according to claim 19 or 20, comprising:

a time specifier that specifies a time at which a position is specified by the position specifier; and
a display controller that controls the second user terminal such that the post message is displayed together with the specified position and the specified time.

22. The system according to claim 19 or 20, comprising:

a time specifier that specifies a time at which the position is specified by the position specifier; and
a position storage that stores the specified position and the specified time in association with identification information with which the first user can be identified.

23. The system according to claim 19 or 20, comprising
a reliability specifier that specifies a reliability score of the post message using a machine-trained prediction model in which reference information serving as a reference for specifying the reliability score of the post message is used as input data and the reliability score of the reference information is used as output data.

24. The system according to claim 19 or 20, comprising
an authenticity specifier that specifies authenticity of the post message using a machine-trained prediction model in which reference information serving as a reference for specifying the authenticity of the post message is used as input data and the authenticity of the reference information is used as output data.

25. The system according to claim 23, wherein the controller executes control such that display of the post message on the second user terminal is enabled when the specified reliability score or the specified authenticity satisfies a predetermined condition, and the controller executes control such that display of the post message on the second user terminal is disabled when the specified reliability score or the specified authenticity does not satisfy the predetermined condition.

26. The system according to claim 23, comprising
a display controller that executes control such that the second user terminal displays the post message together with the specified reliability score or the specified authenticity.

27. The system according to claim 23, comprising
a display controller that controls the first user terminal displays the specified reliability score or the specified authenticity.

28. The system according to any one of claims 1 to 3, 7, 8, 15, 16, 19, and 20, comprising

a distance calculator that calculates a distance between each of the plurality of wireless devices and the terminal based on a propagation time of information or a signal between each of the plurality of wireless devices and the terminal,
wherein the position specifier specifies the position of the terminal based on the calculated distance between each of the plurality of wireless devices and the terminal.

29. The system according to claim 28, wherein the distance calculator calculates the distance based on a time deviation between a clock of one of the wireless devices and a clock of the terminal.

30. The system according to claim 28, comprising:

a time deviation calculator that calculates a time deviation between one of the wireless devices and the terminal by executing communication between the one wireless device and the terminal; and
a time corrector that corrects a time in the terminal based on the calculated time deviation.

31. The system according to claim 28, comprising:

a phase deviation calculator that calculates a clock phase deviation between one of the wireless devices and the terminal by executing communication between the one wireless device and the terminal; and
a phase corrector that corrects a phase in the terminal based on the calculated phase deviation.

32. A method executed in a system including at least one computer apparatus, the method comprising
a position specification step of specifying a position of a terminal carried or operated by a user based on a distance between each of a plurality of wireless devices and the terminal.

33. The method according to claim 32,

wherein the terminal is a mobile terminal carried by a first user, and
wherein the method comprising
an evacuation location specification step of specifying an evacuation location satisfying a predetermined condition based on the specified position of the mobile terminal.

34. The method according to claim 32,

wherein the terminal is a mobile terminal carried by a worker,
wherein the method comprising
a distance calculation step of calculating a distance between each of the plurality of wireless devices and the mobile terminal based on a propagation time of information or signal between each of the plurality of wireless devices and the mobile terminal, and
wherein the position specification step specifies the position of the mobile terminal based on the calculated distance between the wireless device and the mobile terminal.

35. The method according to claim 32,

wherein the terminal is an order device used to order a product or a utilization device used to receive provision of a service,

wherein the method comprising

a distance calculation step of calculating a distance between each of the plurality of wireless devices and the order device or the utilization device based on a propagation time of information or a signal between each of the plurality of wireless devices and the order device or the utilization device, and

wherein the position specification step specifies the position of the order device or the utilization device based on the calculated distance between the wireless device and the order device or the utilization device.

36. The method according to claim 32,

wherein the terminal is a first user terminal operated by a first user,

wherein the position specification step specifies the position of the first user terminal, and

wherein the method comprising

a control step of executing control such that transmission of a post message by the first user terminal or display of the post message on a second user terminal is enabled when the position of the first user terminal is specified within a predetermined period, and executing control such that transmission of the post message by the first user terminal or display of the post message on the second user terminal is disabled when the position of the first user terminal is not specified within the predetermined period.

37. A program causing a computer apparatus to function as

a position specifier that specifies a position of a terminal carried or operated by a user based on a distance between each of a plurality of wireless devices and the terminal.

38. The program according to claim 37,

wherein the terminal is a mobile terminal carried by a first user, and

wherein the program causes the computer apparatus to function as

an evacuation location specifier that specifies an evacuation location satisfying a predetermined condition based on the specified position of the mobile terminal.

39. The program according to claim 37,

wherein the terminal is a mobile terminal carried by a worker,

wherein the program causes the computer apparatus to function as

a distance calculator that calculates a distance between each of the plurality of wireless devices and the mobile terminal based on a propagation time of information or a signal between each of the plurality of wireless devices and the mobile terminal, and

wherein the position specifier specifies the position of the mobile terminal based on the calculated distance between the wireless device and the mobile terminal.

40. An apparatus comprising

a position specifier that specifies a position of a terminal carried or operated by a user based on a distance between each of a plurality of wireless devices and the terminal.

41. The apparatus according to claim 40,

wherein the apparatus is an order device used to order a product, and

wherein the apparatus comprising:

a distance calculator that calculates a distance between each of the plurality of wireless devices and the order device based on a propagation time of information or a signal between each of the plurality of wireless devices and the order device; and

a position specifier that specifies a position of the order device based on the calculated distance between the wireless device and the order device.

42. The apparatus according to claim 40,

wherein the apparatus is a utilization device used when a service is provided, and
wherein the apparatus comprising:

a distance calculator that calculates a distance between each of the plurality of wireless devices and the utilization device based on a propagation time of information or a signal between each of the plurality of wireless devices and the utilization device; and
a position specifier that specifies a position of the utilization device based on the calculated distance between the wireless device and the utilization device.

*FIG. 1*

*FIG. 2*

FIG. 3

# FIG. 4

*FIG. 5*

70

| USER ID OF FIRST USER (71) | USER NAME (72) | USER ADDRESS (73) | USER AGE (74) | USER SEX (75) | PRESENCE OR ABSENCE OF UNDERLYING DISEASE (76) | USER ID OF SECOND USER (77) | NAME OF SECOND USER (78) | E-MAIL ADDRESS OF SECOND USER (79) | POWER CONSUMPTION AMOUNT (MONTH) (80) |
|---|---|---|---|---|---|---|---|---|---|
| 0001 | ○○ | TOKYO METROPOLIS ○○ | 49 | MALE | ABSENCE | 0002 | △△ | △@··· | 200kWh |
|  |  |  |  |  |  | 0003 | □□ | □@··· |  |
|  |  |  |  |  |  | 0004 | ×× | ×@··· |  |
| 0002 | △△ | KANAGAWA PREFECTURE ○○ | 19 | FEMALE | ABSENCE | 0001 | ○○ | ○@··· | 150kWh |
|  |  |  |  |  |  |  |  |  |  |

# FIG. 6

| SENSOR | SERVER APPARATUS | MOBILE TERMINAL |
|---|---|---|

**SENSOR**

( EVACUATION ROUTE OUTPUT PROCESSING )

↓ ～S1

DETECT DISASTER

↓ ～S2

TRANSMIT DISASTER INFORMATION

**SERVER APPARATUS**

～S3
RECEIVE DISASTER INFORMATION

↓ ～S4

STORE DISASTER INFORMATION

↓ ～S5

SPECIFY TRANSMISSION DESTINATION

↓ ～S6

GENERATE DISASTER NOTIFICATION

↓ ～S7

TRANSMIT DISASTER NOTIFICATION INFORMATION

**MOBILE TERMINAL**

～S8
RECEIVE DISASTER NOTIFICATION INFORMATION

↓ ～S9

OUTPUT DISASTER NOTIFICATION

↓ ～S10

EXECUTE DISTANCE CALCULATION PROCESSING

↓ ～S11

EXECUTE POSITION SPECIFYING PROCESSING

↓ ～S12

TRANSMIT POSITIONAL INFORMATION

～S13
RECEIVE POSITIONAL INFORMATION

↓ ～S14

SPECIFY EVACUATION LOCATION AND EVACUATION ROUTE

↓ ～S15

TRANSMIT EVACUATION LOCATION AND EVACUATION ROUTE INFORMATION

～S16
TRANSMIT EVACUATION LOCATION AND EVACUATION ROUTE INFORMATION

↓ ～S17

DISPLAY MAP

↓

( END )

*FIG. 7*

90

| EVACUATION LOCATION | TYPE OF DISASTER | ADDRESS | LONGITUDE | LATITUDE |
|---|---|---|---|---|
| OO ELEMENTARY SCHOOL | EARTHQUAKE, FLOOD | OO, CHIYODA WARD, TOKYO METROPOLIS | 35.693OO | 139.776OOO |

91  92  93  94  95

EP 4 692 836 A1

FIG. 8

60

# FIG. 9

| WIRELESS DEVICE | MOBILE TERMINAL |
|---|---|

DISTANCE CALCULATION PROCESSING

S21 — TRANSMIT SIGNAL OR THE LIKE → S24 — RECEIVE SIGNAL OR THE LIKE

S22 — MEASURE TIME AND PHASE → S25 — MEASURE TIME AND PHASE

S23 — STORE TIME AND PHASE → S26 — STORE TIME AND PHASE

S30 — RECEIVE SIGNAL OR THE LIKE ← S27 — TRANSMIT SIGNAL OR THE LIKE

S31 — MEASURE TIME AND PHASE → S28 — MEASURE TIME AND PHASE

S32 — STORE TIME AND PHASE → S29 — STORE TIME AND PHASE

S33 — TRANSMIT STORED INFORMATION → S34 — RECEIVE INFORMATION

S35 — CALCULATE PHASE DEVIATION

S36 — CORRECT PHASE

S37 — CALCULATE TIME DEVIATION

S38 — CORRECT TIME

S39 — CALCULATE DISTANCE

S40 — STORE DISTANCE

END

## FIG. 10

MOBILE TERMINAL

POSITION SPECIFYING
PROCESSING

SPECIFY POSITION
OF MOBILE TERMINAL — S51

STORE POSITION
OF MOBILE TERMINAL — S52

END

## FIG. 11

SERVER APPARATUS        SECOND USER TERMINAL

EVACUATION INFORMATION
SHARING PROCESSING

S61

SPECIFY USER ID OF SECOND USER

S62                           S63

TRANSMIT INFORMATION
OR THE LIKE REGARDING POSITION
OF USER AND EVACUATION LOCATION → RECEIVE INFORMATION
OR THE LIKE REGARDING POSITION
OF USER AND EVACUATION LOCATION

S64

DISPLAY MAP

END

## FIG. 12

# FIG. 13

MOBILE TERMINAL | SERVER APPARATUS

**WORK HOURS CALCULATION PROCESSING**

START APPLICATION — S71

EXECUTE DISTANCE CALCULATION PROCESSING — S72

SPECIFY POSITION — S73

TRANSMIT SPECIFIED POSITION, TIME, AND WORKER ID — S74

RECEIVE SPECIFIED POSITION, TIME, AND WORKER ID — S75

STORE IN POSITION MANAGEMENT TABLE — S76

DID WORKER MOVE FROM OUTSIDE OF WORK AREA TO INSIDE OF WORK AREA? — S77 → NO

YES

STORE WORK START TIME — S78

EXECUTE DISTANCE CALCULATION PROCESSING — S79

SPECIFY POSITION — S80

TRANSMIT SPECIFIED POSITION, TIME, AND WORKER ID — S81

RECEIVE SPECIFIED POSITION, TIME, AND WORKER ID — S82

STORE IN POSITION MANAGEMENT TABLE — S83

DID WORKER MOVE FROM INSIDE OF WORK AREA TO OUTSIDE OF WORK AREA? — S84 → NO

YES

STORE WORK END TIME — S85

CALCULATE WORK HOURS — S86

STORE WORK HOURS — S87

END

## FIG. 14

500

| WORKER ID | TIME | | POSITIONAL INFORMATION |
|---|---|---|---|
| | 510 | 520 | 530 |
| 0001 | 2023/3/1 | 8 : 49 : 00 | (X1、 Y1、 Z1) |
| | 2023/3/1 | 8 : 49 : 30 | (X2、 Y2、 Z2) |
| | 2023/3/1 | 8 : 50 : 00 | (X3、 Y3、 Z3) |
| | 2023/3/1 | 8 : 50 : 30 | (X4、 Y4、 Z4) |
| | ⋮ | | ⋮ |

## FIG. 15

600

| WORKER ID | WORK DAY | WORK AREA ID | WORK CONTENT | WORK START TIME | WORK END TIME | WORK HOURS |
|---|---|---|---|---|---|---|
| 610 | 620 | 630 | 640 | 650 | 660 | 670 |
| 0001 | 2023/3/1 | A01 | COMPONENT ASSEMBLY | 8 : 50 | 17 : 05 | 7 : 15 |
| | 2023/3/2 | A01 | CLEANING | 9 : 55 | 10 : 45 | 5 : 00 |
| | | B02 | MEAL SERVING | 11 : 00 | 13 : 40 | |
| | | C01 | CLEANING | 14 : 50 | 16 : 20 | |

# FIG. 16

MOBILE TERMINAL | SERVER APPARATUS

TASK DURATION CALCULATION PROCESSING — S91

START APPLICATION

UNTIL ALL TASKS END

EXECUTE DISTANCE CALCULATION PROCESSING — S92

SPECIFY POSITION — S93

TRANSMIT SPECIFIED POSITION, TIME, AND WORKER ID — S94

RECEIVE SPECIFIED POSITION, TIME, AND WORKER ID — S95

STORE IN POSITION MANAGEMENT TABLE — S96

SPECIFY TASK AREA — S97

DID WORKER MOVE FROM OUTSIDE OF TASK AREA TO INSIDE OF TASK AREA? — S98 — NO

YES — STORE TASK START TIME — S99

EXECUTE DISTANCE CALCULATION PROCESSING — S100

SPECIFY POSITION — S101

TRANSMIT SPECIFIED POSITION, TIME, AND WORKER ID — S102

RECEIVE SPECIFIED POSITION, TIME, AND WORKER ID — S103

STORE IN POSITION MANAGEMENT TABLE — S104

DID WORKER MOVE FROM INSIDE OF TASK AREA TO OUTSIDE OF TASK AREA? — S105 — NO

YES — STORE TASK END TIME — S106

CALCULATE TASK DURATION — S107

STORE TASK DURATION — S108

END

## FIG. 17A

700

| WORKER ID | WORK DAY | TASK AREA ID | TASK CONTENT | TASK START TIME | TASK END TIME | TASK DURATION |
|---|---|---|---|---|---|---|
| 0001 | 2023/3/2 | A01 | CLEANING | 10 : 00 | 10 : 45 | 0 : 45 |
| | | B02 | MEAL SERVING | 11 : 00 | 13 : 30 | 2 : 30 |
| | | C01 | CLEANING | 15 : 00 | 16 : 00 | 1 : 00 |

710 720 730 740 750 760 770

## FIG. 17B

800

| WORKER ID | WORK DAY | TASK AREA ID | TASK CONTENT | TASK START TIME | TASK END TIME | TASK DURATION |
|---|---|---|---|---|---|---|
| 0001 | 2023/3/2 | A01 | CLEANING | 9 : 55 | 10 : 45 | 0 : 50 |
| | | B02 | MEAL SERVING | 11 : 00 | 13 : 40 | 2 : 40 |
| | | C01 | CLEANING | 14 : 50 | 16 : 20 | 1 : 30 |

810 820 830 840 850 860 870

# FIG. 18

SERVER APPARATUS

MANAGEMENT APPARATUS

TASK DETERMINATION PROCESSING

S111
SPECIFY WORKER ID AND WORK DAY

S112
SPECIFY TASK MANAGEMENT TABLE

S113
IS THERE PREDETERMINED RELATIONSHIP WITH STORED INFORMATION?

NO

S114
TRANSMIT WARNING INFORMATION

S115
TRANSMIT WARNING INFORMATION

S116
OUTPUT WARNING INFORMATION

END

# FIG. 19

FIG. 20

EP 4 692 836 A1

# FIG. 21

ORDER DEVICE | SERVER APPARATUS | MANAGEMENT APPARATUS

**WARNING DISPLAY PROCESSING**

S121
EXECUTE DISTANCE CALCULATION PROCESSING

S122
EXECUTE POSITION SPECIFYING PROCESSING

S123
TRANSMIT TABLE ID CORRESPONDING TO SPECIFIED POSITION INFORMATION

S124
RECEIVE TABLE ID CORRESPONDING TO SPECIFIED POSITION INFORMATION

S125
IS ORDER DEVICE OUT OF PREDETERMINED RANGE?

NO

YES

S126
TRANSMIT TABLE ID CORRESPONDING TO INFORMATION INDICATING POSITION OF ORDER DEVICE IS OUT OF PREDETERMINED RANGE

S127
RECEIVE TABLE ID CORRESPONDING TO INFORMATION INDICATING POSITION OF ORDER DEVICE IS OUT OF PREDETERMINED RANGE

S128
DISPLAY

END

71

# FIG. 22

ORDER DEVICE | SERVER APPARATUS | ORDER-RECEIVING DEVICE

( ORDER PROCESSING )

S131
INPUT ORDER INFORMATION

S132
TRANSMIT TABLE ID CORRESPONDING TO ORDER INFORMATION

S133
RECEIVE TABLE ID CORRESPONDING TO ORDER INFORMATION

S134
STORE TABLE ID CORRESPONDING TO ORDER INFORMATION

S135
TRANSMIT TABLE ID CORRESPONDING TO ORDER INFORMATION

S136
RECEIVE TABLE ID CORRESPONDING TO ORDER INFORMATION

S137
DISPLAY

( END )

72

# FIG. 23

<u>10</u>

# FIG. 24

FIRST USER TERMINAL | SERVER APPARATUS

( POST INPUT SCREEN DISPLAY PROCESSING )

S141
TRANSMIT DISPLAY REQUEST OF POST INPUT SCREEN

S142
RECEIVE DISPLAY REQUEST OF POST INPUT SCREEN

S143
IS POSITION SPECIFIED WITHIN PREDETERMINED PERIOD? — YES / NO

S144
TRANSMIT POSITION SPECIFICATION REQUEST

S145
RECEIVE POSITION SPECIFICATION REQUEST

S146
EXECUTE DISTANCE CALCULATION PROCESSING

S147
SPECIFY POSITION

S148
TRANSMIT INFORMATION REGARDING POSITION

S149
RECEIVE INFORMATION REGARDING POSITION

S150
STORE INFORMATION REGARDING POSITION

S151
TRANSMIT INFORMATION FOR DISPLAYING POST INPUT SCREEN

S152
RECEIVE INFORMATION FOR DISPLAYING POST INPUT SCREEN

S153
DISPLAY POST INPUT SCREEN

( END )

74

# FIG. 25

FIRST USER TERMINAL             WIRELESS DEVICE

DISTANCE CALCULATION PROCESSING

| FIRST USER TERMINAL | WIRELESS DEVICE |
|---|---|
| S201 TRANSMIT SIGNAL OR THE LIKE | S204 RECEIVE SIGNAL OR THE LIKE |
| S202 MEASURE TIME AND PHASE | S205 MEASURE TIME AND PHASE |
| S203 STORE TIME AND PHASE | S206 STORE TIME AND PHASE |
| S210 RECEIVE SIGNAL OR THE LIKE | S207 TRANSMIT SIGNAL OR THE LIKE |
| S211 MEASURE TIME AND PHASE | S208 MEASURE TIME AND PHASE |
| S212 STORE TIME AND PHASE | S209 STORE TIME AND PHASE |
| S214 RECEIVE INFORMATION | S213 TRANSMIT STORED INFORMATION |
| S215 CALCULATE PHASE DEVIATION | |
| S216 CORRECT PHASE | |
| S217 CALCULATE TIME DEVIATION | |
| S218 CORRECT TIME | |
| S219 CALCULATE DISTANCE | |
| S220 STORE DISTANCE | |

END

## FIG. 26

FIRST USER TERMINAL

SERVER APPARATUS

POST STORAGE PROCESSING

S301
RECEIVE INPUT OF MESSAGE

S302
TRANSMIT INFORMATION REGARDING MESSAGE

S303
RECEIVE INFORMATION REGARDING MESSAGE

S304
SPECIFY RELIABILITY SCORE/AUTHENTICITY

S306
RECEIVE INFORMATION REGARDING RELIABILITY SCORE/AUTHENTICITY

S305
TRANSMIT INFORMATION REGARDING RELIABILITY SCORE/AUTHENTICITY

S307
DISPLAY RELIABILITY SCORE/AUTHENTICITY

S308
RECEIVE INPUT REGARDING WHETHER TO DISPLAY RELIABILITY SCORE/ AUTHENTICITY

S309
TRANSMIT POST REQUEST

S310
RECEIVE POST REQUEST

S311
STORE INFORMATION REGARDING MESSAGE

END

# FIG. 27

SECOND USER TERMINAL

SERVER APPARATUS

POST DISPLAY
PROCESSING

TRANSMIT
POST DISPLAY REQUEST — S401

RECEIVE
POST DISPLAY REQUEST — S402

RECEIVE INFORMATION
REGARDING POST CONTENT — S404

TRANSMIT INFORMATION
REGARDING POST CONTENT — S403

DISPLAY POST CONTENT — S405

END

## INTERNATIONAL SEARCH REPORT

| International application No. |
| --- |
| **PCT/JP2024/012521** |

### A. CLASSIFICATION OF SUBJECT MATTER

*G01S 5/14*(2006.01)i; *G01C 21/34*(2006.01)i; *G04G 5/00*(2013.01)i; *G06Q 10/105*(2023.01)i; *G06Q 50/12*(2012.01)i; *G06Q 50/26*(2024.01)i; *G08B 27/00*(2006.01)i; *H04M 11/00*(2006.01)i; *H04M 11/04*(2006.01)i; *H04W 4/02*(2018.01)i; *H04W 64/00*(2009.01)i

FI: G01S5/14; G01C21/34; G04G5/00 J; G06Q10/105; G06Q50/12; G06Q50/26; G08B27/00 A; H04M11/00 301; H04M11/04; H04W4/02; H04W64/00

According to International Patent Classification (IPC) or to both national classification and IPC

### B. FIELDS SEARCHED

Minimum documentation searched (classification system followed by classification symbols)

G01S5/00-5/14, 19/00-19/55

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-186036 A (CASIO COMPUTER CO., LTD.) 28 June 2002 (2002-06-28) paragraphs [0011]-[0054], fig. 1-19 | 1-4, 32-33, 37-38, 40 |
| Y | paragraphs [0011]-[0054], fig. 1-19 | 7, 15, 28-31, 34-35, 39, 41-42 |
| Y | JP 2020-43414 A (DAIHATSU MOTOR CO., LTD.) 19 March 2020 (2020-03-19) paragraphs [0019], [0020], [0023], [0039] | 7, 28-31, 34, 39 |
| Y | JP 2019-23585 A (DAIHEN CORP.) 14 February 2019 (2019-02-14) paragraphs [0026]-[0086], fig. 1-6 | 7, 15, 28-31, 34-35, 39, 41-42 |
| Y | JP 2002-15239 A (SHARP KABUSHIKI KAISHA) 18 January 2002 (2002-01-18) paragraphs [0030]-[0032] | 15, 28-31, 35, 41-42 |

✓ Further documents are listed in the continuation of Box C.    ✓ See patent family annex.

| | |
| --- | --- |
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **10 June 2024** | **25 June 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

| | International application No. |
|---|---|
| | **PCT/JP2024/012521** |

**C. DOCUMENTS CONSIDERED TO BE RELEVANT**

| Category* | Citation of document, with indication, where appropriate, of the relevant passages | Relevant to claim No. |
|---|---|---|
| Y | JP 2010-19597 A (FUJITSU LIMITED) 28 January 2010 (2010-01-28)<br>paragraph [0002] | 29-31 |
| Y | JP 2017-129458 A (NIPPON TELEGRAPH AND TELEPHONE CORPORATION) 27 July 2017 (2017-07-27)<br>paragraph [0051] | 30-31 |
| Y | JP 2011-96114 A (BROTHER KOGYO KABUSHIKI KAISHA) 12 May 2011 (2011-05-12)<br>paragraphs [0075]-[0084] | 31 |

Form PCT/ISA/210 (second sheet) (July 2022)

**INTERNATIONAL SEARCH REPORT**

International application No.

**PCT/JP2024/012521**

**Box No. III     Observations where unity of invention is lacking (Continuation of item 3 of first sheet)**

This International Searching Authority found multiple inventions in this international application, as follows:

As indicated below, the number of inventions recited in the claims of the international application is five. It is found that this international application does not meet the requirement of unity of invention (Rule 13 of the Regulations under the treaty (PCT Rule 13.1, 13.2, and 13.3)).

(Invention 1) Claims 1-4, 7, 15, 28-35, and 37-42
Document 1 (see paragraphs [0011]-[0054], fig. 1-19, etc.) describe the following invention.

"A system provided with a center device 1 (at least one computer device), the system including a locating means for calculating (determining) current location information on a terminal of interest (terminal carried or operated by a user) on the basis of the distance between the terminal of interest and each of wireless communication base stations 2 (wireless device)" (in particular, paragraphs [0025]-[0027] and fig. 8) (corresponding to the invention of claim 1), wherein "the terminal of interest is a mobile terminal carried by a first user, and the system includes a place-of-evacuation determination means for determining a nearest place of evacuation (place of evacuation that satisfies a predetermined condition) on the basis of the determined location of the mobile terminal" (in particular, paragraphs [0041], [0045], and [0046], and fig. 13-15) (corresponding to the invention of claim 2), "includes an output means for performing control such that information about the determined place of evacuation and evacuation guidance information (route to the place of evacuation) can be outputted in the mobile terminal" (in particular, paragraph [0047] and fig. 17) (corresponding to the invention of claim 3), and "includes a second output means for, when "a family registration" corresponding to the user terminal is present in a user registration information database 12 (different second users are associated with the respective first users), and when any of the family terminals is located in a disaster area, transmitting and reporting disaster information together with the current location information of said family terminal to the terminal of interest (performing control such that information on the location of the mobile terminal carried by the first user can be outputted in a second user terminal operated by the second user)" (in particular, paragraph [0050] and fig. 16) (corresponding to the invention of claim 4).

In view of this, claims 1-4 lack novelty in light of document 1, and thus do not have a special technical feature.
Meanwhile, claims 5-42 do not cite claim 4.
Accordingly, the invention of claims 1-4, which has already been determined as to whether the invention has a special technical feature, and claims 7, 15, 28-35, and 37-42, which have special technical features that are the same as or corresponding to the special technical feature, are classified as invention 1.

(Invention 2) Claims 5-6
Claims 5-6 cannot be said to have the same or corresponding technical features between these claims and claims 1-4, 7, 15, 28-35, and 37-42 classified as invention 1.
In addition, although claims 5-6 depend from claim 1 classified as invention 1, the specific problem to be solved by the invention as found from the added technical feature relative to claim 1, i.e., "providing a system for determining a place of evacuation" (paragraph [0010]), has low relevance to the problem to be solved by claim 1, i.e., "determining the location of a terminal carried or operated by a user" (paragraph [0010]). Thus, it is not found that claims 5-6 have an inventive link to claim 1.
Furthermore, claims 5-6 are not substantially identical to or similarly closely related to any of the claims classified as invention 1.
Accordingly claims 5-6 cannot be identified as invention 1.
Meanwhile, claims 5-6 have a special technical feature relating to "determining a place of evacuation", and thus are classified as invention 2.

(Invention 3) Claims 8-14
Claims 8-14 cannot be said to have the same or corresponding technical features between these claims and claims 1-4, 7, 15, 28-35, and 37-42 classified as invention 1 or claims 5-6 classified as invention 2.
In addition, although claims 8-14 depend from claim 1 classified as invention 1, the specific problem to be solved by the invention as found from the added technical feature relative to claim 1, i.e., "managing an employee" (paragraph [0005]), has low relevance to the problem to be solved by claim 1, i.e., "determining the location of a terminal carried or operated by a user" (paragraph [0010]). Thus, it is not found that claims 8-14 have an inventive link to claim 1.
Furthermore, claims 8-14 are not substantially identical to or similarly closely related to any of the claims classified as invention 1 or 2.

Form PCT/ISA/210 (continuation of first sheet) (July 2022)

**INTERNATIONAL SEARCH REPORT**

International application No.

**PCT/JP2024/012521**

**Box No. III      Observations where unity of invention is lacking (Continuation of item 3 of first sheet)**

Accordingly claims 8-14 cannot be identified as invention 1 or 2.

Meanwhile, claims 8-14 have a special technical feature relating to "managing an employee", and thus are classified as invention 3.

(Invention 4) Claims 16-18

Claims 16-18 cannot be said to have the same or corresponding technical features between these claims and claims 1-4, 7, 15, 28-35, and 37-42 classified as invention 1, claims 5-6 classified as invention 2, or claims 8-14 classified as invention 3.

In addition, although claims 16-18 depend from claim 1 classified as invention 1, the specific problem to be solved by the invention as found from the added technical feature relative to claim 1, i.e., "managing (the location of) an order terminal" (paragraph [0007]), has low relevance to the problem to be solved by claim 1, i.e., "determining the location of a terminal carried or operated by a user" (paragraph [0010]). Thus, it is not found that claims 16-18 have an inventive link to claim 1.

Furthermore, claims 16-18 are not substantially identical to or similarly closely related to any of the claims classified as inventions 1-3.

Accordingly claims 16-18 cannot be identified as any of inventions 1-3.

Meanwhile, claims 16-18 have a special technical feature relating to "managing (the location of) an order terminal", and thus are classified as invention 4.

(Invention 5) Claims 19-27 and 36

Claims 19-27 and 36 cannot be said to have the same or corresponding technical features between these claims and claims 1-4, 7, 15, 28-35, and 37-42 classified as invention 1, claims 5-6 classified as invention 2, claims 8-14 classified as invention 3, or claims 16-18 classified as invention 4.

In addition, although claims 19-27 and 36 depend from claim 1 classified as invention 1, the specific problem to be solved by the invention as found from the added technical feature relative to claim 1, i.e., "providing a system that enables a message about a person of which the location is determined to be posted" (paragraph [0010]), has low relevance to the problem to be solved by claim 1, i.e., "determining the location of a terminal carried or operated by a user" (paragraph [0010]). Thus, it is not found that claims 19-27 and 36 have an inventive link to claim 1.

Furthermore, claims 19-27 and 36 are not substantially identical to or similarly closely related to any of the claims classified as inventions 1-4.

Accordingly claims 19-27 and 36 cannot be identified as any of inventions 1-4.

Meanwhile, claims 19-27 and 36 have a special technical feature relating to "providing a system that enables a message about a person of which the location is determined to be posted", and thus are classified as invention 5.

Form PCT/ISA/210 (continuation of first sheet) (July 2022)

## INTERNATIONAL SEARCH REPORT

| International application No. |
| --- |
| **PCT/JP2024/012521** |

**Box No. III        Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-4, 7, 15, 28-35, and 37-42**

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/012521**

| Patent document cited in search report | | | Publication date (day/month/year) | Patent family member(s) | Publication date (day/month/year) |
|---|---|---|---|---|---|
| JP | 2002-186036 | A | 28 June 2002 | (Family: none) | |
| JP | 2020-43414 | A | 19 March 2020 | (Family: none) | |
| JP | 2019-23585 | A | 14 February 2019 | (Family: none) | |
| JP | 2002-15239 | A | 18 January 2002 | (Family: none) | |
| JP | 2010-19597 | A | 28 January 2010 | (Family: none) | |
| JP | 2017-129458 | A | 27 July 2017 | (Family: none) | |
| JP | 2011-96114 | A | 12 May 2011 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009042828 A

- JP 2012104043 A